(19) Europäisches Patentamt
European Patent Office
Office européen des brevets

(11) EP 3 842 471 A1

(12) EUROPEAN PATENT APPLICATION
published in accordance with Art. 153(4) EPC

(43) Date of publication:
**30.06.2021 Bulletin 2021/26**

(21) Application number: **19853021.4**

(22) Date of filing: **23.08.2019**

(51) Int Cl.:
***C08G 69/26*** *(2006.01)*

(86) International application number:
**PCT/JP2019/033003**

(87) International publication number:
**WO 2020/040282 (27.02.2020 Gazette 2020/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **24.08.2018 JP 2018157347**
**24.08.2018 JP 2018157352**
**26.06.2019 JP 2019119068**

(71) Applicant: **Kuraray Co., Ltd.**
**Kurashiki-shi, Okayama 710-0801 (JP)**

(72) Inventors:
- **SEKIGUCHI, Kenji**
  **Tsukuba-shi**
  **Ibaraki 305-0841 (JP)**
- **NANYA, Atsushi**
  **Tsukuba-shi**
  **Ibaraki 305-0841 (JP)**
- **OYA, Nobuhiro**
  **Tsukuba-shi**
  **Ibaraki 305-0841 (JP)**
- **KANAI, Shimon**
  **Tsukuba-shi**
  **Ibaraki 305-0841 (JP)**
- **SHIGEMATSU, Takaharu**
  **Tsukuba-shi**
  **Ibaraki 305-0841 (JP)**

(74) Representative: **Müller-Boré & Partner**
**Patentanwälte PartG mbB**
**Friedenheimer Brücke 21**
**80639 München (DE)**

# (54) POLYAMIDE AND POLYAMIDE COMPOSITION

(57) The present invention relates to a polyamide that is a polyamide (A) having a dicarboxylic acid unit and a diamine unit, wherein more than 40 mol% and 100 mol% or less of the dicarboxylic acid unit is a naphthalenedicarboxylic acid unit, and 60 mol% or more and 100 mol% or less of the diamine unit is a branched aliphatic diamine unit and a linear aliphatic diamine unit of an arbitrary structural unit, and a proportion of the branched aliphatic diamine unit relative to the total 100 mol% of the branched aliphatic diamine unit and the linear aliphatic diamine unit is 60 mol% or more; and a polyamide composition containing the polyamide.

[Fig. 1]

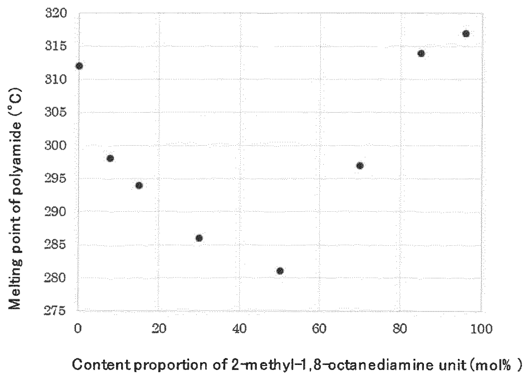


EP 3 842 471 A1

## Description

### Technical Field

The present invention relates to a polyamide and a polyamide composition, etc. In more detail, the present invention relates to a semi-aromatic polyamide having a dicarboxylic acid unit composed mainly of a naphthalenedicarboxylic acid unit and a diamine unit composed mainly of an aliphatic diamine unit and a composition thereof, etc.

### Background Art

Semi-aromatic polyamides using an aromatic dicarboxylic acid, such as terephthalic acid, and an aliphatic diamine, and crystalline polyamides represented by nylon 6, nylon 66, etc. are widely used as fibers for clothes or for industrial materials, general-purpose engineering plastics, etc. because of their excellent characteristics and easiness of melt molding. Meanwhile, as for such crystalline polyamides, there are pointed out problems, such as insufficient heat resistance and defective dimensional stability due to water absorption. In particular, in recent years, resinification of engine room parts is eagerly investigated for the purpose of improvement of fuel efficiency of automobiles, and polyamides which are more excellent in high-temperature strength, heat resistance, dimensional stability, mechanical characteristics, and physicochemical characteristics than the conventional polyamides are demanded.

As the polyamide having excellent heat resistance, for example, PTL 1 discloses a semi-aromatic polyamide obtained from 2,6-naphthalenedicarboxylic acid and a linear aliphatic diamine having 9 to 13 carbon atoms. In PTL 1, it is described that the foregoing semi-aromatic polyamide is also excellent in chemical resistance and mechanical characteristics, etc. in addition to the heat resistance. Meanwhile, in PTL 1, it is described that the use of an aliphatic diamine having a side chain is not preferred due to a lowering of crystallinity of the resulting polyamide, or the like.

PTL 2 discloses a polyamide in which 60 to 100 mol% of a dicarboxylic acid unit is composed of a 2,6-naphthalenedicarboxylic acid unit, 60 to 100 mol% of a diamine unit is composed of a 1,9-nonanediamine unit and a 2-methyl-1,8-octanediamine unit, and a molar ratio of the 1,9-nonanediamine unit to the 2-methyl-1,8-octanediamine unit is 60/40 to 99/1. In PTL 2, it is described that the foregoing polyamide is excellent in mechanical characteristics, resistance to thermal decomposition, low water-absorbing properties, and chemical resistance, etc. in addition to heat resistance.

Furthermore, there are also disclosed resin compositions containing a semi-aromatic polyamide, applications of a semi-aromatic polyamide, and so on (for example, see PTLs 3 to 7).

### Citation List

### Patent Literature

PTL 1:JP 50-67393 A
PTL 2: JP 9-12715 A
PTL 3: WO 2012/098840 A
PTL 4: WO 2005/102681 A
PTL 5: JP 7-228771 A
PTL 6: JP 2006-152256 A
PTL 7: JP 2014-111761 A


### Summary of Invention

### Technical Problem

As mentioned above, the conventional polyamides of PTLs 1 and 2 and so on have physical properties, such as heat resistance, mechanical characteristics, low water-absorbing properties, and chemical resistance; however, more improvements of these physical properties are demanded.

In PTL 2, it is described that 1,9-nonanediamine and 2-methyl-1,8-octanediamine are used in combination as the aliphatic diamine; however, a polyamide in a region where the ratio of 2-methyl-1,8-octanediamine having a side chain is high is not mentioned at all.

Then, a problem of the present invention is to provide a polyamide and a polyamide composition, each of which is more excellent in various physical properties including chemical resistance, and a molded article made of the same.

Solution to Problem

The present inventors made extensive and intensive investigations. As a result, they have found that the aforementioned problem can be solved by a specified polyamide having a dicarboxylic acid unit composed mainly of a naphthalenedicarboxylic acid unit and a diamine unit composed mainly of a branched aliphatic diamine unit and further made investigations on the basis of the foregoing findings, thereby leading to accomplishment of the present invention.
Specifically, the present invention is as follows.

[1] A polyamide that is a polyamide (A) having a dicarboxylic acid unit and a diamine unit, wherein more than 40 mol% and 100 mol% or less of the dicarboxylic acid unit is a naphthalenedicarboxylic acid unit; and 60 mol% or more and 100 mol% or less of the diamine unit is a branched aliphatic diamine unit and a linear aliphatic diamine unit of an arbitrary structural unit, and a proportion of the branched aliphatic diamine unit relative to the total 100 mol% of the branched aliphatic diamine unit and the linear aliphatic diamine unit is 60 mol% or more.
[2] A polyamide composition containing the polyamide (A).
[3] The polyamide composition, further containing a polyolefin (B1).
[4] The polyamide composition, further containing an organic heat stabilizer (B2).
[5] The polyamide composition, further containing a copper compound (B3) and a metal halide compound (B4).
[6] The polyamide composition, further containing a halogen-based flame retardant (B5).
[7] The polyamide composition, further containing a halogen-free flame retardant (B6).
[8] A molded article made of the polyamide (A) or the polyamide composition.

Advantageous Effects of Invention

In accordance with the present invention, it is possible to provide a polyamide and a polyamide composition, each of which is more excellent in various physical properties including chemical resistance, and a molded article made of the same.
For example, the polyamide composition containing the polyamide (A) and the polyolefin (B1) is more excellent in impact resistance, heat resistance, and chemical resistance, etc.
In addition, the polyamide composition containing the polyamide (A) and the organic heat stabilizer (B2) is more excellent in high-temperature heat resistance and chemical resistance, etc.
In addition, the polyamide composition containing the polyamide (A), the copper compound (B3), and the metal halide compound (B4) is more excellent in high-temperature heat resistance and chemical resistance, etc.
In addition, the polyamide composition containing the polyamide (A) and the halogen-based flame retarder (B5) is more excellent in various physical properties and excellent in flame retardance.
In addition, the polyamide composition containing the polyamide (A) and the halogen-free flame retarder (B6) is more excellent in various physical properties, excellent in flame retardance, and small in environmental load.

Brief Description of Drawing

Fig. 1 is a graph in which with respect to a polyamide in which the dicarboxylic acid unit is a 2,6-naphthalenedicarboxylic acid unit, and the diamine unit is a 1,9-nonanediamine unit and/or a 2-methyl-1,8-octanediamine unit, a melting point (°C) of the polyamide is plotted versus a content proportion (mol%) of the 2-methyl-1,8-octanediamine unit in the diamine unit.

Description of Embodiments

The present invention is hereunder described in detail. In this specification, a prescription that is considered to be preferred may be arbitrarily adopted, and it may be said that a combination of preferred prescriptions is more preferred. In this specification, the term "XX to YY" as referred to herein means "XX or more and YY or less".

«Polyamide (A)»

The polyamide (A) has a dicarboxylic acid unit and a diamine unit. More than 40 mol% and 100 mol% or less of the dicarboxylic acid unit is a naphthalenedicarboxylic acid unit. In addition, 60 mol% or more and 100 mol% or less of the diamine unit is a branched aliphatic diamine unit and a linear aliphatic diamine unit of an arbitrary structural unit, and a proportion of the branched aliphatic diamine unit relative to the total 100 mol% of the branched aliphatic diamine unit and the linear aliphatic diamine unit is 60 mol% or more.
In this specification, the term "··· unit" (here, "···" expresses a monomer) means a "structural unit derived from

···", and for example, the "dicarboxylic acid unit" means the "structural unit derived from the dicarboxylic acid", and the "diamine unit" means the "structural unit derived from the diamine".

As mentioned above, in view of the fact that the polyamide (A) has the dicarboxylic acid unit composed mainly of a naphthalenedicarboxylic acid unit and the diamine unit composed mainly of a branched aliphatic diamine unit, it is more excellent in various physical properties including chemical resistance. In addition, the composition containing the foregoing polyamide (A) also has the aforementioned excellent properties. Furthermore, various molded articles obtained from the foregoing polyamide (A) or the foregoing polyamide composition are able to hold the excellent properties of the foregoing polyamide (A) or the foregoing polyamide composition.

In general, physical properties which a polyamide is able to have, such as high-temperature strength, mechanical characteristics, heat resistance, low water-absorbing properties, and chemical resistance, tend to become excellent as the crystallinity of the polyamide becomes high. In addition, among polyamides having a similar primary structure, as the crystallinity of the polyamide becomes high, a melting point of the polyamide also tends to become high. Here, with respect to the melting point of the polyamide, for example, when a polyamide in which the diamine unit is a 1,9-nonanediamine unit and/or a 2-methyl-1,8-octanediamine unit, and the dicarboxylic acid unit is a terephthalic acid unit is made by reference, in a graph representing a relation between a melting point (ordinate axis) of the polyamide and a composition of the diamine unit (content proportion of the 1,9-nonanediamine unit and the 2-methyl-1,8-octanediamine unit) (abscissa axis), a minimum portion is expressed. In the case of comparing melting points of both ends on the abscissa axis of the graph, namely a melting point A1 when the 1,9-nonanediamine unit of a linear structure is 100 mol% and a melting point B1 when the 2-methyl-1,8-octanediamine unit of a branched structure is 100 mol%, the melting point A1 is typically higher than the melting point B1 relying on the molecular structure of the diamine unit.

In contrast, in the case of a polyamide in which the diamine unit is a 1,9-nonanediamine unit and/or a 2-methyl-1,8-octanediamine unit, and the dicarboxylic acid unit is a 2,6-naphthalenedicarboxylic acid unit, in a graph having the same ordinate axis and abscissa axis as those mentioned above, a minimum portion is expressed, whereas in the case of comparing a melting point A2 when the 1,9-nonanediamine unit of the linear structure is 100 mol% and a melting point B2 when the 2-methyl-1,8-octanediamine unit of the branched structure is 100 mol%, it has been surprisingly noted that the melting point B2 becomes higher than the melting point A2.

Specifically, with respect to the polyamide in which the dicarboxylic acid unit is a 2,6-naphthalenedicarboxylic acid unit, and the diamine unit is a 1,9-nonanediamine unit and/or a 2-methyl-1,8-octanediamine unit, a graph in which a melting point (°C) of the polyamide is plotted versus a content proportion (mol%) of the 2-methyl-1,8-octanediamine unit in the diamine unit is shown in Fig. 1.

According to Fig. 1, it is noted that relative to the melting point of a polyamide in which the 2-methyl-1,8-octanediamine unit is 0 mol% (namely, the 1,9-nonanediamine unit is 100 mol%), the melting point of the polyamide is lowered with an increase of the content proportion of the 2-methyl-1,8-octanediamine unit. On the other hand, it is noted that from the vicinity where the content proportion of the 2-methyl-1,8-octanediamine unit exceeds 50 mol%, as the foregoing content proportion increases, the melting point of the polyamide greatly rises. In comparing the melting points near the both ends on the abscissa axis of Fig. 1, it is noted that the melting point when the content proportion of the 2-methyl-1,8-octanediamine unit of the branched structure is in the vicinity of 100 mol% is higher than the melting point when the content proportion of the 1,9-nonanediamine unit of the linear structure is 100 mol%. With respect to other portions than the vicinities of the both ends on the abscissa axis, in comparing melting points in left and right regions on the border of the vicinity where the content proportion of the 2-methyl-1,8-octanediamine unit is 50 mol%, it is noted that in the right-side region where the content proportion of the 2-methyl-1,8-octanediamine unit is high, the melting point tends to become higher than that in the left-side region where the content proportion of the 1,9-nonanediamine unit is high.

As mentioned above, it has been noted that as for the polyamide having the diamine unit composed mainly of a 1,9-nonanediamine unit and/or a 2-methyl-1,8-octanediamine unit, revelation of its physical properties varies with the dicarboxylic acid unit to be combined. The present inventors further made investigations. As a result, it has been found that in the case where the content proportion of the branched aliphatic diamine unit is higher than that of the linear aliphatic diamine unit, by adopting the naphthalenedicarboxylic acid unit as the dicarboxylic acid unit, various physical properties including chemical resistance are more improved. Although the reason for this is not always elucidated yet, it may be conjectured that in the polyamide, the appropriate existence ratio of the branched structure in the diamine unit and the existence of a naphthalene structure in the dicarboxylic acid unit are mutually related to the properties.

(Dicarboxylic Acid Unit)

More than 40 mol% and 100 mol% or less of the dicarboxylic acid unit is the naphthalenedicarboxylic acid unit. When the content of the naphthalenedicarboxylic acid unit in the dicarboxylic acid unit is 40 mol% or less, it becomes difficult to reveal effects for improving various physical properties including chemical resistance in the polyamide (A) and the polyamide composition.

From the viewpoint of mechanical characteristics, heat resistance, and chemical resistance, etc., the content

of the naphthalenedicarboxylic acid unit in the dicarboxylic acid unit is preferably 50 mol% or more, more preferably 60 mol% or more, still more preferably 70 mol% or more, yet still more preferably 80 mol% or more, even yet still more preferably 90 mol% or more, and especially preferably 100 mol%.

Examples of the naphthalenedicarboxylic acid unit include structural units derived from naphthalenedicarboxylic acids, such as 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, and 2,7-naphthalenedicarboxylic acid. These structural units may be contained alone or may be contained in combination of two or more thereof. Of the aforementioned naphthalenedicarboxylic acids, from the viewpoint of revelation of various physical properties including chemical resistance and reactivity with the diamine, etc., 2,6-naphthalenedicarboxylic acid is preferred.

From the same viewpoint as that mentioned above, the content of the structural unit derived from 2,6-naphthalenedicarboxylic acid in the naphthalenedicarboxylic acid unit is preferably 90 mol% or more, and more preferably 95 mol% or more, and it is preferably close to 100 mol% as far as possible (substantially 100 mol%).

The dicarboxylic acid unit can contain a structural unit derived from other dicarboxylic acid than the naphthalenedicarboxylic acid within a range where the effects of the present invention are not impaired.

Examples of the other dicarboxylic acid include aliphatic dicarboxylic acids, such as oxalic acid, malonic acid, succinic acid, glutaric acid, adipic acid, pimelic acid, suberic acid, azelaic acid, sebacic acid, undecanedicarboxylic acid, dodecanedicarboxylic acid, dimethylmalonic acid, 2,2-diethylsuccinic acid, 2,2-dimethylglutaric acid, 2-methyladipic acid, and trimethyladipic acid; alicyclic dicarboxylic acids, such as 1,3-cyclopentanedicarboxylic acid, 1,3-cyclohexanedicarboxylic acid, 1,4-cyclohexanedicarboxylic acid, cycloheptanedicarboxylic acid, cyclooctanedicarboxylic acid, and cyclodecanedicarboxylic acid; and aromatic dicarboxylic acids, such as terephthalic acid, isophthalic acid, diphenic acid, 4,4'-biphenyldicarboxylic acid, diphenylmethane-4,4'-dicarboxylic acid, and diphenylsulfone-4,4'-dicarboxylic acid. The structural unit derived from such other dicarboxylic acid may be contained alone or may be contained in combination of two or more thereof.

The content of the structural unit derived from the aforementioned other dicarboxylic acid in the dicarboxylic acid unit is preferably 50 mol% or less, more preferably 40 mol% or less, still more preferably 30 mol% or less, yet still more preferably 20 mol% or less, and even yet still more preferably 10 mol% or less.

(Diamine Unit)

60 mol% or more and 100 mol% or less of the diamine unit is the branched aliphatic diamine unit and the linear aliphatic diamine unit of an arbitrary structural unit. That is, the diamine unit contains the branched aliphatic diamine unit and does not contain the linear aliphatic diamine unit; alternatively, the diamine unit contains both the branched aliphatic diamine unit and the linear aliphatic diamine unit, with a total content of the branched aliphatic diamine unit and the linear aliphatic diamine unit of an arbitrary structural unit in the diamine unit being 60 mol% or more and 100 mol% or less. When the total content of the branched aliphatic diamine unit and the linear aliphatic diamine unit in the diamine unit is less than 60 mol%, it becomes difficult to reveal the effect for improving various physical properties including chemical resistance in the polyamide (A) and the polyamide composition.

From the viewpoint of chemical resistance, mechanical characteristics, and heat resistance, etc., the total content of the branched aliphatic diamine unit and the linear aliphatic diamine unit in the diamine unit is preferably 70 mol% or more, more preferably 80 mol% or more, still more preferably 90 mol% or more, and especially preferably 100 mol%.

In this specification, the branched aliphatic diamine means an aliphatic diamine having a structure in which on the supposition of a linear aliphatic chain in which carbon atoms to which two amino groups to be contained are bound, respectively are the carbon atoms on the both ends, at least one hydrogen atom of the linear aliphatic chain (supposed aliphatic chain) is substituted with a branched chain. That is, for example, 1,2-propanediamine ($H_2N-CH(CH_3)-CH_2-NH_2$) is classified into the branched aliphatic diamine in this specification because it has a structure in which one of hydrogen atoms of the 1,2-ethylene group as the supposed aliphatic chain is substituted with a methyl group as the branched chain.

In the diamine unit, a proportion of the branched aliphatic diamine unit relative to the total 100 mol% of the branched aliphatic diamine unit and the linear aliphatic diamine unit is 60 mol% or more. When the proportion of the branched aliphatic diamine unit is less than 60 mol%, it becomes difficult to reveal the effect for improving various physical properties including chemical resistance of the polyamide (A) and the polyamide composition.

From the viewpoint of making it easy to improve various physical properties including chemical resistance and improving moldability of the polyamide (A) or the polyamide composition, etc., the proportion of the branched aliphatic diamine unit relative to the total 100 mol% of the branched aliphatic diamine unit and the linear aliphatic diamine unit is preferably 65 mol% or more, more preferably 70 mol% or more, still more preferably 72 mol% or more, yet still more preferably 77 mol% or more, and even yet still more preferably 80 mol% or more, and it may also be 90 mol% or more. Although the foregoing proportion may be 100 mol%, when moldability and availability of the diamine, etc. are taken into

consideration, it is preferably 99 mol% or less, and it may also be 98 mol% or less, and further 95 mol% or less.

The carbon number of the branched aliphatic diamine unit is preferably 4 or more, more preferably 6 or more, and still more preferably 8 or more, and it is preferably 18 or less, and more preferably 12 or less. So long as the carbon number of the branched aliphatic diamine unit falls within the aforementioned range, the polymerization reaction between the dicarboxylic acid and the diamine proceeds favorably, the crystallinity of the polyamide (A) becomes favorable, and the physical properties of the polyamide (A) and the polyamide composition are more readily improved. As one example of preferred embodiments of the carbon number of the branched aliphatic diamine unit, the carbon number may be 4 or more and 18 or less, may be 4 or more and 12 or less, may be 6 or more and 18 or less, may be 6 or more and 12 or less, may be 8 or more and 18 or less, or may be 8 or more and 12 or less.

The kind of the branched chain in the branched aliphatic diamine unit is not particularly restricted, and for example, it can be made an aliphatic group of every kind, such as a methyl group, an ethyl group, and a propyl group. However, the branched aliphatic diamine unit is preferably a structural unit derived from a diamine having at least one selected from the group consisting of a methyl group and an ethyl group as the branched chain. When the diamine having at least one selected from the group consisting of a methyl group and an ethyl group as the branched group is used, the polymerization reaction between the dicarboxylic acid and the diamine proceeds favorably, and the chemical resistance of the polyamide (A) and the polyamide composition is more readily improved. From the foregoing viewpoint, the branched chain is more preferably a methyl group.

Although the number of branched chains which the branched aliphatic diamine forming the branched aliphatic diamine unit has is not particularly restricted, it is preferably 3 or less, more preferably 2 or less, and still more preferably 1 because, for example, the effects of the present invention are more remarkably brought.

As for the branched aliphatic diamine unit, when the carbon atom to which arbitrary one of the amino groups is bound is designated as the 1-position, it is preferably a structural unit derived from a diamine having at least one of the branched chains on at least one of the carbon atom at the 2-position adjacent thereto (carbon atom on the aforementioned supposed aliphatic chain) and the carbon atom at the 3-position adjacent to the carbon atom at the 2-position (carbon atom on the aforementioned supposed aliphatic chain), and more preferably a structural unit derived from a diamine having at least one of the branched chains on the aforementioned carbon atom at the 2-position. According to this, the chemical resistance of the polyamide (A) and the polyamide composition is more readily improved.

Examples of the branched aliphatic diamine unit include structural units derived from branched aliphatic diamines, such as 1,2-propanediamine, 1-butyl-1,2-ethanediamine, 1,1-dimethyl-1,4-butanediamine, 1-ethyl-1,4-butanediamine, 1,2-dimethyl-1,4-butanediamine, 1,3-dimethyl-1,4-butanediamine, 1,4-dimethyl-1,4-butanediamine, 2-methyl-1,3-propanediamine, 2-methyl-1,4-butanediamine, 2,3-dimethyl-1,4-butanediamine, 2-methyl-1,5-pentanediamine, 3-methyl-1,5-pentanediamine, 2,5-dimethyl-1,6-hexanediamine, 2,4-dimethyl-1,6-hexanediamine, 3,3-dimethyl-1,6-hexanediamine, 2,2-dimethyl-1,6-hexanediamine, 2,4-diethyl-1,6-hexanediamine, 2,2,4-trimethyl-1,6-hexanediamine, 2,4,4-trimethyl-1,6-hexanediamine, 2-ethyl-1,7-heptanediamine, 2-methyl-1,8-octanediamine, 3-methyl-1,8-octanediamine, 1,3-dimethyl-1,8-octanediamine, 1,4-dimethyl-1,8-octanediamine, 2,4-dimethyl-1,8-octanediamine, 3,4-dimethyl-1,8-octanediamine, 4,5-dimethyl-1,8-octanediamine, 2,2-dimethyl-1,8-octanediamine, 3,3-dimethyl-1,8-octanediamine, 4,4-dimethyl-1,8-octanediamine, 2-methyl-1,9-nonanediamine, and 5-methyl-1,9-nonanediamine. These structural units may be contained alone or may be contained in combination of two or more thereof.

Among the aforementioned branched aliphatic diamine units, from the viewpoint that the effects of the present invention are more remarkably brought, and availability of the raw materials are excellent, etc., a structural unit derived from at least one diamine selected from the group consisting of 2-methyl-1,5-pentanediamine, 3-methyl-1,5-pentanediamine, 2-methyl-1,8-octanediamine, and 2-methyl-1,9-nonanediamine is preferred, and a structural unit derived from 2-methyl-1,8-octanediamine is more preferred.

The carbon number of the linear aliphatic diamine unit is preferably 4 or more, more preferably 6 or more, and still more preferably 8 or more, and it is preferably 18 or less, and more preferably 12 or less. So long as the carbon number of the linear aliphatic diamine unit falls within the aforementioned range, the polymerization reaction between the dicarboxylic acid and the diamine proceeds favorably, the crystallinity of the polyamide (A) becomes favorable, and the physical properties of the polyamide (A) and the polyamide composition are more readily improved. As one example of preferred embodiments of the carbon number of the linear aliphatic diamine unit, the carbon number may be 4 or more and 18 or less, may be 4 or more and 12 or less, may be 6 or more and 18 or less, may be 6 or more and 12 or less, may be 8 or more and 18 or less, or may be 8 or more and 12 or less.

Although the carbon numbers of the linear aliphatic diamine unit and the branched aliphatic diamine unit may be the same as or different from each other, they are preferably the same as each other because the effects of the present invention are more remarkably brought.

Examples of the linear aliphatic diamine unit include structural units derived from linear aliphatic diamines, such as ethylenediamine, 1,3-propanediamine, 1,4-butanediamine, 1,5-pentanediamine, 1,6-hexanediamine, 1,7-heptanediamine, 1,8-octanediamine, 1,9-nonanediamine, 1,10-decanediamine, 1,11-undecanediamine, 1,12-dodecanediamine, 1,13-tridecanediamine, 1,14-tetradecanediamine, 1,15-pentadecanediamine, 1,16-hexadecanediamine, 1,17-heptadecanediamine, and 1,18-octadecanediamine. These structural units may be contained alone or may be contained in combination of two or more thereof.

Among the aforementioned linear aliphatic diamine units, from the viewpoint that the effects of the present invention are more remarkably brought, and in particular, the heat resistance of the resulting polyamide (A) and polyamide composition is improved, etc., a structural unit derived from at least one diamine selected from the group consisting of 1,4-butanediamine, 1,5-pentanediamine, 1,6-hexanediamine, 1,7-heptanediamine, 1,8-octanediamine, 1,9-nonanediamine, 1,10-decanediamine, 1,11-undecanediamine, and 1,12-dodecanediamine is preferred, and a structural unit derived from 1,9-nonanediamine is more preferred.

The diamine unit can contain a structural unit derived from other diamine than the branched aliphatic diamine and the linear aliphatic diamine within a range where the effects of the present invention are not impaired. Examples of the other diamine include an alicyclic diamine and an aromatic diamine.

Examples of the alicyclic diamine include cyclohexanediamine, methylcyclohexanediamine, isophoronediamine, norbornane dimethylamine, and tricyclodecane dimethyldiamine.

Examples of the aromatic diamine include p-phenylenediamine, m-phenylenediamine, p-xylylenediamine, m-xylylenediamine, 4,4'-diaminodiphenylmethane, 4,4'-diaminodiphenylsulfone, and 4,4'-diaminodiphenyl ether.

These structural units derived from the other diamine may be contained alone or may be contained in combination of two or more thereof.

The content of the structural unit derived from the aforementioned other diamine in the diamine unit is preferably 30 mol% or less, more preferably 20 mol% or less, and still more preferably 10 mol% or less.

(Dicarboxylic Acid Unit and Diamine Unit)

A molar ratio [(dicarboxylic acid unit)/(diamine unit)] of the dicarboxylic acid unit to the diamine unit in the polyamide (A) is preferably 45/55 to 55/45. So long as the molar ratio of the dicarboxylic acid unit to the diamine unit falls within the aforementioned range, the polymerization reaction proceeds favorably, and the polyamide (A) and the polyamide composition, each of which is excellent in desired physical properties, are readily obtained.

The molar ratio of the dicarboxylic acid unit to the diamine unit can be adjusted according to the blending ratio (molar ratio) of the raw material dicarboxylic acid and the raw material diamine.

A total proportion of the dicarboxylic acid unit and the diamine unit in the polyamide (A) (proportion occupied by the total molar number of the dicarboxylic acid unit and the diamine unit relative to the molar number of all structural units constituting the polyamide (A)) is preferably 70 mol% or more, more preferably 80 mol% or more, and still more preferably 90 mol% or more, and it may also be 95 mol% or more, and further 100 mol%. So long as the total proportion of the dicarboxylic acid unit and the diamine unit falls within the aforementioned range, the polyamide (A) and the polyamide composition, each of which is excellent in desired physical properties, are provided.

(Aminocarboxylic Acid Unit)

The polyamide (A) may further contain an aminocarboxylic acid unit in addition to the dicarboxylic acid unit and the diamine unit.

Examples of the aminocarboxylic acid unit include structural units derived from lactams, such as caprolactam and lauryl lactam; and aminocarboxylic acids, such as 11-aminoundecanoic acid and 12-aminododecanoic acid. The content of the aminocarboxylic acid unit in the polyamide (A) is preferably 40 mol% or less, and more preferably 20 mol% or less relative to the total 100 mol% of the dicarboxylic acid unit and the diamine unit each constituting the polyamide (A).

(Polyvalent Carboxylic Acid Unit)

So long as the effects of the present invention are not impaired, the polyamide (A) can also contain a structural unit derived from a trivalent or higher-valent polyvalent carboxylic acid, such as trimellitic acid, trimesic acid, and pyromellitic acid, within a range where it is possible to perform melt molding.

(End Capping Agent Unit)

The polyamide (A) may contain a structural unit derived from an end capping agent (end capping agent unit).

The content of the end capping agent unit is preferably 1.0 mol% or more, more preferably 1.2 mol% or more, and 1.5 mol% or more, and it is preferably 10 mol% or less, more preferably 7.5 mol% or less, and still more preferably 6.5 mol% or less, based on 100 mol% of the diamine unit. So long as the content of the end capping agent unit falls within the aforementioned range, the polyamide (A) and the polyamide composition, each of which is more excellent in

mechanical strength and fluidity, are provided. By appropriately adjusting the amount of the end capping agent on the occasion of charging the polymerization raw materials, the content of the end capping agent unit can be allowed to fall within the aforementioned desired range. Taking into consideration the fact that the monomer components volatilize during the polymerization, it is desired to make fine adjustments to the charge amount of the end capping agent such that the desired amount of the end capping agent unit is introduced into the resulting polyamide (A).

Examples of a method of determining the content of the end capping agent unit in the polyamide (A) include a method in which a solution viscosity is measured, the whole end group amount is calculated according to a relational expression thereof to a number average molecular weight, and the amino group amount and the carboxy group amount as determined through titration are subtracted therefrom, as described in JP 7-228690 A; and a method in which using $^1$H-NMR, the end capping agent unit in the polyamide (A) is determined on the basis of integrated values of signals corresponding to the diamine unit and the end capping agent unit, respectively, with the latter method being preferred.

As the end capping agent, a monofunctional compound having reactivity with the terminal amino group or the terminal carboxy group can be used. Specifically, examples thereof include a monocarboxylic acid, an acid anhydride, a monoisocyanate, a monoacid halide, a monoester, a monoalcohol, and a monoamine. From the viewpoint of reactivity and stability of the endcap, etc., a monocarboxylic acid is preferred as the end capping agent relative to the terminal amino group, and a monoamine is preferred as the end capping agent relative to the terminal carboxy group. From the viewpoint of easiness of handling, etc., a monocarboxylic acid is more preferred as the end capping agent.

The monocarboxylic acid which is used as the end capping agent is not particularly restricted so long as it has reactivity with the amino group. Examples thereof include aliphatic monocarboxylic acids, such as acetic acid, propionic acid, butyric acid, valeric acid, caproic acid, caprylic acid, lauric acid, tridecanoic acid, myristic acid, palmitic acid, stearic acid, pivalic acid, and isobutyric acid; alicyclic monocarboxylic acids, such as cyclopentanecarboxylic acid and cyclohexanecarboxylic acid; aromatic monocarboxylic acids, such as benzoic acid, toluic acid, α-naphthalenecarboxylic acid, β-naphthalenecarboxylic acid, methylnaphthalenecarboxylic acid, and phenylacetic acid; and arbitrary mixtures thereof. Of these, from the standpoint of reactivity, stability of endcap, and price, etc., at least one selected from the group consisting of acetic acid, propionic acid, butyric acid, valeric acid, caproic acid, caprylic acid, lauric acid, tridecanoic acid, myristic acid, palmitic acid, stearic acid, and benzoic acid is preferred.

The monoamine which is used as the end capping agent is not particularly restricted so long as it has reactivity with the carboxy group. Examples thereof include aliphatic monoamines, such as methylamine, ethylamine, propylamine, butylamine, hexylamine, octylamine, decylamine, stearylamine, dimethylamine, diethylamine, dipropylamine, and dibutylamine; alicyclic monoamines, such as cyclohexylamine and dicyclohexylamine; aromatic monoamines, such as aniline, toluidine, diphenylamine, and naphthylamine; and arbitrary mixtures thereof. Of these, from the standpoint of reactivity, high boiling point, stability of endcap, and price, etc., at least one selected from the group consisting of butylamine, hexylamine, octylamine, decylamine, stearylamine, cyclohexylamine, and aniline is preferred.

As for the polyamide (A), an inherent viscosity [$\eta_{inh}$] thereof as measured by using concentrated sulfuric acid as a solvent in a concentration of 0.2 g/dL at a temperature of 30°C is preferably 0.1 dL/g or more, more preferably 0.4 dL/g or more, still more preferably 0.6 dL/g or more, and especially preferably 0.8 dL/g or more, and it is preferably 3.0 dL/g or less, more preferably 2.0 dL/g or less, and still more preferably 1.8 dL/g or less. So long as the inherent viscosity [$\eta_{inh}$] of the polyamide (A) falls within the aforementioned range, the various physical properties, such as moldability, are more improved. The inherent viscosity [$\eta_{inh}$] can be determined from a time of flow $t_0$ (sec) of the solvent (concentrated sulfuric acid), a time of flow ti (sec) of the sample solution, and a sample concentration c (g/dL) in the sample solution (namely, 0.2 g/dL) according to a relational expression: $\eta_{inh} = [\ln(t_1/t_0)]/c$.

A melting point of the polyamide (A) is not particularly restricted, and for example, it can be 260°C or higher, 270°C or higher, and further 280°C or higher. From the standpoint that the effects of the present invention are more remarkably brought, etc., the melting point of the polyamide (A) is preferably 290°C or higher, more preferably 295°C or higher, still more preferably 300°C or higher, yet still more preferably 305°C or higher, and even yet still more preferably 310°C or higher, and it may also be 315°C or higher. Although an upper limit of the melting point of the polyamide (A) is not particularly restricted, taking into consideration moldability, etc., it is preferably 330°C or lower, more preferably 320°C or lower, and still more preferably 317°C or lower. The melting point of the polyamide (A) can be determined as a peak temperature of a melting peak appearing at the time of raising the temperature at a rate of 10°C/min by using a differential scanning calorimeter (DSC), and more specifically, it can be determined by the method described in the section of Examples.

A glass transition temperature of the polyamide (A) is not particularly restricted, and for example, it can be 100°C or higher, 110°C or higher, and further 120°C or higher. However, from the standpoint that the effects of the present invention are more remarkably brought, etc., the glass transition temperature of the polyamide (A) is preferably 125°C or higher, more preferably 130°C or higher, still more preferably 135°C or higher, yet still more preferably 137°C or higher, and even yet still more preferably 138°C or higher, and it may also be 139°C or higher. Although an upper limit of the glass transition temperature of the polyamide (A) is not particularly restricted, taking into consideration moldability, etc., it is preferably 180°C or lower, more preferably 160°C or lower, and still more preferably 150°C or lower.

The glass transition temperature of the polyamide (A) can be determined as a temperature of an inflection point appearing at the time of raising the temperature at a rate of 20°C/min by using a differential scanning calorimeter (DSC), and more specifically, it can be determined by the method described in the section of Examples.

(Production Method of Polyamide (A))

The polyamide (A) can be produced by adopting an arbitrary method known as the method for producing a crystalline polyamide. For example, the polyamide (A) can be produced by a method, such as a melt phase polymerization method, a solid phase polymerization method, and a melt extrusion method, each using a dicarboxylic acid and a diamine as raw materials. Above all, from the viewpoint that the heat deterioration during polymerization can be more favorably inhibited, the production method of the polyamide (A) is preferably a solid phase polymerization method.

In order to allow a molar ratio of the branched aliphatic diamine unit to the linear aliphatic diamine unit to fall within the aforementioned specified numerical value range, the branched aliphatic diamine and the linear aliphatic diamine, each of which is used as the raw material, may be used in a blending ratio so as to satisfy the desired molar ratio of the aforementioned units.

In the case of using, for example, 2-methyl-1,8-octanediamine and 1,9-nonanediamine as the branched aliphatic diamine and the linear aliphatic diamine, respectively, these can be each produced by a known method. Examples of the known method include a method of distilling a diamine crude reaction solution obtained through a reductive amination reaction using a dialdehyde as the starting raw material. Furthermore, 2-methyl-1,8-octanediamine and 1,9-nonanediamine can be obtained through fractionation of the aforementioned diamine crude reaction solution.

The polyamide (A) can be, for example, produced by first collectively adding a diamine and a dicarboxylic acid, and optionally a catalyst or an end capping agent, to produce a nylon salt, and then thermally polymerizing the nylon salt at a temperature of 200 to 250°C to prepare a prepolymer, followed by performing solid phase polymerization, or performing polymerization by using a melt extruder. In the case where the final stage of the polymerization is performed through solid phase polymerization, it is preferred to perform the polymerization under reduced pressure or under an inert gas flow. So long as the polymerization temperature falls within a range of 200 to 280°C, a polymerization rate is large, productivity is excellent, and coloration or gelation can be effectively inhibited. The polymerization temperature in the case of performing the final stage of the polymerization by using a melt extruder is preferably 370°C or lower, and when the polymerization is performed under such a condition, the polyamide (A) which is substantially free from decomposition and less in deterioration is obtained.

Examples of the catalyst which can be used on the occasion of producing the polyamide (A) include phosphoric acid, phosphorous acid, hypophosphorous acid, and a salt or an ester thereof. Examples of the salt or ester include a salt of phosphoric acid, phosphorous acid, or hypophosphorous acid with a metal, such as potassium, sodium, magnesium, vanadium, calcium, zinc, cobalt, manganese, tin, tungsten, germanium, titanium, and antimony; an ammonium salt of phosphoric acid, phosphorous acid, or hypophosphorous acid; an ethyl ester, an isopropyl ester, a butyl ester, a hexyl ester, an isodecyl ester, an octadecyl ester, a decyl ester, a stearyl ester, a phenyl ester, etc. of phosphoric acid, phosphorous acid, or hypophosphorous acid.

A use amount of the catalyst is preferably 0.01% by mass or more, and more preferably 0.05% by mass or more, and it is preferably 1.0% by mass or less, and more preferably 0.5% by mass, based on 100% by mass of the total mass of the raw materials of the polyamide (A). So long as the use amount of the catalyst is the aforementioned lower limit or more, the polymerization proceeds favorably. So long as the use amount of the catalyst is the aforementioned upper limit or less, impurities derived from the catalyst are hardly produced, and for example, in the case of forming the polyamide (A) or the polyamide composition containing the same into a film, a fault to be caused due to the aforementioned impurities can be prevented from occurring.

«Polyamide Composition»

The present invention also provides a polyamide composition containing the aforementioned polyamide (A).

Examples of other component than the polyamide (A), which is contained in the polyamide composition, include an inorganic filler, an organic filler, a crystal nucleating agent, an antioxidant, a colorant, an antistatic agent, a plasticizer, a lubricating agent, a dispersant, a flame retardant, and a flame retardant promoter. These may be contained alone or may be contained in combination of two or more thereof.

The content of the aforementioned other component in the polyamide composition is not particularly restricted and can be appropriately adjusted according to the kind of the foregoing other component and the application of the polyamide composition, etc. For example, the content of the other component can be 80% by mass or less, 50% by mass or less, 30% by mass or less, 15% by mass or less, 5% by mass or less, 1% by mass or less, etc. relative to the mass of the polyamide composition.

In view of the fact that the aforementioned polyamide composition contains the polyamide (A), it is excellent in

chemical resistance. As for the aforementioned polyamide composition of the present invention, a weight increase rate when injection molding into a 4 mm-thick test specimen and then immersing this in an antifreeze (an aqueous solution obtained by two fold dilution of "SUPER LONGLIFE COOLANT" (Pink), manufactured by Toyota Motor Corporation) at 130°C for 500 hours is preferably 5% or less, more preferably 3% or less, and still more preferably 2.8% or less, and it may also be 2.6% or less, 2.5% or less, and further 2.4% or less, on the basis of the weight of the test specimen before the immersion. More specifically, the foregoing weight increase rate can be determined by the method described in the section of Examples.

As for the aforementioned polyamide composition, a retention of tensile breaking strength when injection molding into a 4 mm-thick test specimen and then immersing this in an antifreeze (an aqueous solution obtained by two fold dilution of "SUPER LONGLIFE COOLANT" (Pink), manufactured by Toyota Motor Corporation) at 130°C for 500 hours is preferably 50% or more, and more preferably 80% or more, and it may also be 90% or more, 95% or more, and further 98% or more, on the basis of the tensile breaking strength before the immersion. More specifically, the foregoing retention of tensile breaking strength can be determined by the method described in the section of Examples.

In view of the fact that the aforementioned polyamide composition contains the polyamide (A), it is excellent in mechanical characteristics. As for the aforementioned polyamide composition, a tensile breaking strength at 23°C on the occasion of injection molding into a 4 mm-thick test specimen is preferably 70 MPa or more, more preferably 80 MPa or more, and still more preferably 90 MPa or more, and it may also be 100 MPa or more. In addition, as for the aforementioned polyamide composition, a flexural strength at 23°C on the occasion of injection molding into a 4 mm-thick test specimen is preferably 110 MPa or more, more preferably 120 MPa or more, and still more preferably 125 MPa or more, and it may also be 130 MPa or more. Specifically, these tensile breaking strength and flexural strength can be determined by the methods described in the section of Examples.

In view of the fact that the aforementioned polyamide composition contains the polyamide (A), it is excellent in heat resistance. As for the aforementioned polyamide composition, a heat distortion temperature on the occasion of injection molding into a 4 mm-thick test specimen is preferably 120°C or higher, more preferably 130°C or higher, still more preferably 140°C or higher, yet still more preferably 145°C or higher, and especially preferably 148°C or higher, and it may also be 150°C or higher. Specifically, the heat distortion temperature can be determined by the method described in the section of Examples.

In view of the fact that the aforementioned polyamide composition contains the polyamide (A), it is excellent in low water-absorbing properties. As for the aforementioned polyamide composition, a coefficient of water absorption when injection molding into a 4 mm-thick test specimen and then immersing this in water at 23°C for 168 hours is preferably 0.5% or less, more preferably 0.3% or less, and still more preferably 0.28% or less, and it may be 0.27% or less, and further 0.26% or less, on the basis of the weight of the test specimen before the immersion. More specifically, the foregoing coefficient of water absorption can be determined by the method described in the section of Examples.

As for the aforementioned polyamide composition, a storage modulus at 23°C after forming into a 200 μm-thick film is preferably 2.5 GPa or more, and more preferably 3.0 GPa, and it may also be 3.2 GPa or more, 3.4 GPa or more, and further 3.5 GPa or more. In addition, as for the aforementioned polyamide composition, a storage modulus at 150°C after forming into a 200 μm-thick film is preferably 0.5 GPa or more, more preferably 1.0 GPa or more, still more preferably 1.2 GPa or more, and especially preferably 1.5 GPa or more, and it may also be 1.7 GPa or more, 1.8 GPa or more, 1.9 GPa or more, and further 2.0 GPa or more. Furthermore, as for the aforementioned polyamide composition, an α-relaxation temperature (peak temperature of loss tangent) after forming into a 200 μm-thick film is preferably 140°C or higher, and more preferably 150°C or higher. Specifically, these storage modulus and α-relaxation temperature can be determined by the methods described in the section of Examples.

Furthermore, due to embodiments containing the polyamide (A) and specified components, the polyamide composition of the present invention can be formed into a polyamide composition having more excellent physical properties according to the foregoing specified components. Specifically, while preferred embodiments are shown below, it should be construed that the present invention is not limited to these embodiments.

<First Embodiment>

A polyamide composition of a first embodiment contains the polyamide (A) and a polyolefin (B1).

As mentioned above, in view of the fact that the polyamide (A) contains the dicarboxylic acid unit composed mainly of a naphthalenedicarboxylic acid unit and a diamine unit composed mainly of a branched aliphatic diamine unit, it is excellent in various physical properties including chemical resistance, and even in the polyamide composition containing the polyamide (A) and the polyolefin (B1), the aforementioned excellent properties are kept, and in addition thereto, excellent impact resistance and heat resistance are revealed. In addition, various molded articles obtained from the foregoing polyamide composition are able to hold the excellent properties of the foregoing polyamide composition.

[Polyolefin (B1)]

The polyamide composition of the first embodiment contains the polyolefin (B1). In view of the fact of containing the polyolefin (B1), a polyamide composition which is excellent in impact resistance, heat resistance, and chemical resistance is provided.

So long as the effects of the present invention are obtained, though the polyolefin (B1) is not particularly restricted, it is preferably at least one selected from the group consisting of the following (b1-1) to (bl-5).

(b1-1) α-Olefin copolymer
(b1-2) Copolymer of at least one selected from the group consisting of ethylene, propylene, and an α-olefin having 4 or more carbon atoms and at least one selected from the group consisting of an α,β-unsaturated carboxylic acid, an α,β-unsaturated carboxylic acid ester, and an α,β-unsaturated carboxylic acid anhydride
(b1-3) Ionomer of the above (b1-2)
(b1-4) Copolymer of an aromatic vinyl compound and a conjugated diene compound
(b1-5) Polymer resulting from modification of at least one selected from the group consisting of the above (b1-1) to (b1-4) with an unsaturated compound having at least one selected from the group consisting of a carboxy group and an acid anhydride group

(b1-1) α-Olefin copolymer

Examples of the α-olefin copolymer include a copolymer of ethylene and an α-olefin having 3 or more carbon atoms and a copolymer of propylene and an α-olefin having 4 or more carbon atoms.

Examples of the α-olefin having 3 or more carbon atoms include propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 9-methyl-1-decene, 11-methyl-1-dodecene, and 12-ethyl-1-tetradecene. These α-olefins may be used alone or may be used in combination of two or more thereof.

In addition, the α-olefin copolymer (b1-1) may also be one resulting from copolymerization with a non-conjugated polyene, such as 1,4-pentadiene, 1,4-hexadiene, 1,5-hexadiene, 1,4-octadiene, 1,5-octadiene, 1,6-octadiene, 1,7-octadiene, 2-methyl-1,5-hexadiene, 6-methyl-1,5-heptadiene, 7-methyl-1,6-octadiene, 4-ethylidene-8-methyl-1,7-nonadiene, 4,8-dimethyl-1,4,8-decatriene (DMDT), dicyclopentadiene, cyclohexadiene, cyclooctadiene, 5-vinylnorbornene, 5-ethylidene-2-norbornene, 5-methylene-2-norbornene, 5-isopropylidene-2-norbornene, 6-chloromethyl-5-isopropenyl-2-norbornene, 2,3-diisopropylidene-5-norbornene, 2-ethylidene-3-isopropylidene-5-norbornene, and 2-propenyl-2,5-norbonadiene. These non-conjugated polyenes may be used alone or may be used in combination of two or more thereof.

• (b1-2) Copolymer

The copolymer (b1-2) is a copolymer of at least one selected from the group consisting of ethylene, propylene, and an α-olefin having 4 or more carbon atoms and at least one selected from the group consisting of an α,β-unsaturated carboxylic acid, an α,β-unsaturated carboxylic acid ester, and an α,β-unsaturated carboxylic acid anhydride.

As the α-olefin, ones having 4 or more carbon atoms among those mentioned above in the description of the α-olefin copolymer (b1-1) can be adopted. These α-olefins having 4 or more carbon atoms may be used alone or may be used in combination of two or more thereof.

Examples of the α,β-unsaturated carboxylic acid include acrylic acid, methacrylic acid, maleic acid, fumaric acid, and itaconic acid. These α,β-unsaturated carboxylic acids may be used alone or may be used in combination of two or more thereof.

Examples of the α,β-unsaturated carboxylic acid ester include a methyl ester, an ethyl ester, a propyl ester, a butyl ester, a pentyl ester, a hexyl ester, a heptyl ester, an octyl ester, a nonyl ester, and a decyl ester of the aforementioned α,β-unsaturated carboxylic acid. These α,β-unsaturated carboxylic acid esters may be used alone or may be used in combination of two or more thereof.

Examples of the α,β-unsaturated carboxylic acid anhydride include maleic anhydride and itaconic anhydride. These α,β-unsaturated carboxylic acid anhydrides may be used alone or may be used in combination of two or more thereof.

As the at least one selected from the group consisting of the aforementioned α,β-unsaturated carboxylic acid, α,β-unsaturated carboxylic acid ester, and α,β-unsaturated carboxylic acid anhydride, the α,β-unsaturated carboxylic acid anhydride is preferred, and maleic anhydride is more preferred.

• (b1-3) Ionomer

Examples of the ionomer (b1-3) include one resulting from ionization of at least a part of carboxyl groups of the aforementioned copolymer (b1-2) through neutralization with a metal ion. Examples of the metal ion include alkali metals and alkaline earth metals, such as Li, Na, K, Mg, Ca, Sr, and Ba; and in addition thereto, Al, Sn, Sb, Ti, Mn, Fe, Ni, Cu, Zn, and Cd. These metal ions may be used alone or may be used in combination of two or more thereof.

• (b1-4) Copolymer

The copolymer (b1-4) is a copolymer of an aromatic vinyl compound and a conjugated diene compound, and preferably a block copolymer. Examples of the block copolymer include a block copolymer composed of an aromatic vinyl compound polymer block and a conjugated diene compound polymer block (aromatic vinyl compound/conjugated diene compound block copolymer), and a block copolymer having at least one aromatic vinyl compound polymer block and at least one conjugated diene compound polymer block is preferred. In addition, as for the aforementioned block copolymer, a part or the whole of unsaturated bonds in the conjugated diene compound polymer block may be hydrogenated.

The aromatic vinyl compound polymer block is a polymer block composed mainly of a structural unit derived from an aromatic vinyl compound. Examples of the aromatic vinyl compound include styrene, α-methylstyrene, o-methylstyrene, m-methylstyrene, p-methylstyrene, 2,4-dimethylstyrene, vinylnaphthalene, vinylanthracene, 4-propylstyrene, 4-cyclohexylstyrene, 4-dodecylstyrene, 2-ethyl-4-benzylstyrene, and 4-(phenylbutyl)styrene. These may be used alone or may be used in combination of two or more thereof.

The aromatic vinyl compound polymer block may have a small quantity of a structural unit derived from other unsaturated monomer as the case may be.

The conjugated diene compound polymer block is a polymer block composed mainly of a structural unit derived from a conjugated diene compound. Examples of the foregoing conjugated diene compound include 1,3-butadiene, chloroprene, isoprene, 2,3-dimethyl-1,3-butadiene, 1,3-pentadiene, 4-methyl-1,3-pentadiene, and 1,3-hexadiene. These may be used alone or may be used in combination of two or more thereof.

As for the hydrogenated aromatic vinyl compound/conjugated diene compound block copolymer, typically, a part or the whole of unsaturated bond portions in the conjugated diene compound polymer block become a single bond due to hydrogenation.

A molecular structure of the aromatic vinyl compound/conjugated diene compound block copolymer (which may be a hydrogenated material, too) may be any of a linear form, a branched form, a radial form, and an arbitrary combination thereof. Of these, as the aromatic vinyl compound/conjugated diene compound block copolymer (which may be a hydrogenated material, too), one or more of a diblock copolymer in which one aromatic vinyl compound polymer block and one conjugated diene compound polymer block are linearly bound and a triblock copolymer in which three polymer blocks are linearly bound in the order of aromatic vinyl compound polymer block-conjugated diene compound polymer block-aromatic vinyl compound polymer block (all of which may be a hydrogenated material, too) are preferably used.

Examples of the aromatic vinyl compound/conjugated diene compound block copolymer (which may be a hydrogenated material, too) include an unhydrogenated or hydrogenated styrene/butadiene block copolymer, an unhydrogenated or hydrogenated styrene/isoprene block copolymer, an unhydrogenated or hydrogenated styrene/isoprene/styrene block copolymer, an unhydrogenated or hydrogenated styrene/butadiene/styrene block copolymer, and an unhydrogenated or hydrogenated styrene/(isoprene and butadiene)/styrene block copolymer.

• (b1-5) Modified polymer

The modified polymer (b1-5) is a polymer resulting from modification of at least one selected from the group consisting of the above (b1-1) to (b1-4) with an unsaturated compound having at least one selected from the group consisting of a carboxy group and an acid anhydride group.

Examples of the aforementioned unsaturated compound having a carboxy group include α,β-unsaturated carboxylic acids, such as acrylic acid, methacrylic acid, maleic acid, fumaric acid, and itaconic acid. In addition, examples of the unsaturated compound having an acid anhydride group include dicarboxylic acid anhydrides having an α,β-unsaturated bond, such as maleic anhydride and itaconic anhydride. As the unsaturated compound having at least one selected from the group consisting of a carboxy group and an acid anhydride group, a dicarboxylic acid anhydride having an α,β-unsaturated bond is preferred, and maleic anhydride is more preferred.

The content of the total of the carboxy group and the acid anhydride group in the modified polymer (b1-5) preferably falls within a range of 25 to 200 μmol/g, and more preferably falls within a range of 50 to 100 μmol/g. So long as the aforementioned content is 25 μmol/g or more, an improvement effect of mechanical characteristics is satisfactory,

whereas so long as it is 200 μmol/g or less, the moldability of the polyamide composition is improved.

Examples of the modification method with an unsaturated compound include a method in which on the occasion of producing through addition polymerization of at least one selected from the group consisting of the above (b1-1) to (b1-4) (hereinafter also referred to as "base resin"), it is copolymerized with the aforementioned unsaturated compound; and a method in which the aforementioned unsaturated compound is subjected to a grafting reaction on the base resin, with the latter method being preferred.

The polyolefin (B1) may be used alone or may be used in combination of two or more thereof. From the viewpoint of obtaining the effects of the present invention, the polyolefin (B1) is preferably the modified polymer (b1-5); more preferably a polymer resulting from modification of an α-olefin copolymer with an unsaturated compound having at least one selected from a carboxy group and an acid anhydride group; and still more preferably a maleic anhydride modified product of an ethylene-propylene copolymer.

When the modified polymer (b1-5) is used as the polyolefin (B1), in view of the fact that the terminal amino group which the polyamide (A) has and the carboxy group and/or the acid anhydride group which the modified polymer (b1-5) has react with each other, affinity at the interface between the phase (A) and the phase (B) becomes strong, so that mechanical properties, such as impact resistance and elongation characteristics, are more improved.

As the modified polymer (b1-5), a commercially available product can be used, and examples thereof include "TAFMER (registered trademark)", manufactured by Mitsui Chemicals, Inc.

It is preferred that the polyamide composition of the first embodiment contains the polyolefin (B1) in the content of 1 part by mass or more and 100 parts by mass or less based on 100 parts by mass of the polyamide (A). Furthermore, the content of the polyolefin (B1) is more preferably 2 parts by mass or more, and still more preferably 3 parts by mass or more based on 100 parts by mass of the polyamide (A). In addition, the content of the polyolefin (B1) is more preferably 80 parts by mass or less, still more preferably 65 parts by mass or less, and still more preferably 50 parts by mass or less based on 100 parts by mass of the polyamide (A), and it can also be 30 parts by mass or less, 20 parts by mass or less, and 10 parts by mass or less. So long as the aforementioned content of the polyolefin (B1) is 1 part by mass or more, the impact resistance and the heat resistance are readily revealed on the polyamide composition, and a fault, such as cracking, is hardly caused on a molded article resulting from molding of the polyamide composition. In addition, so long as the aforementioned content of the polyolefin (B1) is 100 parts by mass or less, a polyamide composition which is excellent in impact resistance, heat resistance, and chemical resistance can be provided.

A total content of the polyamide (A) and the polyolefin (B1) in the polyamide composition of the first embodiment is preferably 85% by mass or more, more preferably 90% by mass or more, and still more preferably 92% by mass or more, and it may also be 95% by mass or more, and 97% by mass or more. In addition, though the total content of the polyamide (A) and the polyolefin (B1) in the polyamide composition of the first embodiment may be 100% by mass, taking into consideration the addition amount of other additive as mentioned later, which is added as the need arises, it is preferably less than 100% by mass, and it can also be 99.5% by mass or less, and 99% by mass or less.

So long as the total content of the polyamide (A) and the polyolefin (B1) in the polyamide composition of the first embodiment falls within the aforementioned range, excellent physical properties of the polyamide composition, such as impact resistance, heat resistance, and chemical resistance, are readily revealed.

[Arbitrary Component]

In the polyamide composition of the first embodiment, in addition to the aforementioned polyamide (A) and polyolefin (B1), an organic heat stabilizer (B2) (for example, a phenol-based heat stabilizer, a phosphorus-based heat stabilizer, a sulfur-based heat stabilizer, and an amine-based heat stabilizer), a copper compound (B3), a metal halide (B4), a halogen-based flame retardant (B5) (for example, a brominated polymer), a halogen-free flame retardant (B6), a filler (C) (for example, an inorganic or organic fibrous filler, such as a glass fiber, a carbon fiber, and a wholly aromatic polyamide fiber; a powdered filler, such as wollastonite, silica, silica alumina, alumina, titanium dioxide, potassium titanate, magnesium hydroxide, molybdenum disulfide, carbon nanotube, graphene, polytetrafluoroethylene, and ultra-high molecular weight polyethylene; and a flaky filler, such as hydrotalcite, glass flake, mica, clay, montmorillonite, and kaolin), and a flame retardant promoter (D), as mentioned later, may be contained as the need arises. These may be used alone or may be used in combination of two or more thereof.

So long as the effects of the present invention are not impaired, though the content of each of these components (B2), (B3), (B4), (B5), (B6), (C), and (D) in the polyamide composition of the first embodiment is not particularly limited, a preferred range thereof is one as mentioned later.

(Other Additive)

Furthermore, the polyamide composition of the first embodiment may contain other additive as the need arises.

Examples of the other additive include a colorant, such as carbon black; a UV absorber; a light stabilizer; an

antistatic agent; a crystal nucleating agent; a plasticizer; a lubricating agent; a dispersant; an oxygen absorber; a hydrogen sulfide adsorbent; and an impact modifier, such as rubber (exclusive of the polyolefin (B1)). These may be used alone or may be used in combination of two or more thereof.

So long as the effects of the present invention are not impaired, the content of the aforementioned other additive is not particularly limited.

As one preferred aspect of the polyamide composition of the first embodiment, a total content of the respective components of the aforementioned (B2), (B3), (B4), (B5), (B6), (C), and (D) and the aforementioned other additive is preferably 0.02 to 200 parts by mass, and more preferably 0.03 to 100 parts by mass based on 100 parts by mass of the polyamide (A).

As for the polyamide composition of the first embodiment, a weight increase rate when injection molding into a 4 mm-thick test specimen and then immersing this in an antifreeze (an aqueous solution obtained by two fold dilution of "SUPER LONGLIFE COOLANT" (Pink), manufactured by Toyota Motor Corporation) at 130°C for 500 hours is preferably 5% or less, more preferably 4% or less, and still more preferably 3.5% or less on the basis of the weight of the test specimen before the immersion. More specifically, the foregoing weight increase rate can be determined by the method described in the section of Examples.

As for the polyamide composition of the first embodiment, a retention of tensile breaking strength when injection molding into a 4 mm-thick test specimen and then immersing this in an antifreeze (an aqueous solution obtained by two fold dilution of "SUPER LONGLIFE COOLANT" (Pink), manufactured by Toyota Motor Corporation) at 130°C for 500 hours is preferably 60% or more, more preferably 70% or more, and still more preferably 73% or more on the basis of the tensile breaking strength before the immersion. More specifically, the foregoing retention of tensile breaking strength can be determined by the method described in the section of Examples.

As for the polyamide composition of one aspect of the first embodiment, a Charpy impact value at room temperature on the occasion of injection molding into a 4 mm-thick test specimen and then cutting into a notched test specimen is preferably 5 $kJ/m^2$ or more, more preferably 6 $kJ/m^2$ or more, and still more preferably 7 $kJ/m^2$ or more. In addition, the Charpy impact value at -40°C is preferably 3 $kJ/m^2$, more preferably 4 $kJ/m^2$, and still more preferably 4.5 $kJ/m^2$. More specifically, the foregoing impact value can be determined by the method described in the section of Examples.

As for the polyamide composition of the first embodiment, a heat distortion temperature on the occasion of injection molding into a 4 mm-thick test specimen is preferably 130°C or higher, more preferably 140°C or higher, and still more preferably 144°C or higher. Specifically, the foregoing heat distortion temperature can be determined by the method described in the section of Examples.

As for the polyamide composition of the first embodiment, a tensile breaking strength on the occasion of injection molding into a 4 mm-thick test specimen is preferably 50 MPa or more, and more preferably 55 MPa or more, and it may also be 90 MPa or more. In addition, as for the polyamide composition of the first embodiment, a tensile breaking strain on the occasion of injection molding into a 4 mm-thick test specimen is preferably 10% or more, and more preferably 14% or more, and it may also be 20% or more. Specifically, the foregoing tensile breaking strength and tensile breaking strain can be determined by the methods described in the section of Examples.

As for the polyamide composition of the first embodiment, a coefficient of water absorption when injection molding into a 4 mm-thick test specimen and then immersing this in water at 23°C for 168 hours is preferably 0.5% or less, more preferably 0.4% or less, and still more preferably 0.3% or less on the basis of the weight of the test specimen before the immersion. More specifically, the foregoing coefficient of water absorption can be determined by the method described in the section of Examples.

<Second Embodiment>

A polyamide composition of a second embodiment contains the polyamide (A) and an organic heat stabilizer (B2).

From the viewpoint of chemical resistance, the content of the polyamide (A) which is contained in the polyamide composition of the second embodiment is preferably 50% by mass or more, more preferably 60% by mass or more, still more preferably 70% by mass or more, yet still more preferably 80% by mass or more, even yet still more preferably 90% by mass or more, and especially preferably 95% by mass or more, and from the viewpoint of mechanical characteristics and heat resistance, etc., it is preferably 99.9% by mass or less, and more preferably 99.8% by mass or less.

As mentioned above, in view of the fact that the polyamide (A) has a dicarboxylic acid unit composed mainly of a naphthalenedicarboxylic acid unit and a diamine unit composed mainly of a branched aliphatic diamine unit, the polyamide (A) is excellent in various physical properties including chemical resistance, and even in the polyamide composition of the second embodiment containing the polyamide (A) and the organic heat stabilizer (B2), the aforementioned excellent properties are kept, and in addition thereto, excellent high-temperature heat resistance is revealed. In addition, various molded articles obtained from the foregoing polyamide composition are able to hold the excellent properties of the foregoing polyamide composition.

[Organic Heat Stabilizer (B2)]

As the organic heat stabilizer (B2) which is contained in the polyamide composition of the second embodiment, known compounds can be used; however, it is preferably at least one selected from the group consisting of a phenol-based heat stabilizer (B2-1), a phosphorus-based heat stabilizer (B2-2), a sulfur-based heat stabilizer (B2-3), and an amine-based heat stabilizer (B2-4).

• Phenol-based heat stabilizer (B2-1)

Examples of the phenol-based heat stabilizer (B2-1) include a hindered phenol compound. The hindered phenol compound has properties of imparting heat resistance or light resistance to a resin, such as a polyamide.

Examples of the hindered phenol compound include 2,2-thio-diethylenebis[3-(3,5-di-tert-butyl-4-hydroxyphenyl)propionate], N,N'-hexane-1,6-diyl bis[3-(3,5-di-tert-butyl-4-hydroxyphenylpropionamide), pentaerythrityl-tetrakis[3-(3,5-di-tert-butyl-4-hydroxyphenyl)propionatel, N,N'-hexamethylenebis(3,5-di-tert-butyl-4-hydroxyphenyl)propionamide, triethylene glycol bis(3-tert-butyl-4-hydroxy-5-methylphenyl)propionate, hexamethylenebis(3-(3,5-di-tert-butyl-4-hydroxyphenyl)propionate), 3,9-bis{2-[3-(3-tert-butyl-4-hydroxy-5-methylphenyl)propionyloxy]-1,1-dimeth ylethyl}-2,4,8,10-tetraoxaspiro[5,5]undecane, tris(3,5-di-tert-butyl-4-hydroxybenzyl)isocyanurate, 3,5-di-tert-butyl-4-hydroxybenzylphosphonato-diethyl ester, 1,3,5-trimethyl-2,4,6-tris(3,5-di-tert-butyl-4-hydroxybenzyl)benzene, and 1,3,5-tris(4-tert-butyl-3-hydroxy-2,6-dimethylbenzyl)isocyanuric acid.

The phenol-based heat stabilizer (B2-1) may be used alone or may be used in combination of two or more thereof. In particular, from the viewpoint of improvement of heat resistance, 3,9-bis{2-[3-(3-tert-butyl-4-hydroxy-5-methylphenyl)propionyloxyl-1,1-dimeth ylethyl}-2,4,8,10-tetraoxaspiro[5,5]undecane is preferred.

In the case of using the phenol-based heat stabilizer (B2-1), its content is preferably 0.01 to 2 parts by mass, and more preferably 0.1 to 1 part by mass based on 100 parts by mass of the polyamide (A). In the case where the foregoing content falls within the aforementioned range, the heat resistance can be more improved.

• Phosphorus-based heat stabilizer (B2-2)

Examples of the phosphorus-based heat stabilizer (B2-2) include monosodium phosphate, disodium phosphate, trisodium phosphate, sodium phosphite, calcium phosphite, magnesium phosphate, manganese phosphite, a pentaerythritol type phosphite compound, trioctyl phosphite, trilauryl phosphite, octyl diphenyl phosphite, trisisodecyl phosphite, phenyl diisodecyl phosphite, phenyl di(tridecyl) phosphite, diphenyl isooctyl phosphite, diphenyl isodecyl phosphite, diphenyl (tridecyl) phosphite, triphenyl phosphite, trioctadecyl phosphite, tridecyl phosphite, tri(nonylphenyl) phosphite, tris(2,4-di-tert-butylphenyl) phosphite, tris(2,4-di-tert-butyl-5-methylphenyl) phosphite, tris(butoxyethyl) phosphite, 4,4'-butylidene-bis(3-methyl-6-tert-butylphenyl-tetratridecyl) diphosphite, a tetra(C12-C15 mixed alkyl)-4,4'-isopropylidenediphenyl diphosphite, 4,4'-isopropylidenebis(2-tert-butylphenyl)/di(nonylphenyl) phosphite, tris(biphenyl) phosphite, tetra(tridecyl)-1,1,3-tris(2-methyl-5-tert-butyl-4-hydroxyphenyl)butane diphosphite, tetra(tridecyl)-4,4'-butylidenebis(3-methyl-6-tert-butylphenyl) diphosphite, a tetra(C1-C15 mixed alkyl)-4,4'-isopropylidenediphenyl diphosphite, a tris(mono, di-mixed nonylphenyl) phosphite, 4,4'-isopropylidenbis(2-tert-butylphenyl)/di(nonylphenyl) phosphite, 9,10-dihydro-9-oxa-10-phosphaphenanthrene-10-oxide, tris(3,5-di-tert-butyl-4-hydroxyphenyl)phosphite, hydrogenated-4,4'-isopropylidenediphenyl polyphosphite, bis(octylphenyl)/bis(4,4'-butylidenebis(3-methyl-6-tert-butylphenyl))/1,6-hexa nol diphosphite, hexatridecyl-1,1,3-tris(2-methyl-4-hydroxy-5-tert-butylphenyl) diphosphite, tris(4,4'-isopropylidenebis(2-tert-butylphenyl))phosphite, tris(1,3-stearoyloxyisopropyl)phosphite, 2,2-methylenebis(4,6-di-tert-butylphenyl)octyl phosphite, 2,2-methylenebis(3-methyl-4,6-di-tert-butylphenyl)-2-ethylhexyl phosphite, tetrakis(2,4-di-tert-butyl-5-methylphenyl)-4,4'-biphenylene diphosphite, tetrakis(2,4-di-tert-butylphenyl)-4,4'-biphenylene diphosphite, and 6-[3-(3-tert-butyl-4-hydroxy-5-methylphenyl)propoxy]-2,4,8,10-tetra-tert-butyl dibenzo[d,f] [1,3,2]-dioxaphosphepin.

The phosphorous-based heat stabilizer (B2-2) may be used alone or may be used in combination of two or more thereof. From the viewpoint of more improving the heat resistance, the phosphorus-based heat resistance (B2-2) is preferably a pentaerythritol type phosphite compound or tris(2,4-di-tert-butylphenyl)phosphite.

Examples of the pentaerythritol type phosphite compound include 2,6-di-tert-butyl-4-methylphenyl/phenyl/pentaerythritol diphosphite, 2,6-di-tert-butyl-4-methylphenyl/methyl/pentaerythritol diphosphite, 2,6-di-tert-butyl-4-methylphenyl/2-ethylhexyl/pentaerythritol diphosphite, 2,6-di-tert-butyl-4-methylphenyl/isodecyl/pentaerythritol diphosphite, 2,6-di-tert-butyl-4-methylphenyl/lauryl/pentaerythritol diphosphite, 2,6-di-tert-butyl-4-methylphenyl/isotridecyl/pentaerythritol diphosphite, 2,6-di-tert-butyl-4-methylphenyl/stearyl/pentaerythritol diphosphite, 2,6-di-tert-butyl-4-methylphenyl/cyclohexyl/pentaerythritol diphosphite, 2,6-di-tert-butyl-4-methylphenyl/benzyl/pentaerythritol diphosphite, 2,6-di-tert-butyl-4-methylphenyl/ethyl cellosolve/pentaerythritol diphosphite, 2,6-di-tert-butyl-4-methylphenyl/butyl carbitol/pentaerythritol diphosphite, 2,6-di-tert-butyl-4-methylphenyl/octylphenyl/pentaerythritol diphosphite, 2,6-di-tert-butyl-4-methylphenyl/nonlyphenyl/pentaerythritol diphosphite, bis(2,6-di-tert-butyl-4-methylphenyl)pentaerythritol diphosphite, bis(2,6-di-tert-butyl-4-ethylphenyl)pentaerythritol diphosphite, 2,6-di-tert-butyl-4-methylphenyl/2,6-di-tert-butylphenyl/pentaerythritol diphosphite, 2,6-di-tert-butyl-4-methylphenyl/2,4-di-tert-butylphenyl/pentaerythritol diphosphite, 2,6-di-tert-butyl-4-methylphenyl/2,4-di-tert-octylphenyl/pentaerythritol diphosphite, 2,6-di-tert-butyl-4-methylphenyl/2-cyclohexylphenyl/pentaerythritol diphosphite, 2,6-di-tert-amyl-4-methylphenyl/phenyl/pentaerythritol diphosphite, bis(2,4-dicumylphenyl)pentaerythritol diphosphite, bis(2,6-di-tert-amyl-4-methylphenyl)pentaerythritol diphosphite, and bis(2,6-di-tert-octyl-4-methylphenyl)pentaerythritol diphosphite. These may be used alone or may be used in combination of two or more thereof.

Of these, bis(2,4-dicumylphenyl)pentaerythritol diphosphite, bis(2,6-di-tert-butyl-4-methylphenyl)pentaerythritol diphosphite, bis(2,6-di-tert-butyl-4-ethylphenyl)pentaerythritol diphosphite, bis(2,6-di-tert-amyl-4-methylphenyl)pentaerythritol diphosphite, and bis(2,6-di-tert-octyl-4-methylphenyl)pentaerythritol diphosphite are preferred, and bis(2,6-di-tert-butyl-4-methylphenyl)pentaerythritol diphosphite is more preferred.

In the case of using the phosphorus-based heat stabilizer (B2-2), its content is preferably 0.01 to 2 parts by mass, and more preferably 0.1 to 1 part by mass based on 100 parts by mass of the polyamide (A). In the case where the foregoing content falls within the aforementioned range, the heat resistance can be more improved.

• Sulfur-based heat stabilizer (B2-3)

Examples of the sulfur-based hat stabilizer (B2-3) include distearyl 3,3'-thiodipropionate, pentaerythritol tetrakis(3-lauryl thiopropionate), 2-mercaptobenzimidazole, didodecyl 3,3'-thiodipropionate, ditridecyl 3,4'-thiodipropionate, and 2,2-bis[[3-(dodecylthio)-1-oxopropoxy]methyl]-1,3-propanediyl ester.

The sulfur-based heat stabilizer (B2-3) may be used alone or may be used in combination of two or more thereof.

In the case of using the sulfur-based heat stabilizer (B2-3), its content is preferably 0.02 to 4 parts by mass, and more preferably 0.2 to 2 parts by mass based on 100 parts by mass of the polyamide (A). In the case where the foregoing content falls within the aforementioned range, the heat resistance can be more improved.

• Amine-based heat stabilizer (B2-4)

Examples of the amine-based heat stabilizer (B2-4) include 4,4'-bis($\alpha$,$\alpha$-dimethylbenzyl)diphenylamine (e.g., "NOCRAC CD", manufactured by Ouchi Shinko Chemical Industrial Co., Ltd.), N,N'-di-2-naphthyl-p-phenylenediamine (e.g., "NOCRAC White", manufactured by Ouchi Shinko Chemical Industrial Co., Ltd.), N,N'-diphenyl-p-phenylenediamine (e.g., "NOCRAC DP", manufactured by Ouchi Shinko Chemical Industrial Co., Ltd.), N-phneyl-1-naphthylamine (e.g., "NOCRAC PA", manufactured by Ouchi Shinko Chemical Industrial Co., Ltd.), N-phenyl-N'-isopropyl-p-phenylenediamine (e.g., "NOCRAC 810-NA", manufactured by Ouchi Shinko Chemical Industrial Co., Ltd.), N-phenyl-N'-(1,3-dimethylbutyl)-p-phenylenediamine (e.g., "NOCRAC 6C", manufactured by Ouchi Shinko Chemical Industrial Co., Ltd.), N-phenyl-N'-(3-methacryloyloxy-2-hydroxypropyl)-p-phenylenediamine (e.g., "NOCRAC G-1", manufactured by Ouchi Shinko Chemical Industrial Co., Ltd.), 4-acetoxy-2,2,6,6-tetramethylpiperidine, 4-stearoyloxy-2,2,6,6-tetramethylpiperidine, 4-acryloyloxy-2,2,6,6-tetramethylpiperidine, 4-(phenylacetoxy)-2,2,6,6-tetramethylpiperidine, 4-benzoyloxy-2,2,6,6-tetramethylpiperidine, 4-methoxy-2,2,6,6-tetramethylpiperidine, 4-stearyloxy-2,2,6,6-tetramethylpiperidine, 4-cyclohexyloxy-2,2,6,6-ttetramethylpiperidine, 4-benzyloxy-2,2,6,6-tetramethylpiperizine, 4-phenoxy-2,2,6,6-tetramethylpiperidine, 4-(ethylcarbamoyloxy)-2,2,6,6-tetramethylpiperidine, 4-(cyclohexylcarbamoyloxy)-2,2,6,6-tetramethylpiperidine, 4-(phenylcarbamoyloxy)-2,2,6,6-tetramethylpiperidine, bis(2,2,6,6-tetramethyl-4-piperidyl)carbonate, bis(2,2,6,6-tetramethyl-4-piperidyl)oxalate, bis(2,2,6,6-tetramethyl-4-piperidyl)malonate, bis(2,2,6,6-tetramethyl-4-piperidyl)sebacate, bis(2,2,6,6-tetramethyl-4-piperidyl)adipate, bis(2,2,6,6-tetramethyl-4-piperidyl)terephthalate, 1,2-bis(2,2,6,6-tetramethyl-4-piperidyloxy)ethane, $\alpha$,$\alpha$'-bis(2,2,6,6-tetramethyl-4-piperidyloxy)-p-xylene, bis(2,2,6,6-tetramethyl-4-piperidyl)tolylene-2,4-dicarbamate, bis(2,2,6,6-tetramethyl-4-piperidyl)hexamethylene-1,6-dicarbamate, tris(2,2,6,6-tetramethyl-4-piperidyl)benzene-1,3,5-tricarboxylate, tris(2,2,6,6-tetramethyl-4-piperidyl)benzene-1,3,4-tricarboxylate, 1-[2-{3-(3,5-di-tert-butyl-4-hydroxyphenyl)propionyloxy}butyl-4-[3-(3,5-di-tert-butyl-4-hydroxyphenyl)propionyloxy]-2,2,6,6-tetramethylpiperidine, and a condensate of 1,2,3,4-butanetetracarboxylic acid with 1,2,2,6,6-pentamethyl-4-piperidinol and $\beta$,$\beta$,$\beta$',$\beta$'-tetramethyl-3,9-[2,4,8,10-tetraoxaspiro[5,5]undecane]diethanol.

The amine-based heat stabilizer (B2-4) may be used alone or may be used in combination of two or more thereof.

In the case of using the amine-based heat stabilizer (B2-4), its content is preferably 0.01 to 2 parts by mass, and more preferably 0.1 to 1 part by mass based on 100 parts by mass of the polyamide (A). In the case where the foregoing content falls within the aforementioned range, the heat resistance can be more improved.

It is preferred that the polyamide composition of the second embodiment contains the organic heat stabilizer (B2) in the content of 0.05 parts by mass or more and 5 parts by mass or less based on 100 parts by mass of the polyamide (A). Furthermore, the content of the organic heat stabilizer (B2) is more preferably 0.1 parts by mass or more based on 100 parts by mass of the polyamide (A), and it is more preferably 3 parts by mass or less, and it can also be 2 parts by mass or less, and 1 part by mass or less.

So long as the content of the organic heat stabilizer (B2) falls within the aforementioned range, the heat resistance of the polyamide composition can be more improved, and in the case of using a plurality of the organic heat stabilizers (B2), the sum total thereof may fall within the aforementioned range.

A total content of the polyamide (A) and the organic heat stabilizer (B2) in the polyamide composition of the second embodiment is preferably 50% by mass or more, more preferably 55% by mass or more, and still more preferably 60% by mass or more, and it may also be 90% by mass or more, and 95% by mass or more. In addition, though the total content of the polyamide (A) and the organic heat stabilizer (B2) in the polyamide composition of the second embodiment may be 100% by mass, taking into consideration the addition amount of other additive as mentioned later, which is added as the need arises, it is preferably less than 100% by mass, and it can also be 99.5% by mass or less, and 99% by mass or less.

So long as the total content of the polyamide (A) and the organic heat stabilizer (B2) in the polyamide composition of the second embodiment falls within the aforementioned range, excellent physical properties of the polyamide composition, such as high-temperature heat resistance and chemical resistance, are readily revealed.

[Arbitrary Component]

In the polyamide composition of the second embodiment, in addition to the aforementioned polyamide (A) and organic heat stabilizer (B2), the polyolefin (B1) as mentioned above and a copper compound (B3), a metal halide (B4), a halogen-based flame retarder (B5) (for example, a brominated polymer), a halogen-free flame retarder (B6), a filler (C) (for example, an inorganic or organic fibrous filler, such as a glass fiber, a carbon fiber, and a wholly aromatic polyamide fiber; a powdered filler, such as wollastonite, silica, silica alumina, alumina, titanium dioxide, potassium titanate, magnesium hydroxide, molybdenum disulfide, carbon nanotube, graphene, polytetrafluoroethylene, and ultra-high molecular weight polyethylene; and a flaky filler, such as hydrotalcite, glass flake, mica, clay, montmorillonite, and kaolin), and a flame retardant promoter (D), as mentioned later, may be contained as the need arises. These may be used alone or may be used in combination of two or more thereof.

Although the content of each of these components (B1), (B3), (B4), (B5), (B6), (C), and (D) in the polyamide composition of the second embodiment is not particularly limited as long as the effects of the present invention are not impaired, a preferred range thereof is one as mentioned above or mentioned later.

(Other Additive)

Furthermore, the polyamide composition of the second embodiment may contain other additive as the need arises. Examples of the other additive include the same materials as those exemplified in "Other Additive" in the description of the polyamide composition of the first embodiment.

So long as the effects of the present invention are not impaired, the content of the aforementioned other additive is not particularly limited.

As one preferred aspect of the polyamide composition of the second embodiment, a total content of the respective components of the aforementioned (B1), (B3), (B4), (B5), (B6), (C), and (D) and the aforementioned other additive is preferably 0.02 to 200 parts by mass, and more preferably 0.03 to 100 parts by mass based on 100 parts by mass of the polyamide (A).

As for the polyamide composition of the second embodiment, a tensile breaking strength at 23°C on the occasion of injection molding into a 4 mm-thick test specimen is preferably 70 MPa or more, more preferably 80 MPa or more, and still more preferably 90 MPa or more, and it may also be 100 MPa or more. Specifically, the foregoing tensile breaking strength can be determined by the method described in the section of Examples.

As for the polyamide composition of the second embodiment, a heat distortion temperature on the occasion of injection molding into a 4 mm-thick test specimen is preferably 130°C or higher, more preferably 140°C or higher, and still more preferably 145°C or higher, and it may also be 150°C or higher. Specifically, the heat distortion temperature can be determined by the method described in the section of Examples.

As for the polyamide composition of the second embodiment, a coefficient of water absorption when injection molding into a 4 mm-thick test specimen and then immersing this in water at 23°C for 168 hours is preferably 0.4% or less, more preferably 0.3% or less, and still more preferably 0.28% or less, and it may also be 0.27% or less, and further 0.26% or less, on the basis of the weight of the test specimen before the immersion. More specifically, the foregoing coefficient of water absorption can be determined by the method described in the section of Examples.

As for the polyamide composition of the second embodiment, a retention of tensile breaking strength when injection molding into a 4 mm-thick test specimen and then immersing this in an antifreeze (an aqueous solution obtained by two fold dilution of "SUPER LONGLIFE COOLANT" (Pink), manufactured by Toyota Motor Corporation) at 130°C for 500 hours is preferably 50% or more, and more preferably 80% or more, and it may also be 90% or more, 95% or more, and further 98% or more, on the basis of the tensile breaking strength before the immersion. More specifically, the

foregoing retention of tensile breaking strength can be determined by the method described in the section of Examples.

As for the polyamide composition of the second embodiment, a retention of tensile breaking strength when injection molding into a 2 mm-thick test specimen and then allowing it to stand within a drying machine at 120°C for 500 hours is preferably 80% or more, and more preferably 90% or more, and it may also be 95% or more, 98% or more, and further 100%, on the basis of the tensile breaking strength before standing. More specifically, the foregoing retention of tensile breaking strength can be determined by the method described in the section of Examples.

<Third Embodiment>

A polyamide composition of a third embodiment contains the polyamide (A), a copper compound (B3), and a metal halide (B4).

As mentioned above, in view of the fact that the polyamide (A) contains the dicarboxylic acid unit composed mainly of a naphthalenedicarboxylic acid unit and the diamine unit composed mainly of a branched aliphatic diamine unit, it is more excellent in various physical properties including chemical resistance, and even in the polyamide composition of the third embodiment containing the polyamide (A), the copper compound (B3), and the metal halide (B4), the aforementioned excellent properties are kept, and in addition thereto, excellent high-temperature heat resistance is revealed. In addition, various molded articles obtained from the foregoing polyamide composition are able to hold the excellent properties of the foregoing polyamide composition.

[Copper Compound (B3) and Metal Halide (B4)]

In view of the fact that the polyamide composition of the third embodiment contains the copper compound (B3) and the metal halide (B4), a polyamide composition which does not impair the properties of the polyamide (A) that is excellent in chemical resistance, low water-absorbing properties, mechanical properties, such as tensile physical properties, and fluidity and which further has high-temperature heat resistance, specifically excellent heat aging resistance and heat resistance at a high temperature of 150°C or higher can be obtained. The copper compound (B3) and the metal halide (B4) are hereunder further described.

• Copper compound (B3)

Examples of the copper compound (B3) include a copper halide, copper acetate, copper propionate, copper benzoate, copper adipate, copper terephthalate, copper isophthalate, copper salicylate, copper nicotinate, copper stearate, and a copper complex salt coordinated with a chelating agent, such as ethylenediamine and ethylenediaminetetraacetic acid. Examples of the copper halide include copper iodide; copper bromide, such as cuprous bromide and cupric bromide; and copper chloride, such as cuprous chloride. Of these copper compounds, from the viewpoint that the heat aging resistance is excellent, and metal corrosion of a screw or cylinder part during extrusion can be inhibited, at least one selected from the group consisting of a copper halide and copper acetate is preferred; at least one selected from the group consisting of copper iodide, copper bromide, copper chloride, and copper acetate is more preferred; and at least one selected from the group consisting of copper iodide, copper bromide, and copper acetate is still more preferred. The copper compound (B3) may be used alone or may be used in combination of two or more thereof.

The content of the copper compound (B3) in the polyamide composition of the third embodiment is preferably 0.01 parts by mass or more and 1 part by mass or less, more preferably 0.02 parts by mass or more and 0.5 parts by mass or less, and still more preferably 0.06 parts by mass or more and 0.4 parts by mass or less based on 100 parts by mass of the polyamide (A). When the content of the copper compound (B3) is allowed to fall within the foregoing range, the high-temperature heat resistance, such as heat aging resistance, can be improved while inhibiting a lowering of tensile physical properties of the resulting polyamide composition, and furthermore, copper deposition and metal corrosion during molding can also be inhibited.

• Metal halide (B4)

As the metal halide (B4), a metal halide not corresponding to the copper compound (B3) can be used, and a salt of a metal element belonging to the group 1 or group 2 of the element periodic table with a halogen is preferred. Examples thereof include potassium iodide, potassium bromide, potassium chloride, sodium iodide, and sodium chloride. Of these, from the viewpoint that the resulting polyamide composition is excellent in high-temperature heat resistance, such as heat aging resistance, and is able to inhibit the metal corrosion, etc., at least one selected from the group consisting of potassium iodide and potassium bromide is preferred, and potassium iodide is more preferred. The metal halide (B4) may be used alone or may be used in combination of two or more thereof.

The content of the metal halide (B4) in the polyamide composition of the third embodiment is preferably 0.05

parts by mass or more and 20 parts by mass or less, more preferably 0.2 parts by mass or more and 10 parts by mass or less, and still more preferably 0.5 parts by mass or more and 9 parts by mass or less based on 100 parts by mass of the polyamide (A). When the content of the metal halide (B4) is allowed to fall within the aforementioned range, the high-temperature heat resistance, such as heat aging resistance, can be improved while inhibiting a lowering of tensile physical properties of the resulting polyamide composition, and furthermore, copper deposition and metal corrosion during molding can also be inhibited.

With respect to a proportion of the copper compound (B3) and the metal halide (B4) in the polyamide composition of the third embodiment, it is preferred to contain the copper compound (B3) and the metal halide (B4) in the polyamide composition such that a ratio (halogen/copper) of the total molar amount of the halogen to the total molar amount of copper is 2/1 to 50/1. The aforementioned ratio (halogen/copper) is preferably 3/1 or more, more preferably 4/1 or more, and still more preferably 5/1 or more, and it is preferably 45/1 or less, more preferably 40/1 or less, and still more preferably 30/1 or less. In the case where the ratio (halogen/copper) is the aforementioned lower limit or more, the copper deposition and the metal corrosion during molding can be more effectively inhibited. In the case where the ratio (halogen/copper) is the aforementioned upper limit or less, the corrosion of a screw of a molding machine, etc. can be more effectively inhibited without impairing the mechanical properties, such as tensile physical properties of the resulting polyamide composition.

The copper compound (B3) and the metal halide (B4) are used in combination from the viewpoint that the resulting polyamide composition is excellent in high-temperature heat resistance, such as heat aging resistance. A total content of the copper compound (B3) and the metal halide (B4) is preferably 0.06 parts by mass or more, more preferably 0.1 parts by mass or more, still more preferably 0.3 parts by mass or more, and yet still more preferably 0.5 parts by mass or more based on 100 parts by mass of the polyamide (A). In addition, the total content of the copper compound (B3) and the metal halide (B4) is preferably 21 parts by mass or less, more preferably 10 parts by mass or less, and still more preferably 5 parts by mass or less, and it can also be 3 parts by mass or less, and 2 parts by mass or less, based on 100 parts by mass of the polyamide (A).

So long as the total content of the copper compound (B3) and the metal halide (B4) falls within the aforementioned range, the high-temperature heat resistance, such as heat aging resistance, can be improved while effectively inhibiting the problem, such as metal corrosion of the polyamide composition.

A total content of the polyamide (A), the copper compound (B3), and the metal halide (B4) in the polyamide composition of the third embodiment is more preferably 90% by mass or more, and still more preferably 92% by mass or more, and it may also be 95% by mass or more, and 97% by mass or more. In addition, though the total content of the polyamide (A), the copper compound (B3), and the metal halide (B4) in the polyamide composition of the third embodiment may be 100% by mass, taking into consideration the addition amount of other additive as mentioned later, which is added as the need arises, it is preferably less than 100% by mass, and it can also be 99.5% by mass or less, and 99% by mass or less.

So long as the total content of the polyamide (A), the copper compound (B3), and the metal halide (B4) in the polyamide composition of the third embodiment falls within the aforementioned range, excellent physical properties of the polyamide composition, such as high-temperature heat resistance and chemical resistance, are readily revealed.

[Arbitrary Component]

In the polyamide composition of the third embodiment, in addition to the aforementioned polyamide (A), copper compound (B3), and metal halide compound (B4), the aforementioned polyolefin (B1) and organic heat stabilizer (B2) (for example, a phenol-based heat stabilizer, a phosphorus-based heat stabilizer, a sulfur-based heat stabilizer, and an amine-based heat stabilizer) and a halogen-based flame retarder (B5) (for example, a brominated polymer), a halogen-free flame retarder (B6), a filler (C) (for example, an inorganic or organic fibrous filler, such as a glass fiber, a carbon fiber, and a wholly aromatic polyamide fiber; a powdered filler, such as wollastonite, silica, silica alumina, alumina, titanium dioxide, potassium titanate, magnesium hydroxide, molybdenum disulfide, carbon nanotube, graphene, polytetrafluoroethylene, and ultra-high molecular weight polyethylene; and a flaky filler, such as hydrotalcite, glass flake, mica, clay, montmorillonite, and kaolin), and a flame retardant promoter (D), as mentioned later, may be contained as the need arises. These may be used alone or may be used in combination of two or more thereof.

So long as the effects of the present invention not impaired, though the content of each of these components (B1), (B2), (B5), (B6), (C), and (D) in the polyamide composition of the third embodiment is not particularly limited, a preferred range thereof is one as mentioned above or mentioned later.

(Other Additive)

Furthermore, the polyamide composition of the third embodiment may contain other additive as the need arises. Examples of the other additive include the same materials as those exemplified in "Other Additive" in the description of

the polyamide composition of the first embodiment.

So long as the effects of the present invention are not impaired, the content of the aforementioned other additive is not particularly limited.

In particular, as the dispersant which is used as the other additive, those which are able to disperse the copper compound (B3) and the metal halide (B4) in the polyamide (A) can be preferably used. Examples of the dispersant include a higher fatty acid, such as lauric acid; a higher fatty acid metal salt composed of a higher fatty acid and a metal, such as aluminum; a higher fatty acid amide, such as ethylene bisstearylamide; a wax, such as a polyethylene wax; and an organic compound having at least one amide group.

As one preferred aspect of the polyamide composition of the third embodiment, a total content of the respective components of the aforementioned (B1), (B2), (B5), (B6), (C), and (D) and the aforementioned other additive is preferably 0.02 to 200 parts by mass, and more preferably 0.03 to 100 parts by mass based on 100 parts by mass of the polyamide (A).

<Fourth Embodiment>

A polyamide composition of a fourth embodiment contains the polyamide (A) and a halogen-based flame retardant (B5).

As mentioned above, in view of the fact that the polyamide (A) contains the dicarboxylic acid unit composed mainly of a naphthalenedicarboxylic acid unit and the diamine unit composed mainly of a branched aliphatic diamine unit, it is more excellent in various physical properties including chemical resistance, and even in the polyamide composition of the fourth embodiment containing the polyamide (A) and the halogen-based flame retardant (B5), the aforementioned excellent properties are kept, and in addition thereto, excellent flame retardance is revealed. In addition, various molded articles obtained from the foregoing polyamide composition are able to hold the excellent properties of the foregoing polyamide composition.

[Halogen-based Flame Retardant (B5)]

The halogen-based flame retardant (B5) which is contained in the polyamide composition of the fourth embodiment is not particularly restricted, known compounds can be used as the flame retardant containing a halogen element. Examples of the halogen-based flame retardant (B5) include a bromine-based flame retardant (B5-1) and a chlorine-based flame retardant (B5-2), with the bromine-based flame retardant (B5-1) being preferred. These may be used alone or may be used in combination of two or more thereof.

(Bromine-based Flame Retardant (B5-1))

Examples of the bromine-based flame retardant include hexabromocyclododecane, decabromodiphenyl oxide, octabromodiphenyl oxide, tetrabromobisphenol A, bis(tribromophenoxy)ethane, bis(pentabromophenoxy)ethane, a tetrabromobisphenol A epoxy resin, tetrabromobisphenol A carbonate, ethylene(bistetrabromophthal)imide, ethylenebispentabromodiphenyl, tris(tribromophenoxy)triazine, bis(dibromopropyl)tetrabromobisphenol A, bis(dibromopropyl)tetrabromobisphenol S, a brominated polyphenylene ether (inclusive of poly(di)bromophenylene ether, etc.), a brominated polystyrene (inclusive of a polydibromostyrene, a polytribromostyrene, and a crosslinked brominated polystyrene, etc.; a modified brominated polystyrene having epoxy acrylate, etc. added thereto may also be included), a brominated crosslinked aromatic polymer, a brominated epoxy resin, a brominated phenoxy resin, a brominated styrene-maleic anhydride polymer, tetrabromobisphenol S, tris(tribromoneopentyl)phosphate, polybromotrimethylphenylindane, and tris(dibromopropyl)-isocyanurate.

From the viewpoint of lowering the amount of generation of a corrosive gas during melt processing, such as extrusion and molding, and improving flame retardance and mechanical properties of electrical components or electronic components, a brominated polyphenylene ether and a brominated polystyrene are preferred, and a brominated polystyrene is more preferred as the bromine-based flame retardant (B5-1).

The brominated polyester can be, for example, produced by a method of polymerizing a styrene monomer to produce a polystyrene and then, brominating a benzene ring of the polystyrene; or a method of polymerizing a brominated styrene monomer (e.g., bromostyrene, dibromostyrene, and tribromostyrene).

The bromine content in the brominated polystyrene is preferably 55 to 75% by mass. By setting the bromine content to 55% by mass or more, the quantity of bromine necessary for flame retardation can be satisfied by the small content of the brominated polystyrene, and a lowering of mechanical properties of the polyamide (A) is inhibited, so that a polyamide composition which is excellent in mechanical properties and heat resistance can be obtained. In addition, by setting the bromine content to 75% by mass or less, the thermal decomposition is hardly caused during melt processing, such as extrusion and molding, and the gas generation, etc. can be inhibited, so that a polyamide composition which is excellent in heat discoloration resistance can be obtained.

(Chlorine-based Flame Retardant (B5-2))

Examples of the chlorine-based flame retardant include a chlorinated paraffin, a chlorinated polyethylene, dodecachloropentacyclooctadeca-7,15-diene ("Dechlorane Plus 25", manufactured by Occidental Chemical Corporation), and HET anhydride.

(Content of Halogen-based Flame Retardant, Etc.)

It is preferred that the polyamide composition of the fourth embodiment contains 5 parts by mass or more and 100 parts by mass or less of the aforementioned halogen-based flame retardant (B5) based on 100 parts by mass of the polyamide (A). The content of the halogen-based flame retardant (B5) is more preferably 10 parts by mass or more, and still more preferably 30 parts by mass or more based on 100 parts by mass of the polyamide (A). In addition, the content of the halogen-based flame retardant (B5) is more preferably 75 parts by mass or less, still more preferably 70 parts by mass or less, and yet still more preferably 60 parts by mass or less based on 100 parts by mass of the polyamide (A).

By setting the content of the halogen-based flame retardant (B5) to 5 parts by mass or more, a polyamide composition which is excellent in flame retardance can be obtained. Alternatively, by setting the content of the halogen-based flame retardant (B5) to 100 parts by mass or less, the generation of a decomposed gas during melt kneading, a lowering of fluidity (particularly, thin-wall fluidity) during molding processing, and attachment of a pollutant to a molding die can be inhibited, and furthermore, a lowering of mechanical properties or appearance of a molded article can be inhibited. In the case of using a plurality of the halogen-based flame retardants (B5), the sum total thereof may fall within the aforementioned range.

A total content of the polyamide (A) and the halogen-based flame retardant (B5) in the polyamide composition of the fourth embodiment is more preferably 50% by mass or more, and still more preferably 55% by mass or more. In addition, though the total content of the polyamide (A) and the halogen-based flame retardant (B5) in the polyamide composition of the fourth embodiment may be 100% by mass, taking into consideration the addition amount of a filler (C), a flame retardant promoter (D), and other additive as mentioned later, each of which is added as the need arises, it is preferably less than 100% by mass, and it can also be 90% by mass or less, 80% by mass or less, and 70% by mass or less.

In accordance with the investigations made by the present inventors, with respect to the polyamide constituting the polyamide composition, it is proved that in comparison with the case where more than 40 mol% of the dicarboxylic acid unit constituting the polyamide is a terephthalic acid unit, in the case where more than 40 mol% of the dicarboxylic acid unit constituting the polyamide is the naphthalenedicarboxylic acid unit, the flame retardance tends to be more improved due to a combination of the halogen-based flame retardant and the polyamide. It is also proved that this tendency appears regardless of a ratio of the linear aliphatic diamine unit to the branched aliphatic diamine unit in the diamine unit constituting the polyamide. In consequence, for example, assuming the application in which only importance of specified physical properties of a semi-aromatic polyamide is required, in the case where a polyamide composition is prepared by using a polyamide in which in the diamine unit, a ratio of the branched aliphatic diamine unit is larger than a ratio of the linear aliphatic diamine unit and the halogen-based flame retardant, it is possible to provide a polyamide composition in which both the aforementioned specified physical properties and flame retardance are made compatible with each other.

[Filler (C)]

The polyamide composition of the fourth embodiment may contain a filler (C). By using the filler (C), a polyamide composition which is excellent in flame retardance, heat resistance, moldability, and mechanical strength in terms of a thin wall can be obtained.

As the filler (C), those having various forms, such as a fibrous form, a platy form, an acicular form, a powdered form, and a cloth-like form, can be used. Specifically, examples thereof include an inorganic or organic fibrous filler (C1), such as a glass fiber, a carbon fiber, a wholly aromatic polyamide fiber (aramid fiber), a liquid crystal polymer (LCP) fiber, a gypsum fiber, a brass fiber, a ceramic fiber, and a boron whisker fiber; a platy filler, such as a glass flake, mica, and talc; an acicular filler (C2), such as a potassium titanate whisker, an aluminum borate whisker, a calcium carbonate whisker, a magnesium sulfate whisker, wollastonite, sepiolite, xonotlite, and a zinc oxide whisker; a powdered filler, such as silica, silica alumina, alumina, barium carbonate, magnesium carbonate, aluminum nitride, boron nitride, potassium titanate, titanium oxide, magnesium hydroxide, aluminum silicate (e.g., kaolin, clay, pyrophyllite, and bentonite), calcium silicate, magnesium silicate (attapulgite), aluminum borate, calcium sulfate, barium sulfate, magnesium sulfate, asbestos, glass beads, carbon black, graphene, graphite, carbon nanotube, silicon carbide, sericite, hydrotalcite, montmorillonite, molybdenum disulfide, a ultra-high molecular weight polyethylene particle, a phenol resin particle, a crosslinked styrene-based resin particle, and a crosslinked acrylic resin particle; and a cloth-like fibber, such as a glass cloth. These may be used alone or may be used in combination of two or more thereof.

For the purpose of enhancing the dispersibility or adhesiveness in the polyamide (A), the surface of the filler (C) may be subjected to a surface treatment with a silane coupling agent, a titanium coupling agent, a polymer compound, such as an acrylic resin, a urethane resin, and an epoxy resin, or other low-molecular weight compound.

Among the fillers (C), at least one selected from the group consisting of the fibrous filler (C1) and the acicular filler (C2) is preferred from the standpoint that the costs are low, and molded articles having a high mechanical strength are obtained. From the viewpoint of high strength and low costs, the fibrous filler (C1) is preferred, and a glass fiber or a carbon fiber is more preferred. From the viewpoint that molded articles having high surface smoothness are obtained, an acicular filler (C2) is preferred.

As the fibrous filler (C1) and the acicular filler (C2), at least one selected from the group consisting of a glass fiber, a carbon fiber, wollastonite, a potassium titanium whisker, a calcium carbonate whisker, and an aluminum borate whisker is preferred; at least one selected from the group consisting of a glass fiber, a carbon fiber, and wollastonite is more preferred; and at least one selected from the group consisting of a glass fiber and a carbon fiber is still more preferred.

Although an average fiber length of the fibrous filler (C1) is typically about 0.1 to 10 mm, from the viewpoint of high-temperature strength, heat resistance, and mechanical strength of the polyamide composition, it is preferably 0.5 to 6 mm, and more preferably 1 to 6 mm. In addition, though an average fiber diameter of the fibrous filler (C1) is typically about 0.5 to 250 pm, from the viewpoint of a favorable contact area with the polyamide (A) and mechanical strength of a molded article, it is preferably 3 to 100 pm, and more preferably 3 to 30 μm.

The average fiber length and the average fiber diameter of the fibrous filler (C1) can be determined through an image analysis with an electron microscope by measuring a fiber length and a fiber diameter of each of arbitrarily selected 400 fibers of the fibrous filler (C1) and calculating each of mass average values thereof.

The average fiber length and the average fiber diameter of the fibrous filler (C1) in the polyamide composition or the molded article formed by molding the polyamide composition can be determined by, for example, dissolving the polyamide composition or the molded article in an organic solvent, extracting the fibrous filler (C1), and undergoing an image analysis with an electron microscope in the same manner as mentioned above.

Examples of a cross-sectional shape of each of the fibrous filler (C1) and the acicular filler (C2) include a rectangle, an oval close to a rectangle, an ellipse, a cocoon shape, and a cocoon shape in which a central part thereof in the longitudinal direction is constricted. Above all, the cross-sectional shape of each of the fibrous filler (C1) and the acicular filler (C2) is preferably a rectangle, an oval close to a rectangle, an ellipse, or a cocoon shape.

The fibrous filler (C1) may be subjected to a surface treatment with a silane coupling agent, a titanate-based coupling agent, or the like as the need arises. Although the silane coupling agent is not particularly restricted, examples thereof include an aminosilane-based coupling agent, such as γ-aminopropyltriethoxysilane, γ-aminopropyltrimethoxysilane, and N-β-(aminoethyl)-γ-aminopropylmethyldimethoxysilane; a mercaptosilane-based coupling agent, such as γ-mercaptopropyltrimethoxysilane and γ-mercaptopropyltriethoxysilane; an epoxysilane-based coupling agent; and a vinylsilane-based coupling agent. These silane coupling agents may be used alone or may be used in combination of two or more thereof. Of the aforementioned silane coupling agents, an aminosilane-based coupling agent is preferred.

The fibrous filler (C1) may be subjected to a treatment with a sizing agent as the need arises. Examples of the sizing agent include a copolymer containing, as structural units, a carboxylic acid anhydride-containing unsaturated vinyl monomer unit and an unsaturated vinyl monomer unit excluding the carboxylic acid anhydride-containing unsaturated vinyl monomer, an epoxy compound, a polyurethane resin, a homopolymer of acrylic acid, a copolymer of acrylic acid with other copolymerizable monomer, and a salt thereof with a primary, secondary, or tertiary amine. These sizing agents may be used alone or may be used in combination of two or more thereof.

When the fibrous filler (C1) is a glass fiber, as a specific composition, there are exemplified an E-glass composition, a C-glass composition, an S-glass composition, and an alkali-resistant glass composition. In addition, though a tensile strength of the glass fiber is arbitrary, it is typically 290 kg/mm$^2$ or more. Above all, an E-glass is preferred from the viewpoint of easiness of availability. It is preferred that such a glass fiber is subjected to the surface treatment as mentioned above, and its attachment amount is typically 0.01% by mass or more relative to the mass of the glass fiber (total amount of the glass fiber and the surface treating agent).

The content of the filler (C) is preferably 0.1 parts by mass or more and 200 parts by mass or less, more preferably 1 part by mass or more and 180 parts by mass or less, and still more preferably 5 parts by mass or more and 150 parts by mass or less based on 100 parts by mass of the polyamide (A). By setting the content of the filler (C) to 0.1 parts by mass or more based on 100 parts by mass of the polyamide (A), toughness, mechanical strength, and the like of the polyamide composition are improved, and by setting the foregoing content to 200 parts by mass or less, a polyamide composition which is excellent in moldability is provided.

[Flame Retardant Promoter (D)]

The polyamide composition of the fourth embodiment may contain a flame retardant promoter (D). By using the flame retardant promoter (D) in combination with the halogen-based flame retardant (B5), the polyamide composition of the fourth embodiment and the molded article made of the same can exhibit more excellent flame retardance.

Examples of the flame retardant promoter (D) include antimony-based compounds, such as an antimony oxide, e.g., diantimony trioxide, diantimony tetroxide, and diantimony pentoxide, and an antimonic acid salt, e.g., sodium antimonate; melamine-based compounds, such as melamine orthophosphate, melamine pyrophosphate, melamine borate, and melamine polyphosphate; tin oxides, such as tin monoxide and tin dioxide; iron oxides, such as ferric oxide and γ-iron oxide; metal oxides, such as aluminum oxide, silicon oxide (silica), titanium oxide, zirconium oxide, manganese oxide, molybdenum oxide, cobalt oxide, bismuth oxide, chromium oxide, tin oxide, nickel oxide, copper oxide, and tungsten oxide; metal hydroxides, such as aluminum hydroxide; metal powders, such as aluminum, iron, titanium, manganese, zinc, molybdenum, cobalt, bismuth, chromium, tin, antimony, nickel, copper, and tungsten; metal carbonates, such as zinc carbonate, calcium carbonate, magnesium carbonate, and barium carbonate; metal borates, such as zinc borate, calcium borate, and aluminum borate; zinc stannates, such as tin zinc trioxide; and silicones. These may be used alone or may be used in combination of two or more thereof.

Among those mentioned above, at least one selected from the group consisting of antimony-based compounds, melamine-based compounds, metal oxides, metal hydroxides, metal borates, and zinc stannates is preferred; and at least one selected from the group consisting of diantimony trioxide, diantimony tetroxide, diantimony pentoxide, sodium antimonate, melamine orthophosphate, melamine pyrophosphate, melamine borate, melamine polyphosphate, aluminum oxide, aluminum hydroxide, zinc borate, and zinc stannates is more preferred.

It is preferred that the flame retardant promoter (D) is contained in a powdered form in the polyamide composition. An upper limit of an average particle diameter thereof is preferably 30 μm, more preferably 15 μm, still more preferably 10 μm, and most preferably 7 μm. On the other hand, a lower limit of the average particle diameter of the flame retardant promoter (D) is preferably 0.01 μm. In the case where the average particle diameter is 0.01 to 30 μm, the flame retardance of the resulting polyamide composition is improved.

In the case of containing the flame retardant promoter (D), its content is preferably 1 part by mass or more and 30 parts by mass or less, more preferably 1 part by mass or more and 25 parts by mass or less, and still more preferably 3 parts by mass or more and 20 parts by mass or less based on 100 parts by mass of the polyamide (A).

A total content of the polyamide (A), the halogen-based flame retardant (B5), the filler (C), and the flame retardant promoter (D) in the polyamide composition of the fourth embodiment is preferably 90% by mass or more, and more preferably 92% by mass or more, and it may also be 95% by mass or more, and 97% by mass or more. In addition, though the total content of the polyamide (A), the halogen-based flame retardant (B5), the filler (C), and the flame retardant promoter (D) in the polyamide composition of the fourth embodiment may be 100% by mass, taking into consideration the addition amount of other additive as mentioned later, which is added as the need arises, it is preferably less than 100% by mass, and it can also be 99.5% by mass or less, and 99% by mass or less.

So long as the total content of the polyamide (A), the halogen-based flame retardant (B5), the filler (C), and the flame retardant promoter (D) in the polyamide composition of the fourth embodiment falls within the aforementioned range, excellent physical properties of the polyamide composition, such as flame retardance, are readily revealed.

[Arbitrary Component]

In the polyamide composition of the fourth embodiment, in addition to the aforementioned polyamide (A) and halogen-based flame retardant (B5), and the filler (C) and the flame retardant promoter (D) which are used as the need arises, the aforementioned polyolefin (B1), the organic heat stabilizer (B2) (for example, a phenol-based heat stabilizer, a phosphorus-based heat stabilizer, a sulfur-based heat stabilizer, and an amine-based heat stabilizer), the copper compound (B3), and the metal halide (B4) may be contained as the need arises. These may be used alone or may be used in combination of two or more thereof.

Although the content of each of these (B1), (B2), (B3), and (B4) in the polyamide composition of the fourth embodiment is not particularly limited so long as the effects of the present invention are not impaired, a preferred range thereof is one as mentioned above.

(Other Additive)

Furthermore, the polyamide composition of the fourth embodiment may contain other additive as the need arises. Examples of the other additive include the same materials as those exemplified in "Other Additive" in the description of the polyamide composition of the first embodiment.

So long as the effects of the present invention are not impaired, the content of the aforementioned other additive

is not particularly limited.

As one preferred aspect of the polyamide composition of the fourth embodiment, a total content of the aforementioned (B1), (B2), (B3), and (B4) and the aforementioned other additive is preferably 0.02 to 200 parts by mass, and more preferably 0.03 to 100 parts by mass based on 100 parts by mass of the polyamide (A).

<Fifth Embodiment>

A polyamide composition of a fifth embodiment contains the polyamide (A) and a halogen-free flame retardant (B6).

As mentioned above, in view of the fact that the polyamide (A) contains the dicarboxylic acid unit composed mainly of a naphthalenedicarboxylic acid unit and the diamine unit composed mainly of a branched aliphatic diamine unit, it is more excellent in various physical properties including chemical resistance, and even in the polyamide composition of the fifth embodiment containing the polyamide (A) and the halogen-free flame retardant (B6), the aforementioned excellent properties are kept, and in addition thereto, excellent flame retardance is revealed. In addition, the foregoing polyamide composition is small in environmental load. Furthermore, various molded articles obtained from the foregoing polyamide composition are able to hold the excellent properties of the foregoing polyamide composition.

[Halogen-free Flame Retardant (B6)]

The polyamide composition of the fifth embodiment contains the halogen-free flame retardant (B6). In view of the fact that the halogen-free flame retardant (B6) is contained, the flame retardance of the polyamide composition can be improved while reducing the environmental load.

The halogen-free flame retardant (B6) is not particularly restricted, and known compounds can be used as the flame retardant not containing a halogen element. As the halogen-free flame retardant (B6), a phosphorus-based flame retardant containing a phosphorus element can be preferably used. More specifically, examples thereof include red phosphorus-based flame retardant, a phosphoric acid ester-based flame retardant, a phosphoric acid amide-based flame retardant, a (poly)phosphoric acid salt-based flame retardant, a phosphazene-based flame retardant, and a phosphine-based flame retardant. Of these, a phosphine-based flame retardant is preferred.

Examples of the phosphine-based flame retardant include a monophosphinic acid salt and a diphosphinic acid salt (the both will be hereinafter occasionally named generically as "phosphinic acid salt"). These may be used alone or may be used in combination of two or more thereof.

Examples of the monophosphinic acid salt include a compound represented by the following general formula (1).

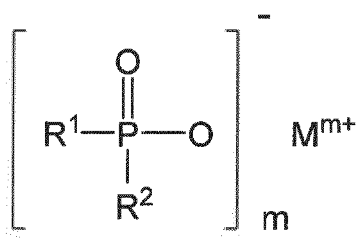

(1)

Examples of the diphosphinic acid salt include a compound represented by the following general formula (2).

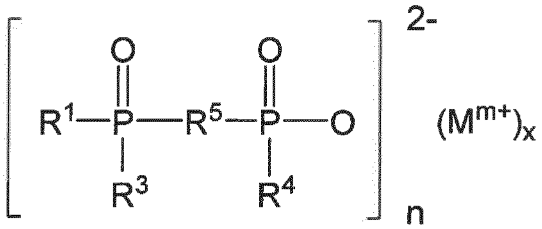

(2)

In the general formulae (1) and (2), $R^1$, $R^2$, $R^3$, and $R^4$ each independently represent an alkyl group having 1 to 6 carbon atoms, an aryl group having 6 to 12 carbon atoms, or an arylalkyl group having 7 to 20 carbon atoms; $R^5$ represents an alkylene group having 1 to 10 carbon atoms, an arylene group having 6 to 10 carbon atoms, an alkylarylene group having 7 to 20 carbon atoms, or an arylalkylene group having 7 to 20 carbon atoms; M represents calcium (ion), magnesium (ion), aluminum (ion), or zinc (ion); m is 2 or 3; n is 1 or 3; and x is 1 or 2.

Examples of the alkyl group include a linear or branched saturated aliphatic group. The aryl group may be unsubstituted or substituted with a substituent of every kind, and examples thereof include a phenyl group, a benzyl group, an o-toluyl group, and a 2,3-xylyl group.

The phosphinic acid salt can be produced in an aqueous solution by using phosphinic acid and a metal component, such as a metal carbonate, a metal hydroxide, and a metal oxide, as described in EP 699708 A, JP 8-73720 A, and so on. Although such a compound is typically a monomeric compound, a polymeric phosphinic acid salt having a degree of condensation of 1 to 3 due to the environment depending upon a reaction condition is occasionally contained.

Examples of the monophosphinic acid and the diphosphinic acid each constituting the phosphinic acid salt include dimethylphosphinic acid, ethylmethylphosphinic acid, diethylphosphinic acid, methyl-n-propylphosphinic acid, methanedi(methylphosphinic acid), benzene-1,4-di(methylphosphinic acid), methylphenylphosphinic acid, and diphenylphosphinic acid.

Examples of the metal component constituting the phosphinic acid salt include a calcium ion, a magnesium ion, an aluminum ion, and a zinc ion.

Specifically, examples of the phosphinic acid salt include calcium dimethylphosphinate, magnesium dimethylphosphinate, aluminum dimethylphosphinate, zinc dimethylphosphinate, calcium ethylmethylphosphinate, magnesium ethylmethylphosphinate, aluminum ethylmethylphosphinate, zinc ethylmethylphosphinate, calcium diethylphosphinate, magnesium diethylphosphinate, aluminum diethylphosphinate, zinc diethylphosphinate, calcium methyl-n-propylphosphinate, magnesium methyl-n-propylphosphinate, aluminum methyl-n-propylphosphinate, zinc methyl-n-propylphosphinate, calcium methylenebis(methylphosphinate), magnesium methylenebis(methylphosphinate), aluminum methylenebis(methylphosphinate), zinc methylenebis(methylphosphinate), calcium phenylene-1,4-bis(methylphosphinate), magnesium phenylene-1,4-bis(methylphosphinate), aluminum phenylene-1,4-bis(methylphosphinate), zinc phenylene-1,4-bis(methylphosphinate), calcium methylphenylphosphinate, magnesium methylphenylphosphinate, aluminum methylphenylphosphinate, zinc methylphenylphosphinate, calcium diphenylphosphinate, magnesium diphenylphosphinate, aluminum diphenylphosphinate, and zinc diphenylphosphinate.

Above all, from the viewpoint of flame retardance and electric characteristics of the resulting polyamide composition, and easiness of availability of the phosphinic acid salt, calcium dimethylphosphinate, aluminum dimethylphosphinate, zinc dimethylphosphinate, calcium ethylmethylphosphinate, aluminum ethylmethylphosphinate, zinc ethylmethylphosphinate, calcium diethylphosphinate, aluminum diethylphosphinate, and zinc diethylphosphinate are preferred. These may be used alone or may be used in combination of two or more thereof.

As for the phosphinic acid salt, from the standpoint of mechanical properties (e.g., toughness and stiffness) of the polyamide composition and the molded article made of the same and appearance of the molded article, it is preferred to use a powder pulverized such that an average particle diameter of the phosphinic acid salt is 100 $\mu$m or less, and it is more preferred to use a powder pulverized such that the foregoing average particle diameter is 50 $\mu$m or less. When a phosphinic acid salt in a powdered form having an average particle diameter of, for example, about 0.5 to 20 $\mu$m is used, not only a polyamide composition which is excellent in flame retardance is obtained, but also the stiffness of the molded article is improved, and therefore, such is preferred.

In this specification, the average particle diameter is a value as measured with a laser diffraction particle size distribution measuring apparatus.

The phosphinic acid salt is not always required to be completely pure, but it may contain an unreacted product or a by-product within a range where the effects of the present invention are not impaired.

The content of the halogen-free flame retardant (B6) is preferably 5 parts by mass or more, more preferably 10 parts by mass or more, still more preferably 20 parts by mass or more, and yet still more preferably 25 parts by mass by more based on 100 parts by mass of the polyamide (A). In addition, the content of the halogen-free flame retardant (B6) is preferably 100 parts by mass or less, more preferably 75 parts by mass or less, still more preferably 70 parts by mass or less, yet still more preferably 50 parts by mass or less, and even yet still more preferably 30 parts by mass or less based on 100 parts by mass of the polyamide (A).

So long as the content of the halogen-free flame retardant (B6) is the aforementioned lower limit or more, a polyamide composition which is excellent in flame retardance can be provided. In addition, so long as the content of the halogen-free flame retardant (B6) is the aforementioned upper limit or less, the generation of a decomposed gas during melt kneading, a lowering of fluidity (particularly, thin-wall fluidity) during molding processing, and attachment of a pollutant to a molding die can be inhibited, and furthermore, a lowering of mechanical properties or appearance of a molded article can be inhibited. In the case of using a plurality of the halogen-free flame retardants (B6), the sum total thereof may fall within the aforementioned range.

A total content of the polyamide (A) and the halogen-free flame retardant (B6) in the polyamide composition of the fifth embodiment is preferably 50% by mass or more, and more preferably 55% by mass or more. In addition, though the total content of the polyamide (A) and the halogen-free flame retardant (B6) in the polyamide composition of the fifth embodiment may be 100% by mass, taking into consideration the addition amount of a filler (C) and other additive as mentioned later, each of which is added as the need arises, it is preferably less than 100% by mass, and it can also be

90% by mass or less, and 80% by mass or less.

In accordance with the investigations made by the present inventors, with respect to the polyamide constituting the polyamide composition, it is proved that in comparison with the case where more than 40 mol% of the dicarboxylic acid unit constituting the polyamide is a terephthalic acid unit, in the case where more than 40 mol% of the dicarboxylic acid unit constituting the polyamide is the naphthalenedicarboxylic acid unit, the flame retardance tends to be more improved due to a combination of the halogen-free flame retarder and the polyamide. It is also proved that this tendency appears regardless of a ratio of the linear aliphatic diamine unit to the branched aliphatic diamine unit in the diamine unit constituting the polyamide. In consequence, for example, assuming the application in which only importance of specified physical properties of a semi-aromatic polyamide is required, when a polyamide composition is prepared by using a polyamide in which in the diamine unit, a ratio of the branched aliphatic diamine unit is larger than a ratio of the linear aliphatic diamine unit and the halogen-free flame retardant, it is possible to provide a polyamide composition in which both the aforementioned specified physical properties and flame retardance are made compatible with each other.

[Filler (C)]

The polyamide composition of the fifth embodiment may contain a filler (C). By using the filler (C), a polyamide composition which is excellent in flame retardance, heat resistance, moldability, and mechanical strength in terms of a thin wall can be provided:

The filler (C) is synonymous with the filler (C) described in the polyamide composition of the fourth embodiment. In addition, a preferred aspect of the filler (C) and its content in the polyamide composition of the fifth embodiment are the same as those in the polyamide composition of the fourth embodiment.

A total content of the polyamide (A), the halogen-free flame retardant (B6), and the filler (C) in the polyamide composition of the fifth embodiment is preferably 90% by mass or more, and more preferably 92% by mass or more, and it may also be 95% by mass or more, and 97% by mass or more. In addition, though the total content of the polyamide (A), the halogen-free flame retardant (B6), and the filler (C) in the polyamide composition of the fifth embodiment may be 100% by mass, taking into consideration the addition amount of other additive as mentioned later, which is added as the need arises, it is preferably less than 100% by mass, and it can also be 99.5% by mass or less, and 99% by mass or less.

So long as the total content of the polyamide (A), the halogen-free flame retardant (B6), and the filler (C) in the polyamide composition of the fifth embodiment falls within the aforementioned range, excellent physical properties of the polyamide composition, such as flame retardance, are readily revealed.

[Arbitrary Component]

In the polyamide composition of the fifth embodiment, in addition to the aforementioned polyamide (A), halogen-free flame retardant (B6), and the filler (C) which is used as the need arises, the aforementioned polyolefin (B1), the organic heat stabilizer (B2) (for example, a phenol-based heat stabilizer, a phosphorus-based heat stabilizer, a sulfur-based heat stabilizer, and an amine-based heat stabilizer), the copper compound (B3), and the flame retardant promoter (D) may be contained as the need arises. These may be used alone or may be used in combination of two or more thereof.

Although the content of each of these (B1), (B2), (B3), and (D) in the polyamide composition of the fifth embodiment is not particularly limited so long as the effects of the present invention are not impaired, a preferred range thereof is one as mentioned above. Furthermore, so long as the excellent flame retardance and the low environmental load are not impaired, the polyamide composition of the fifth embodiment may contain a metal halide (B4).

Furthermore, the polyamide composition of the fifth embodiment may contain other additive as the need arises. Examples of the other additive include the same materials as those exemplified in "Other Additive" in the description of the polyamide composition of the first embodiment. In addition, it is preferred that the other additive does not contain a halogen, exclusive of a fluorine-based resin as a drip-preventing agent.

So long as the effects of the present invention are not impaired, the content of the other additive is not particularly limited.

As one preferred aspect of the polyamide composition of the fifth embodiment, a total content of the aforementioned (B1), (B2), (B3), (B4), and (D) and the aforementioned other additive is preferably 0.02 to 200 parts by mass, and more preferably 0.03 to 100 parts by mass based on 100 parts by mass of the polyamide (A).

<Production Method of Polyamide Composition>

A production method of the polyamide composition is not particularly restricted, and a method in which the polyamide and the aforementioned respective components are able to be uniformly mixed can be preferably adopted. As for mixing, typically, a method of undergoing melt kneading by using a single-screw extruder, a twin-screw extruder,

a kneader, a Banbury mixer, or the like is preferably adopted. Although a melt kneading condition is not particularly limited, examples thereof include a method in which melt kneading is performed in a temperature range of about 10 to 50°C higher than a melting point of the polyamide for about 1 to 30 minutes.

In the case of producing the polyamide composition of the third embodiment, examples of a method of containing the copper compound (B3) and the metal halide (B4) in the polyamide (A) include a method in which the copper compound (B3) and the metal halide (B4) are each added alone or as a mixture during a polymerization step of the polyamide (A) (hereinafter occasionally abbreviated as "production method 1"); and a method in which the polyamide (A), the copper compound (B3), and the metal halide (B4) are each added alone or as a mixture during melt kneading (hereinafter occasionally abbreviated as "production method 2").

In the case of adding the copper compound (B3) and the metal halide (B4), they may be each added in a solid form as it is, or may be each added in a state of an aqueous solution thereof. With respect to other additives, the same addition method as the production method 1 or production method 2 can be adopted. The step expressed by "during a polymerization step of the polyamide (A)" in the production method 1 may be any step until completion of the polymerization of the polyamide (A) from the raw material monomers and may be in any stage. In the case of performing the "melt kneading" of the production method 2, the aforementioned melt kneading which is typically performed may be adopted.

[Molded Article]

(Molding Method)

A molded article made of the polyamide (A) or the polyamide composition of the present invention can be obtained by performing molding by using the polyamide (A) or the polyamide composition through various molding methods, such as an injection molding method, a blow molding method, an extrusion molding method, a compression molding method, a stretch molding method, a vacuum molding method, a foam molding method, a rotation molding method, an impregnation method, a laser sintering method, and a fused deposition modeling method. Furthermore, a molded article can be obtained by subjecting the polyamide (A) or the polyamide composition of the present invention to composite molding with other polymer or the like.

(Application)

Examples of the aforementioned molded article include films, sheets, tubes, pipes, gears, cams, various housings, rollers, impellers, bearing retainers, spring holders, clutch parts, chain tensioners, tanks, wheels, connectors, switches, sensors, sockets, capacitors, hard disk components, jacks, fuse holders, relays, coil bobbins, resistors, IC housings, and LED reflectors.

In particular, the polyamide (A) or the polyamide composition of the present invention is suitable as an injection-molded member, a heat-resistant film, a tube for transporting various chemicals/liquid medicines, an intake pipe, a blow-by tube, and a substrate for a 3D printer, and so on, which are required to have high-temperature characteristics and chemical resistance. In addition, it can be suitably used as molded articles for automobiles where high heat resistance and chemical resistance are required, for example, interior and exterior parts of automobiles, parts in engine rooms, cooling system parts, sliding parts, electrical parts, etc. In addition to the above, the polyamide (A) or the polyamide composition of the present invention can be used as an electric component/electronic component or a molded article requiring heat resistance adapting to a surface mounting process. Such molded articles can be suitably used for surface mounting components of electrical/electronic components, surface mount connectors, sockets, camera modules, power supply components, switches, sensors, capacitor seats, hard disk components, relays, resistors, fuse holders, coil bobbins, IC housings, and so on.

Examples

The present invention is hereunder described more specifically by reference to Examples and Comparative Examples, but it should be construed that the present invention is not limited thereto.

Respective evaluations in the Examples and Comparative Examples were performed according to the methods described below.

Inherent viscosity

With respect to polyamides (samples) obtained in Examples 1 to 3 and Comparative Examples 1 to 4, the inherent viscosity (dL/g) as measured by using concentrated sulfuric acid as a solvent in a concentration of 0.2 g/dL at a temperature of 30°C was determined according to the following relational expression.

$$\eta_{inh} = [\ln(t_1/t_0)]/c$$

In the aforementioned relational expression, $\eta_{inh}$ represents an inherent viscosity (dL/g); to represents a time of flow (sec) of the solvent (concentrated sulfuric acid); ti represents a time of flow (sec) of the sample solution; and c represents a sample concentration (g/dL) in the sample solution (namely, 0.2 g/dL).

· Melting point and glass transition temperature

The melting point and the glass transition of each of polyamides obtained in Examples 1 to 3 and Comparative Examples 1 to 4 were measured using a differential scanning calorimetry analyzer "DSC7020", manufactured by Hitachi High-Tech Science Corporation.

The melting point was measured in conformity with ISO11357-3 (2011, Second Edition). Specifically, the sample (polyamide) was heated from 30°C to 340°C at a rate of 10°C/min in a nitrogen atmosphere and kept at 340°C for 5 minutes, thereby completely melting the sample. Thereafter, the resulting sample was cooled to 50°C at a rate of 10°C/min and kept at 50°C for 5 minutes. A peak temperature of a melt peak appearing when the sample was again subjected to temperature rise to 340°C at a rate of 10°C/min was defined as the melting point (°C), and in the case where plural melt peaks appeared, a peak temperature of the melt peak at the highest temperature side was defined as the melting point (°C).

The glass transition temperature (°C) was measured in conformity with IS011357-2 (2013, Second Edition). Specifically, the sample (polyamide) was heated from 30°C to 340°C at a rate of 20°C/min in a nitrogen atmosphere and kept at 340°C for 5 minutes, thereby completely melting the sample. Thereafter, the resulting sample was cooled to 50°C at a rate of 20°C/min and kept at 50°C for 5 minutes. A temperature of an inflection point appearing when the sample was again subjected to temperature rise to 200°C at a rate of 20°C/min was defined as the glass transition temperature (°C).

«Preparation of Test specimen»

Using an injection molding machine, manufactured by Sumitomo Heavy Industries, Ltd. (clamping force: 100 tons, screw diameter: ϕ32 mm), with respect to each of the polyamide compositions obtained in Examples 1 to 3 and Comparative Examples 1 to 4, a cylinder temperature of 20 to 30°C higher than the melting point of the polyamide was set, and the polyamide composition was molded using a T-runner mold under a condition of a mold temperature of 160°C for the polyamide compositions of Examples 1 to 3 and Comparative Examples 1 and 2 and under a condition of a mold temperature of 140°C for the polyamide compositions of Comparative Examples 3 and 4, respectively, thereby preparing a multi-purpose test specimen Type A1 (dumbbell type test specimen described in JIS K7139: 4 mm in thickness, 170 mm in total length, 80 mm in parallel length, 10 mm in parallel width).

· Weight increase rate after immersion in antifreeze

The multi-purpose test specimen Type A1 (4 mm in thickness) prepared in the aforementioned method was weighed, subsequently immersed in an antifreeze (an aqueous solution obtained by two fold dilution of "SUPER LONGLIFE COOLANT" (Pink), manufactured by Toyota Motor Corporation) at 130°C for 500 hours, and then again weighed, thereby determining a weight increase. This was divided by the weight before the immersion, thereby determining the weight increase rate (%) after immersion in antifreeze.

· Retention of tensile strength

Using the multi-purpose test specimen Type A1 (4 mm in thickness) prepared in the aforementioned method, a tensile test was performed at 23°C in conformity with ISO527-1 (2012, Second Edition), and a tensile breaking strength was calculated according to the following expression (1). This value was defined as an initial tensile breaking strength (a).

$$\text{Tensile breaking strength (MPa)} = [\text{Stress at break (N)}]/[\text{Cross-sectional area of test specimen (mm}^2)] \quad (1)$$

The test specimen prepared in the aforementioned method was immersed in an antifreeze (an aqueous solution obtained by two fold dilution of "SUPER LONGLIFE COOLANT" (Pink), manufactured by Toyota Motor Corporation) in a pressure resistant vessel, and the pressure resistance vessel was allowed to stand in a thermostat ("DE-303", manufactured by Mita Sangyo Co., Ltd.) set at 130°C for 500 hours. After elapsing 500 hours, the test specimen discharged from the thermostat was subjected to a tensile test in the same method as mentioned above, thereby measuring a tensile breaking strength (b) of the test specimen after heating.

The retention of tensile strength was determined according to the following expression (2), thereby evaluating the long-term heat resistance/chemical resistance.

$$\text{Retention of tensile strength (\%)} = \{(b)/(a)\} \times 100 \qquad (2)$$

· Tensile breaking strength and flexural strength

Using the multi-purpose test specimen Type A1 (4 mm in thickness) prepared in the aforementioned method, the tensile breaking strength (MPa) and flexural strength (MPa) at 23°C were measured with an autograph (manufactured by Shimadzu Corporation) in conformity with ISO527-1 (2012, Second Edition) regarding the tensile breaking strength and ISO178 (2001, Fourth Edition) regarding the flexural strength, respectively.

· Heat distortion temperature

A test specimen (4 mm in thickness, 80 mm in total length, 10 mm in width) was prepared by cutting from the multi-purpose test specimen Type A1 (4 mm in thickness) prepared in the aforementioned method and measured for the heat distortion temperature (°C) by using an HDT tester "S-3M", manufactured by Toyo Seiki Seisaku-sho, Ltd. in conformity with ISO75 (2013, Third Edition).

· Coefficient of water absorption

The multi-purpose test specimen Type A1 (4 mm in thickness) prepared in the aforementioned method was weighed. Subsequently, the test specimen was immersed in water to perform an immersion treatment at 23°C for 168 hours and then again weighed, thereby determining a weight increase. This was divided by the weight before the immersion, thereby determining the coefficient of water absorption (%).

«Preparation of Film»

Using LABO PLASTOMILL, manufactured by Toyo Seiki Seisaku-sho, Ltd. (ϕ20 mm, L/D = 25, full flight screw), with respect to each of the polyamide compositions obtained in Examples 1 to 3 and Comparative Example 1 to 4, a film having a thickness of 200 μm ± 20 μm was prepared with a T-die (150 mm in width, 0.4 mm in lip width) at cylinder temperature and die temperature of 20 to 30°C higher than the melting point of the polyamide.

· Storage modulus and loss tangent (α-relaxation temperature)

A stripe-shaped test specimen having a length of 40 mm and a width of 10 mm was cut out from the film prepared in the aforementioned method while setting the MD direction at the longitudinal side and measured in a tensile mode under a nitrogen stream at a temperature rise rate of 3°C/min and at 10.0 Hz by using "EXSTAR DMS6100", manufactured by Hitachi High-Tech Science Corporation in conformity with ISO6721:1994, thereby determining the storage modulus (GPa) at 23°C and 150°C. In addition, a peak temperature (°C) of the loss tangent was determined as the α-relaxation temperature (°C).

[Example 1]

(1) Production of Semi-Aromatic Polyamide (PA9N-1)

An autoclave having an internal volume of 40 liters was charged with 9,110.2 g (42.14 mols) of 2,6-naphthalenedicarboxylic acid, 6,853.7 g (43.30 mols) of a mixture of 1,9-nonanediamine and 2-methyl-1,8-octanediamine [former/latter = 4/96 (molar ratio)], 210.0 g (1.72 mols) of benzoic acid, 16.2 g (0.1% by mass relative to the total mass of the raw materials) of sodium hypophosphite monohydrate, and 8.3 liters of distilled water and then purged with nitrogen. The contents were agitated at 100°C for 30 minutes, and the temperature of the interior of the autoclave was subjected to temperature rise to 220°C over 2 hours. At this time, the pressure in the interior of autoclave increased to 2 MPa. Heating was continued for 5 hours at it was while keeping the pressure at 2 MPa, and the water vapor was gradually taken out to perform a reaction. Subsequently, the pressure was decreased to 1.3 MPa over 30 minutes, and the reaction

was further performed for one hour, thereby obtaining a prepolymer. The obtained prepolymer was dried at 100°C under reduced pressure for 12 hours and pulverized to a particle diameter of 2 mm or less. This was subjected to solid-phase polymerization at 230°C and 13 Pa (0.1 mmHg) for 10 hours, thereby obtaining a polyamide. This polyamide is abbreviated as "PA9N-1".

(2) Production of Polyamide Composition

The aforementioned PA9N-1 and other components (antioxidant, lubricating agent, and crystal nucleating agent) as shown below were previously mixed in a proportion shown in Table 1 and collectively charged in an upstream supply port of a twin-screw extruder ("TEM-26SS", manufactured by Toshiba Machine Co., Ltd.). The mixture was melt-kneaded and extruded at a cylinder temperature of 20 to 30°C higher than the melting point of the polyamide, followed by cooling and cutting. There was thus produced a polyamide composition in a pellet form.

[Example 2]

(1) Production of Semi-Aromatic polyamide (PA9N-2)

A polyamide was obtained in the same manner as in Example 1, except for using a mixture having a ratio of 1,9-nonanediamine and 2-methyl-1,8-octanediamine [former/latter = 15/85 (molar ratio)]. This polyamide is abbreviated as "PA9N-2".

(2) Production of Polyamide Composition

A polyamide composition in a pellet form was produced in the same manner as in Example 1, except for using the aforementioned PA9N-2 as the polyamide.

[Example 3]

(1) Production of Semi-Aromatic polyamide (PA9N-3)

A polyamide was obtained in the same manner as in Example 1, except for using, as the raw materials, 5,296.7 g (24.50 mols) of 2,6-naphthalenedicarboxylic acid, 3,772.8 g (25.18 mols) of a mixture of 1,6-hexanediamine and 2-methyl-1,8-octanediamine [former/latter = 20/80 (molar ratio)], 122.1 g (1.00 mol) of benzoic acid, 9.2 g (0.1% by mass relative to the total mass of the raw materials) of sodium hypophosphite monohydrate, and 4.1 liters of distilled water. This polyamide is abbreviated as "PA9N-3".

(2) Production of Polyamide Composition

A polyamide composition in a pellet form was produced in the same manner as in Example 1, except for using the aforementioned PA9N-3 as the polyamide.

[Comparative Example 1]

(1) Production of Semi-Aromatic polyamide (PA9N-4)

A polyamide was obtained in the same manner as in Example 1, except for using a mixture having a ratio of 1,9-nonanediamine and 2-methyl-1,8-octanediamine [former/latter = 50/50 (molar ratio)]. This polyamide is abbreviated as "PA9N-4".

(2) Production of Polyamide Composition

A polyamide composition in a pellet form was produced in the same manner as in Example 1, except for using the aforementioned PA9N-4 as the polyamide.

[Comparative Example 2]

(1) Production of Semi-Aromatic polyamide (PA9N-5)

A polyamide was obtained in the same manner as in Example 1, except for using a mixture having a ratio of 1,9-nonanediamine and 2-methyl-1,8-octanediamine [former/latter = 85/15 (molar ratio)]. This polyamide is abbreviated as "PA9N-5".

(2) Production of Polyamide Composition

A polyamide composition in a pellet form was produced in the same manner as in Example 1, except for using the aforementioned PA9N-5 as the polyamide.

[Comparative Example 3]

(1) Production of Semi-Aromatic polyamide (PA9T-1)

A polyamide was obtained by charging an autoclave having an internal volume of 40 liters with 8,190.7 g (49.30 mols) of terephthalic acid, 7,969.4 g (50.35 mols) of a mixture of 1,9-nonanediamine and 2-methyl-1,8-octanediamine [former/latter = 4/96 (molar ratio)], 171.0 g (1.40 mols) of benzoic acid, 16.3 g (0.1% by mass relative to the total mass of the raw materials) of sodium hypophosphite monohydrate, and 5.5 liters of distilled water, and then following the same procedures as in Example 1. This polyamide is abbreviated as "PA9T-1".

(2) Production of Polyamide Composition

A polyamide composition in a pellet form was produced in the same manner as in Example 1, except for using the aforementioned PA9T-1 as the polyamide.

[Comparative Example 4]

(1) Production of Semi-Aromatic polyamide (PA9T-2)

A polyamide was obtained in the same manner as in Comparative Example 3, except for using a mixture having a ratio of 1,9-nonanediamine and 2-methyl-1,8-octanediamine [former/latter = 80/20 (molar ratio)]. This polyamide is abbreviated as "PA9T-2".

(2) Production of Polyamide Composition

A polyamide composition in a pellet form was produced in the same manner as in Example 1, except for using the aforementioned PA9T-2 as the polyamide.

«Other Components»

· Antioxidant

"SUMILIZER GA-80", manufactured by Sumitomo Chemical Co., Ltd. · Lubricating agent
"LICOWAX OP", manufactured by Clariant Chemicals Ltd. · Crystal nucleating agent
"TALC ML112", manufactured by Fuji Talc Industrial Co., Ltd.

Table 1

| | | Unit | Fraction |
|---|---|---|---|
| Polyamide | | Parts by mass | 100 |
| Antioxidant | SUMILIZER GA-80 | Parts by mass | 0.2 |

(continued)

| | | Unit | Fraction |
|---|---|---|---|
| Lubricating agent | LICOWAX OP | Parts by mass | 0.2 |
| Crystal nucleating agent | TALC ML112 | Parts by mass | 0.1 |

Using the polyamide compositions obtained in the aforementioned Examples 1 to 3 and Comparative Examples 1 to 4, the aforementioned respective physical properties evaluations were performed. The results are shown in Table 2.

In Table 2, C9DA expresses the 1,9-nonanediamine unit, and MC8DA expresses the 2-methyl-1,8-octanediamine unit.

Table 2

| | | | Unit | Example | | | Comparative Example | | | |
|---|---|---|---|---|---|---|---|---|---|---|
| | | | | 1 | 2 | 3 | 1 | 2 | 3 | 4 |
| Polyamide | Composition | Polyamide used | - | PA9N-1 | PA9N-2 | PA9N-3 | PA9N-4 | PA9N-5 | PA9T-1 | PA9T-2 |
| | | Diamine component | - | C9DA/MC8DA (4/96) | C9DA/MC8DA (15/85) | C6DA/MC8DA (20/80) | C9DA/MC8DA (50/50) | C9DA/MC8DA (85/15) | C9DA/MC8DA (4/96) | C9DA/MC8DA 80/20 |
| | Physical properties | Content of end-capping agent (relative to diamine) | mol% | 3.8 | 3.6 | 3.8 | 3.7 | 3.8 | 2.7 | 2.5 |
| | | Inherent viscosity | dL/g | 0.90 | 0.91 | 0.94 | 0.91 | 0.83 | 1.00 | 1.21 |
| | | Melting point | °C | 317 | 314 | 297 | 281 | 294 | 283 | 300 |
| | | Glass transition temperature | °C | 140 | 140 | 140 | 136 | 136 | 123 | 120 |

(continued)

| | | | Unit | Example | | | Comparative Example | | | |
|---|---|---|---|---|---|---|---|---|---|---|
| | | | | 1 | 2 | 3 | 1 | 2 | 3 | 4 |
| Physical properties of molded article | Chemical resistance (weight increase rate) (at 130°C for 500 hours) | | % | 2.31 | 2.49 | 3.37 | 2.87 | 2.87 | 4.54 | 4.03 |
| | Chemical resistance (retention of tensile strength) (at 130°C for 500 hours) | | % | 99 | 82 | 84 | 75 | 45 | 41 | 78 |
| | Tensile breaking strength | | MPa | 93 | 112 | 90 | 105 | 71 | 87 | 81 |
| | Flexural strength | | MPa | 128 | 131 | 142 | 121 | 119 | 136 | 119 |
| | Heat distortion temperature | | °C | 153 | 148 | 144 | 147 | 139 | 125 | 127 |
| | Coefficient of water absorption (at 23°C for 168 hours) | | % | 0.25 | 0.27 | 0.29 | 0.29 | 0.33 | 0.37 | 0.38 |
| | Storage modulus | at 23°C | GPa | 3.0 | 3.7 | 3.3 | 2.9 | 2.8 | 3.1 | 2.7 |
| | | at 150°C | GPa | 1.8 | 2.1 | 1.9 | 1.4 | 1.4 | 1.0 | 0.9 |
| | $\alpha$-Relaxation temperature | | °C | 166 | 160 | 162 | 160 | 160 | 148 | 143 |

It is noted from Table 2 that the polyamide compositions of Examples 1 to 3 are low in the weight increase rate after immersion in antifreeze and excellent in the retention of tensile strength after immersion in antifreeze, as compared with those of Comparative Examples 1 to 4. It is noted from this fact that the polyamide of the present invention and the polyamide composition containing the same are excellent in the chemical resistance (in particular, long-term heat resistance/chemical resistance).

In addition, the polyamide compositions of Examples 1 to 3 are excellent in all of the respective evaluation results regarding the tensile breaking strength, the flexural strength, the heat distortion temperature, the coefficient of water absorption, and the storage modulus and excellent in the high-temperature strength, the mechanical characteristics, the heat resistance, and the low water-absorbing properties, and therefore, the polyamide compositions of Examples 1 to 3 are more excellent from the standpoint of the overall balance thereamong than those of Comparative Examples 1 to 4.

As described in PTL 1, it is known that when an aliphatic diamine having a side chain is used, the crystallinity of the resulting polyamide is lowered, and such is not preferred from the standpoint of heat resistance, chemical resistance, etc. In contrast, in view of the fact that the polyamide of the present invention has a specified constitution having a dicarboxylic acid unit composed mainly of a naphthalene dicarboxylic acid unit and a diamine unit composed mainly of a branched aliphatic diamine unit, the chemical resistance is more improved, and in addition thereto, the high-temperature strength, the mechanical characteristics, the heat resistance, and the low water-absorbing properties are improved, and the polyamide of the present invention is more excellent in the various physical properties including chemical resistance.

[Example 4 and Comparative Examples 5 to 7]

The melting point and the glass transition temperature of each of polyamides produced by using, as the dicarboxylic acid, 2,6-naphthalenedicarboxylic acid and using, as the diamine, 1,9-nonanediamine and 2-methyl-1,8-octanediamine in a molar ratio shown in Table 3 are shown in Table 3 together with the melting point and the glass transition temperature of each of the polyamides obtained in Examples 1 and 2 and Comparative Examples 1 and 2.

In addition, as Fig. 1, a graph in which the melting point (°C) of the polyamide is plotted versus the content proportion (mol%) of the 2-methyl-1,8-octanediamine unit in the diamine unit was prepared.

The production method of each of the polyamides of Examples 4 and Comparative Examples 5 to 7 was performed in the same manner as in Example 1, and the measurements of the melting point and the glass transition temperature were similarly performed.

In Table 3, 2,6-NDA expresses the 2,6-naphthalenedicarboxylic acid unit; C9DA expresses the 1,9-nonanediamine unit; and MC8DA expresses the 2-methyl-1,8-octanediamine unit.

Table 3

| | Unit | Example 1 | Example 2 | Example 4 | Comparative Example 1 | Comparative Example 5 | Comparative Example 2 | Comparative Example 6 | Comparative Example 7 |
|---|---|---|---|---|---|---|---|---|---|
| Dicarboxylic acid unit | - | 2,6-NDA | 2,6-NDA | 2,6-NDA | 2,6-NDA | 2,6-NDA | 2,6-NDA | 2,6-NDA | 2,6-NDA |
| Diamine unit | (molar ratio) | C9DA/MC8DA (4/96) | C9DA/MC8DA (15/85) | C9DA/MC8DA (30/70) | C9DA/MC8DA (50/50) | C9DA/MC8DA (70/30) | C9DA/MC8DA (85/15) | C9DA/MC8DA (92/8) | C9DA/MC8DA (100/0) |
| Melting point | °C | 317 | 314 | 297 | 281 | 286 | 294 | 298 | 312 |
| Glass transition temperature | °C | 140 | 140 | 138 | 136 | 137 | 136 | 136 | 136 |

[Polyamide Composition of First Embodiment]

Next, the polyamide composition of the first embodiment is described more specifically by reference to Examples and Comparative Examples, but it should be construed that the polyamide composition is not limited thereto.
Respective evaluations in the Production Example, Examples and Comparative Examples were performed according to the methods described below.

· Inherent viscosity

The inherent viscosity of each of polyamides (samples) obtained in Production Examples 1-1 to 1-5 was determined in the same calculation method as mentioned above.

· Melting point and glass transition temperature

The melting point and the glass transition temperature of each of polyamides obtained in Production Examples 1-1 to 1-5 were determined in the same measurement methods as mentioned above.

«Preparation 2 of Test specimen»

Using an injection molding machine, manufactured by Sumitomo Heavy Industries, Ltd. (clamping force: 100 tons, screw diameter: ϕ32 mm), with respect to each of the polyamide compositions obtained in the Examples and Comparative Examples, a cylinder temperature of 20 to 30°C higher than the melting point of the polyamide was set, and the polyamide composition was molded using a T-runner mold under a condition of a mold temperature of 160°C for the polyamide compositions of Examples 5 to 8 and Comparative Examples 8 and 9 and under a condition of a mold temperature of 140°C for the polyamide compositions of Comparative Examples 10 and 11, respectively, thereby preparing a multi-purpose test specimen Type A1 (dumbbell type test specimen described in JIS K7139: 4 mm in thickness, 170 mm in total length, 80 mm in parallel length, 10 mm in parallel width).

· Chemical resistance (Weight increase rate after immersion in antifreeze)

Using the multi-purpose test specimen Type A1 (4 mm in thickness) prepared in the method of Preparation 2 of Test Specimen as mentioned above, the chemical resistance was determined in the same method (immersion treatment at 130°C for 500 hours) as mentioned above.

· Chemical resistance (Retention of tensile strength)

Using the multi-purpose test specimen Type A1 (4 mm in thickness) prepared in the method of Preparation 2 of Test Specimen as mentioned above, the chemical resistance was determined in the same method (immersion treatment at 130°C for 500 hours) as mentioned above.

· Impact resistance

A test specimen (4 mm in thickness, 80 mm in total length, 10 mm in width, notched) was prepared by cutting from the multi-purpose test specimen Type A1 (4 mm in thickness) prepared in the method of Preparation 2 of Test Specimen as mentioned above, and a notched Charpy impact value at 23°C and -40°C was measured by using a Charpy impact tester (manufactured by Toyo Seiki Seisaku-sho, Ltd.) in conformity with ISO179-1 (2010, Second Edition), thereby evaluating the impact resistance (kJ/$m^2$).

· Heat distortion temperature

Using the multi-purpose test specimen Type A1 (4 mm in thickness) prepared in the method of Preparation 2 of Test Specimen as mentioned above, the heat distortion temperature was determined in the same measurement method as mentioned above.

· Tensile breaking strength

Using the multi-purpose test specimen Type A1 (4 mm in thickness) prepared in the method of Preparation 2 of Test Specimen as mentioned above, the tensile breaking strength was determined in the same measurement method

as mentioned above.

· Tensile breaking strain

Using the multi-purpose test specimen Type A1 (4 mm in thickness) prepared in the method of Preparation 2 of Test Specimen as mentioned above, the tensile breaking strain (%) at 23°C was measured in conformity with ISO527-1 (2012, Second Edition).

· Coefficient of water absorption

Using the multi-purpose test specimen Type A1 (4 mm in thickness) prepared in the method of Preparation 2 of Test Specimen as mentioned above, the coefficient of water absorption was determined in the same measurement method as mentioned above.

The respective components used for preparing the polyamide compositions in the Examples and Comparative Examples are shown.

«Polyamide»

[Production Example 1-1]

· Production of semi-aromatic polyamide (PA9N1-1)

An autoclave having an internal volume of 40 liters was charged with 9,611.8 g (44.46 mols) of 2,6-naphthalenedicarboxylic acid, 7,158.2 g (45.23 mols) of a mixture of 1,9-nonanediamine and 2-methyl-1,8-octanediamine [former/latter = 4/96 (molar ratio)], 131.9 g (1.08 mols) of benzoic acid, 16.9 g (0.1% by mass relative to the total mass of the raw materials) of sodium hypophosphite monohydrate, and 7.3 liters of distilled water and then purged with nitrogen. The contents were agitated at 100°C for 30 minutes, and the temperature of the interior of the autoclave was subjected to temperature rise to 220°C over 2 hours. At this time, the pressure in the interior of autoclave increased to 2 MPa. Heating was continued for 5 hours at it was while keeping the pressure at 2 MPa, and the water vapor was gradually taken out to perform a reaction. Subsequently, the pressure was decreased to 1.3 MPa over 30 minutes, and the reaction was further performed for one hour, thereby obtaining a prepolymer. The obtained prepolymer was dried at 100°C under reduced pressure for 12 hours and pulverized to a particle diameter of 2 mm or less. This was subjected to solid-phase polymerization at 230°C and 13 Pa (0.1 mmHg) for 10 hours, thereby obtaining a polyamide. This polyamide is abbreviated as "PA9N1-1".

[Production Example 1-2]

· Production of semi-aromatic polyamide (PA9N1-1B)

A polyamide was obtained in the same manner as in Production Example 1-1, except for using, as the raw materials, 9,175.3 g (42.44 mols) of 2,6-naphthalenedicarboxylic acid, 6,853.7 g (43.30 mols) of a mixture of 1,9-nonanediamine and 2-methyl-1,8-octanediamine [former/latter = 4/96 (molar ratio)], 136.5 g (1.12 mols) of benzoic acid, and 16.2 g (0.1% by mass relative to the total mass of the raw materials) of sodium hypophosphite monohydrate. This polyamide is abbreviated as "PA9N1-1B".

[Production Example 1-3]

· Production of semi-aromatic polyamide (PA9N1-2)

A polyamide was obtained in the same manner as in Production Example 1-1, except for using, as the raw materials, 9,110.2 g (42.14 mols) of 2,6-naphthalenedicarboxylic acid, 6,853.7 g (43.30 mols) of a mixture of 1,9-nonanediamine and 2-methyl-1,8-octanediamine [former/latter = 15/85 (molar ratio)], 210.0 g (1.72 mols) of benzoic acid, and 16.2 g (0.1% by mass relative to the total mass of the raw materials) of sodium hypophosphite monohydrate. This polyamide is abbreviated as "PA9N1-2".

[Production Example 1-4]

· Production of semi-aromatic polyamide (PA9N1-3)

A polyamide was obtained in the same manner as in Production Example 1-1, except for using, as the raw materials, 9,379.2 g (43.38 mols) of 2,6-naphthalenedicarboxylic acid, 6,999.1 g (44.22 mols) of a mixture of 1,9-nonanediamine and 2-methyl-1,8-octanediamine [former/latter = 85/15 (molar ratio)], 150.5 g (1.23 mols) of benzoic acid, and 16.5 g (0.1% by mass relative to the total mass of the raw materials) of sodium hypophosphite monohydrate. This polyamide is abbreviated as "PA9N1-3".

[Production Example 1-5]

· Production of semi-aromatic polyamide (PA9T1-1)

A polyamide was obtained in the same manner as in Production Example 1-1, except for using, as the raw materials, 8,190.7 g (49.30 mols) of terephthalic acid, 7,969.4 g (50.35 mols) of a mixture of 1,9-nonanediamine and 2-methyl-1,8-octanediamine [former/latter = 80/20 (molar ratio)], 171.0 g (1.40 mols) of benzoic acid, and 16.3 g (0.1% by mass relative to the total mass of the raw materials) of sodium hypophosphite monohydrate. This polyamide is abbreviated as "PA9T1-1".

«Polyolefin»

· Modified polymer (EPR)

"TAFMER MP0620", manufactured by Mitsui Chemicals, Inc.; a modified polymer resulting from modification of an ethylene-propylene copolymer with maleic anhydride

· Modified polymer (SEBS)

"TUFTEC M1943", manufactured by Asahi Kasei Corporation; a modified polymer resulting from modification of a styrene-ethylene-butylene copolymer with maleic anhydride

«Other Additives»

- Antioxidant (1) "KG HS01-P", manufactured by PolyAd Services Inc.
- Antioxidant (2) "SUMILIZER GA-80", manufactured by Sumitomo Chemical Co., Ltd.
- Lubricating agent "LICOWAX OP", manufactured by Clariant Chemicals Ltd.
- Crystal nucleating agent "TALC ML112", manufactured by Fuji Talc Industrial Co., Ltd.
- Colorant Carbon black "#980B", manufactured by Mitsubishi Chemical Corporation

[Examples 5 to 8 and Comparative Examples 8 to 11]

The respective components were previously mixed in a proportion shown in Table 4 and collectively charged in an upstream supply port of a twin-screw extruder ("TEM-26SS", manufactured by Toshiba Machine Co., Ltd.). The mixture was melt-kneaded and extruded at a cylinder temperature of 20 to 30°C higher than the melting point of the polyamide, followed by cooling and cutting. There was thus produced a polyamide composition in a pellet form.
Using the polyamide compositions obtained in the aforementioned Examples 5 to 8 and Comparative Examples 8 to 11, the aforementioned respective physical properties evaluations were performed. The results are shown in Table 1.
In Table 4, C9DA expresses the 1,9-nonanediamine unit, and MC8DA expresses the 2-methyl-1,8-octanediamine unit.

Table 4

| | | | Unit | Example | | | | Comparative Example | | | |
|---|---|---|---|---|---|---|---|---|---|---|---|
| | | | | 5 | 6 | 7 | 8 | 8 | 9 | 10 | 11 |
| Polyamide composition | Polyamide | PA9N1-1 (C9DA/MC8DA= 4/96) | Parts by mass | 100 | 100 | | | | | | |
| | | PA9N1-1B (C9DA/MC8DA= 4/96) | Parts by mass | | | 100 | | 100 | | | |
| | | PA9N1-2 (C9DA/MC8DA= 15/85) | Parts by mass | | | | 100 | | | | |
| | | PA9N1-3 (C9DA/MC8DA = 85/15) | Parts by mass | | | | | | 100 | | |
| | | PA9T1-1 (C9DA/MC8DA= 80/20) | Parts by mass | | | | | | | 100 | 100 |
| | Polyolefin | Modified polymer (EPR) | Parts by mass | 5.3 | 25.0 | | 5.3 | | 5.3 | 5.3 | 25.0 |
| | | Modified polymer (SEBS) | Parts by mass | | | 5.3 | | | | | |
| | Other additives | Antioxidant (1) | Parts by mass | 0.8 | 0.8 | 0.8 | 0.8 | | 0.8 | 0.8 | 0.8 |
| | | Antioxidant (2) | Parts by mass | | | | | 0.2 | | | |
| | | Lubricating agent | Parts by mass | 0.2 | 0.3 | 0.2 | 0.2 | 0.2 | 0.2 | 0.2 | 0.3 |
| | | Crystal nucleating agent | Parts by mass | 0.1 | 0.1 | 0.1 | 0.1 | 0.1 | 0.1 | 0.1 | 0.1 |
| | | Colorant | Parts by mass | 0.2 | 0.2 | 0.2 | 0.2 | | 0.2 | 0.2 | 0.2 |
| Evaluation of physical properties of polyamide | | Melting point | °C | 317 | 317 | 317 | 314 | 317 | 294 | 300 | 300 |
| | | Glass transition temperature | °C | 140 | 140 | 140 | 140 | 140 | 136 | 120 | 120 |
| | | Inherent viscosity | dL/g | 1.13 | 1.13 | 1.23 | 1.05 | 1.23 | 1.22 | 1.2 | 1.2 |

(continued)

| | | Unit | Example | | | | Comparative Example | | | |
|---|---|---|---|---|---|---|---|---|---|---|
| | | | 5 | 6 | 7 | 8 | 8 | 9 | 10 | 11 |
| Evaluation of physical properties of polyamide composition | Chemical resistance (weight increase rate) (at 130°C for 500 hours) | % | 2.8 | 3.4 | 3.0 | 2.9 | 2.7 | 3.3 | 5.1 | 5.2 |
| | Chemical resistance (retention of tensile strength) (at 130°C for 500 hours) | % | 76 | 80 | 81 | 73 | 88 | 73 | 67 | 60 |
| | Impact resistance (at 23°C) | $kJ/m^2$ | 9.3 | 47.9 | 10.2 | 7.9 | 3.4 | 10.5 | 9.0 | 65.0 |
| | Impact resistance (at -40°C) | $kJ/m^2$ | 5.7 | 16.3 | 7.9 | 4.8 | 3.7 | 7.6 | 8.0 | 17.0 |
| | Heat distortion temperature | °C | 151 | 144 | 144 | 145 | 156 | 140 | 120 | 110 |
| | Tensile breaking strength | MPa | 95 | 59 | 95 | 94 | 99 | 96 | 82 | 50 |
| | Tensile breaking strain | % | 17 | 41 | 18 | 14 | 8 | 24 | 12 | 20 |
| | Coefficient of water absorption (at 23°C for 168 hours) | % | 0.26 | 0.29 | 0.26 | 0.27 | 0.27 | 0.31 | 0.35 | 0.36 |

It is noted from Table 4 that the polyamide compositions of Examples 5 to 8 have excellent impact resistance, heat resistance, and chemical resistance and are also excellent in the mechanical characteristics and low water-absorbing properties.

As described in PTL 1, it is known that when an aliphatic diamine having a side chain is used, the crystallinity of the resulting polyamide is lowered, and such is not preferred from the standpoint of heat resistance, chemical resistance, etc. In contrast, in view of the fact that the polyamide composition of the first embodiment has a polyamide (A) having a specified constitution having a dicarboxylic acid unit composed mainly of a naphthalenedicarboxylic acid unit and a diamine unit composed mainly of a branched aliphatic diamine unit, the chemical resistance is more improved, and in addition thereto, the polyamide composition of the first embodiment is more excellent in the various physical properties including impact resistance, heat resistance, mechanical characteristics, and low water-absorbing properties.

[Polyamide Composition of Second Embodiment]

Next, the polyamide composition of the second embodiment is described more specifically by reference to Examples and Comparative Examples, but it should be construed that the polyamide composition is not limited thereto.

Respective evaluations in the Production Example, Examples and Comparative Examples were performed according to the methods described below.

· Inherent viscosity

The inherent viscosity of each of polyamides (samples) obtained in Production Examples 2-1 to 2-6 was determined in the same calculation method as mentioned above.

· Melting point and glass transition temperature

The melting point and the glass transition temperature of each of polyamides obtained in Production Examples 2-1 to 2-6 were determined in the same measurement methods as mentioned above.

«Preparation 3 of Test specimen»

Using an injection molding machine, manufactured by Sumitomo Heavy Industries, Ltd. (clamping force: 100 tons, screw diameter: ϕ32 mm), with respect to each of the polyamide compositions obtained in Examples 9 to 13 and Comparative Examples 12 to 16, a cylinder temperature of 20 to 30°C higher than the melting point of the polyamide was set, and the polyamide composition was molded using a T-runner mold under a condition of a mold temperature of 160°C for the polyamide compositions of Examples 9 to 13 and Comparative Examples 12 and 16 and under a condition of a mold temperature of 140°C for the polyamide compositions of Comparative Examples 13 and 15, respectively, thereby preparing a multi-purpose test specimen Type A1 (dumbbell type test specimen described in JIS K7139: 4 mm in thickness, 170 mm in total length, 80 mm in parallel length, 10 mm in parallel width).

· Tensile breaking strength

Using the multi-purpose test specimen Type A1 (4 mm in thickness) prepared in the method of Preparation 3 of Test Specimen as mentioned above, the tensile breaking strength was determined in the same measurement method as mentioned above.

· Chemical resistance (Retention of tensile strength)

Using the multi-purpose test specimen Type A1 (4 mm in thickness) prepared in the method of Preparation 3 of Test Specimen as mentioned above, the chemical resistance was determined in the same method (immersion treatment at 130°C for 500 hours) as mentioned above.

· Heat distortion temperature

Using the multi-purpose test specimen Type A1 (4 mm in thickness) prepared in the method of Preparation 3 of Test Specimen as mentioned above, the heat distortion temperature was determined in the same measurement method as mentioned above.

· Coefficient of water absorption

Using the multi-purpose test specimen Type A1 (4 mm in thickness) prepared in the method of Preparation 3 of Test Specimen as mentioned above, the coefficient of water absorption was determined in the same measurement method as mentioned above.

· Heat aging resistance

Using a small-scale kneader/injection molding machine (Xplore MC15), manufactured by Xplore Instruments BV, with respect to each of the polyamide compositions obtained in Examples 9 to 13 and Comparative Examples 12 to 16, a cylinder temperature of 20 to 30°C higher than the melting point of the polyamide was set, and the polyamide composition was molded using a T-runner mold under a condition of a mold temperature of 170°C, thereby preparing a small test specimen Type 1BA (2 mm in thickness, 75 mm in total length, 30 mm in parallel length, 5 mm in parallel width). This small test specimen Type 1BA (2 mm in thickness) was allowed to stand within a drying machine at 120°C for 500 hours, and then, the tensile strength was measured in conformity with ISO527-1 (2012, Second Edition). A proportion (%) relative to the tensile strength of the test specimen before standing within the drying machine was calculated and designated as an index of the heat aging resistance.

The respective components used for preparing the polyamide compositions in the Examples and Comparative Examples are shown.

«Polyamide»

[Production Example 2-1]

· Production of semi-aromatic polyamide (PA9N2-1)

An autoclave having an internal volume of 40 liters was charged with 9,110.2 g (42.14 mols) of 2,6-naphthalenedicarboxylic acid, 6,853.7 g (43.30 mols) of a mixture of 1,9-nonanediamine and 2-methyl-1,8-octanediamine [former/latter = 4/96 (molar ratio)], 210.0 g (1.72 mols) of benzoic acid, 16.2 g (0.1% by mass relative to the total mass of the raw materials) of sodium hypophosphite monohydrate, and 8.3 liters of distilled water and then purged with nitrogen. The contents were agitated at 100°C for 30 minutes, and the temperature of the interior of the autoclave was subjected to temperature rise to 220°C over 2 hours. At this time, the pressure in the interior of autoclave increased to 2 MPa. Heating was continued for 5 hours at it was while keeping the pressure at 2 MPa, and the water vapor was gradually taken out to perform a reaction. Subsequently, the pressure was decreased to 1.3 MPa over 30 minutes, and the reaction was further performed for one hour, thereby obtaining a prepolymer. The obtained prepolymer was dried at 100°C under reduced pressure for 12 hours and pulverized to a particle diameter of 2 mm or less. This was subjected to solid-phase polymerization at 230°C and 13 Pa (0.1 mmHg) for 10 hours, thereby obtaining a polyamide. This polyamide is abbreviated as "PA9N2-1".

[Production Example 2-2]

· Production of semi-aromatic polyamide (PA9N2-1B)

A polyamide was obtained in the same manner as in Production Example 2-1, except for changing the charged amounts of the raw materials to 9,175.3 g (42.44 mols) for the 2,6-naphthalenedicarboxylic acid and 136.5 g (1.12 mols) for the benzoic acid, respectively. This polyamide is abbreviated as "PA9N2-1B".

[Production Example 2-3]

· Production of semi-aromatic polyamide (PA9N2-2)

A polyamide was obtained in the same manner as in Production Example 2-1, except for using a mixture of 1,9-nonanediamine and 2-methyl-1,8-octanediamine [former/latter = 15/85 (molar ratio)]. This polyamide is abbreviated as "PA9N2-2".

[Production Example 2-4]

· Production of semi-aromatic polyamide (PA9N2-3)

A polyamide was obtained in the same manner as in Production Example 2-1, except for using a mixture of 1,9-nonanediamine and 2-methyl-1,8-octanediamine [former/latter = 85/15 (molar ratio)]. This polyamide is abbreviated as "PA9N2-3".

[Production Example 2-5]

· Production of semi-aromatic polyamide (PA9T2-1)

A polyamide was obtained in the same manner as in Production Example 2-1, except for using, as the raw materials, 8,190.7 g (49.30 mols) of terephthalic acid, 7,969.4 g (50.35 mols) of a mixture of 1,9-nonanediamine and 2-methyl-1,8-octanediamine [former/latter = 4/96 (molar ratio)], 171.0 g (1.40 mols) of benzoic acid, 16.3 g (0.1% by mass relative to the total mass of the raw materials) of sodium hypophosphite monohydrate, and 5.5 liters of distilled water. This polyamide is abbreviated as "PA9T-1".

[Production Example 2-6]

· Production of semi-aromatic polyamide (PA9T2-2)

A polyamide was obtained in the same manner as in Production Example 2-4, except for using a mixture of 1,9-nonanediamine and 2-methyl-1,8-octanediamine [former/latter = 80/20 (molar ratio)]. This polyamide is abbreviated as "PA9T2-2".

«Organic Heat Stabilizer»

"SUMILIZER GA-80", manufactured by Sumitomo Chemical Co., Ltd.
"NAUGARD 445", manufactured by Addivant

«Other Additives»

· Glass fiber

"CS03JA-FT2A", manufactured by Owens Corning Japan LLC. (average fiber diameter: 10.5 μm, average fiber length: 3 mm, cross-sectional shape: circle)

· Lubricating agent

"LICOWAX OP", manufactured by Clariant Chemicals Ltd.

· Crystal nucleating agent

"TALC ML112", manufactured by Fuji Talc Industrial Co., Ltd.

· Colorant

Carbon black "#980B", manufactured by Mitsubishi Chemical Corporation

[Examples 9 to 13 and Comparative Examples 12 to 16]

The respective components other than the glass fiber were previously mixed in a proportion shown in Table 5 and fed from an upstream hopper of a twin-screw extruder ("TEM-26SS", manufactured by Toshiba Machine Co., Ltd.). In the case of using the glass fiber, the glass fiber was fed in a proportion shown in Table 5 from a side feed port on a downstream side of the extruder. The mixture was melt-kneaded and extruded at a cylinder temperature of 20 to 30°C

higher than the melting point of the polyamide, followed by cooling and cutting. There was thus produced a polyamide composition in a pellet form.

Using the polyamide compositions obtained in the aforementioned Examples 9 to 13 and Comparative Examples 12 to 16, the aforementioned respective physical properties evaluations were performed. The results are shown in Table 1.

In Table 5, C9DA expresses the 1,9-nonanediamine unit, and MC8DA expresses the 2-methyl-1,8-octanediamine unit.

Table 5

| | Unit | Example | | | | | Comparative Example | | | | |
|---|---|---|---|---|---|---|---|---|---|---|---|
| | | 9 | 10 | 11 | 12 | 13 | 12 | 13 | 14 | 15 | 16 |

(continued)

| | | | Unit | Example | | | | | Comparative Example | | | | |
|---|---|---|---|---|---|---|---|---|---|---|---|---|---|
| | | | | 9 | 10 | 11 | 12 | 13 | 12 | 13 | 14 | 15 | 16 |
| Polyamide composition | Polyamide | PA9N2-1 (C9DA/MC8DA = 4/96) | Parts by mass | 100 | | | | | | | | | 100 |
| | | PA9N2-1B (C9DAIMC8DA= 4/96) | Parts by mass | | 100 | 100 | 100 | | | | | | |
| | | PA9N2-2 (C9DA/MC8DA = 15/85) | Parts by mass | | | | | 100 | | | | | |
| | | PA9N2-3 (C9DA/MC8DA = 85/15) | Parts by mass | | | | | | 100 | | | | |
| | | PA9T2-1 (C9DA/MC8DA = 4/96) | Parts by mass | | | | | | | 100 | | | |
| | | PA9T2-2 (C9DA/MC8DA = 80/20) | Parts by mass | | | | | | | | 100 | 100 | |
| | Organicheat stabilizer | GA80 | Parts by mass | 0.2 | 0.2 | 0.2 | | 0.2 | 0.2 | 0.2 | 0.2 | 0.2 | |
| | | NAUGARD 445 | Parts by mass | | | | 0.2 | | | | | | |
| | Other additives | Glass fiber | Parts by mass | | | 54 | | | | | | 54 | |
| | | Lubricating agent | Parts by mass | 0.2 | 0.2 | 0.3 | 0.2 | 0.2 | 0.2 | 0.2 | 0.2 | 0.3 | 0.2 |
| | | Crystal nucleating agent | Parts by mass | 0.1 | 0.1 | 0.1 | 0.1 | 0.1 | 0.1 | 0.1 | 0.1 | 0.1 | 0.1 |
| | | Colorant | Parts by | | | 0.2 | | | | | | 0.2 | |

(continued)

| | | Unit | Example | | | | | Comparative Example | | | | |
|---|---|---|---|---|---|---|---|---|---|---|---|---|
| | | | 9 | 10 | 11 | 12 | 13 | 12 | 13 | 14 | 15 | 16 |
| Evaluation of physical properties of polyamide | Melting point | °C | 317 | 317 | 317 | 317 | 314 | 294 | 283 | 300 | 300 | 317 |
| | Glass transition temperature | °C | 140 | 140 | 140 | 140 | 140 | 136 | 123 | 120 | 120 | 140 |
| | Inherent viscosity | dL/g | 0.90 | 1.23 | 1.23 | 1.23 | 0.91 | 0.83 | 1.00 | 1.21 | 1.21 | 0.90 |

(continued)

| | | Unit | Example | | | | | Comparative Example | | | | |
|---|---|---|---|---|---|---|---|---|---|---|---|---|
| | | | 9 | 10 | 11 | 12 | 13 | 12 | 13 | 14 | 15 | 16 |
| Evaluation of physical properties of polyamide composition | Tensile breaking strength | MPa | 93 | 99 | 220 | 109 | 112 | 71 | 87 | 81 | 200 | 93 |
| | Heat distortion temperature | °C | 153 | 156 | 288 | 149 | 148 | 139 | 125 | 127 | 270 | 153 |
| | Coefficient of water absorption (at 23°C for 168 hours) | % | 0.25 | 0.27 | 0.19 | 0.28 | 0.27 | 0.33 | 0.37 | 0.38 | 0.24 | 0.25 |
| | Chemical resistance (retention of tensile strength) (at 130°C for 500 hours) | % | 99 | 88 | 81 | 85 | 82 | 45 | 41 | 78 | 81 | 99 |
| | Heat aging resistance (at 120°C for 500 hours) | % | 103 | 104 | 100 | 106 | 99 | 94 | 102 | 100 | 98 | 82 |

It is noted from Table 5 that the polyamide compositions of Examples 9 to 13 are high in the retention of tensile strength after i in antifreeze and are further improved in the chemical resistance, as compared with those of Comparative Examples 12 to 15. Further polyamide compositions of Examples 9 to 13 are excellent in the heat aging resistance, as compared with that of Comparative Examp therefore, it is noted that the polyamide compositions of Examples 9 to 13 have excellent high-temperature heat resistance.
In addition, the polyamide compositions of Examples 9 to 13 are equal to or more excellent than those of Comparative Exa to 16 in terms of evaluation regarding the tensile breaking strength, the heat distortion temperature, and the coefficient of water absor therefore, it is noted that the polyamide composition of the second embodiment is also excellent in the mechanical characteristics resistance, and the low water-absorbing properties.
As described in PTL 1, it is known that when an aliphatic diamine having a side chain is used, the crystallinity of the resulting p is lowered, and such is not preferred from the standpoint of heat resistance, chemical resistance, etc. In contrast, in view of the fac polyamide composition of the second embodiment has a polyamide (A) having a specified constitution having a dicarboxylic acid unit c mainly of a naphthalenedicarboxylic acid unit and a diamine unit composed mainly of a branched aliphatic diamine unit, the chemical r is more improved, and in addition thereto, the polyamide composition of the second embodiment is more excellent in the mechanical chara the heat resistance including high-temperature heat resistance, and the various physical properties including low water-absorbing pr

[Polyamide Composition of Third Embodiment]

Next, the polyamide composition of the third embodiment is described more specifically by reference to Examples and Co Examples, but it should be construed that the polyamide composition is not limited thereto.
Respective evaluations in the Production Example, Examples and Comparative Examples were performed according to the described below.

· Inherent viscosity

The inherent viscosity of each of polyamides (samples) obtained in Production Examples 3-1 to 3-5 was determined in calculation method as mentioned above.

· Melting point and glass transition temperature

The melting point and the glass transition temperature of each of polyamides obtained in Production Examples 3-1 to 3-5 were de in the same measurement methods as mentioned above.

«Preparation 4 of Test specimen»

Using an injection molding machine, manufactured by Sumitomo Heavy Industries, Ltd. (clamping force: 100 tons, screw dian mm), with respect to each of the polyamide compositions obtained in Examples 14 and 15 and Comparative Examples 17 to 21, a temperature of 20 to 30°C higher than the melting point of the polyamide was set, and the polyamide composition was molded using a mold under a condition of a mold temperature of 160°C for the polyamide compositions of Examples 14 and 15 and Comparative Exa and 21 and under a condition of a mold temperature of 140°C for the polyamide compositions of Comparative Examples 18 to 20, res thereby preparing a multi-purpose test specimen Type A1 (dumbbell type test specimen described in JIS K7139: 4 mm in thickness, 1 total length, 80 mm in parallel length, 10 mm in parallel width).

· Tensile breaking strength

Using the multi-purpose test specimen Type A1 (4 mm in thickness) prepared in the method of Preparation 4 of Test Spe mentioned above, the tensile breaking strength was determined in the same measurement method as mentioned above.

· Chemical resistance (Retention of tensile strength)

Using the multi-purpose test specimen Type A1 (4 mm in thickness) prepared in the method of Preparation 4 of Test Spe mentioned above, the chemical resistance was determined in the same method (immersion treatment at 130°C for 500 hours) as mention

· Heat distortion temperature

Using the multi-purpose test specimen Type A1 (4 mm in thickness) prepared in the method of Preparation 4 of Test Spe mentioned above, the heat distortion temperature was determined in the same measurement method as mentioned above.

· Coefficient of water absorption

Using the multi-purpose test specimen Type A1 (4 mm in thickness) prepared in the method of Preparation 4 of Test Specimen as mentioned above, the coefficient of water absorption was determined in the same measurement method as mentioned above.

· Heat aging resistance

Using a small-scale kneader/injection molding machine (Xplore MC15), manufactured by Xplore Instruments BV, with respect to each of the polyamide compositions obtained in Examples 14 and 15 and Comparative Examples 17 to 21, a cylinder temperature of 20 to 30°C higher than the melting point of the polyamide was set, and the polyamide composition was molded using a T-runner mold under a condition of a mold temperature of 170°C, thereby preparing a small test specimen Type 1BA (2 mm in thickness, 75 mm in total length, 30 mm in parallel length, 5 mm in parallel width). This small test specimen Type 1BA (2 mm in thickness) was allowed to stand within a drying machine at 170°C for 250 hours, and then, the tensile strength was measured in conformity with ISO527-1 (2012, Second Edition). A proportion (%) relative to the tensile strength of the test specimen before standing within the drying machine was calculated and designated as an index of the heat aging resistance.

The respective components used for preparing the polyamide compositions in the Examples and Comparative Examples are shown.

«Polyamide»

[Production Example 3-1]

· Production of semi-aromatic polyamide (PA9N3-1)

An autoclave having an internal volume of 40 liters was charged with 9,110.2 g (42.14 mols) of 2,6-naphthalenedicarboxylic acid, 6,853.7 g (43.30 mols) of a mixture of 1,9-nonanediamine and 2-methyl-1,8-octanediamine [former/latter = 4/96 (molar ratio)], 210.0 g (1.72 mols) of benzoic acid, 16.2 g (0.1% by mass relative to the total mass of the raw materials) of sodium hypophosphite monohydrate, and 8.3 liters of distilled water and then purged with nitrogen. The contents were agitated at 100°C for 30 minutes, and the temperature of the interior of the autoclave was subjected to temperature rise to 220°C over 2 hours. At this time, the pressure in the interior of autoclave increased to 2 MPa. Heating was continued for 5 hours at it was while keeping the pressure at 2 MPa, and the water vapor was gradually taken out to perform a reaction. Subsequently, the pressure was decreased to 1.3 MPa over 30 minutes, and the reaction was further performed for one hour, thereby obtaining a prepolymer. The obtained prepolymer was dried at 100°C under reduced pressure for 12 hours and pulverized to a particle diameter of 2 mm or less. This was subjected to solid-phase polymerization at 230°C and 13 Pa (0.1 mmHg) for 10 hours, thereby obtaining a polyamide. This polyamide is abbreviated as "PA9N3-1".

[Production Example 3-2]

· Production of semi-aromatic polyamide (PA9N3-2)

A polyamide was obtained in the same manner as in Production Example 3-1, except for using a mixture of 1,9-nonanediamine and 2-methyl-1,8-octanediamine [former/latter = 15/85 (molar ratio)]. This polyamide is abbreviated as "PA9N3-2".

[Production Example 3-3]

· Production of semi-aromatic polyamide (PA9N3-3)

A polyamide was obtained in the same manner as in Production Example 3-1, except for using a mixture of 1,9-nonanediamine and 2-methyl-1,8-octanediamine [former/latter = 85/15 (molar ratio)]. This polyamide is abbreviated as "PA9N3-3".

[Production Example 3-4]

· Production of semi-aromatic polyamide (PA9T3-1)

An autoclave having an internal volume of 40 liters was charged with 8,190.7 g (49.30 mols) of terephthalic acid, 7,969.4 g (50.35 mols) of a mixture of 1,9-nonanediamine and 2-methyl-1,8-octanediamine [former/latter = 4/96 (molar ratio)], 171.0 g (1.40 mols) of benzoic acid, 16.3 g (0.1% by mass relative to the total mass of the raw materials) of sodium hypophosphite monohydrate, and 5.5 liters of distilled water, and then, the same procedures as in Production Example 3-1 were followed, to obtain a polyamide. This polyamide is abbreviated as "PA9T3-1".

[Production Example 3-5]

· Production of semi-aromatic polyamide (PA9T3-2)

A polyamide was obtained in the same manner as in Production Example 3-4, except for using a mixture of 1,9-nonanediamine and 2-methyl-1,8-octanediamine [former/latter = 80/20 (molar ratio)]. This polyamide is abbreviated as "PA9T3-2".

«Copper Compound and Metal Halide»

"KG HS01-P" (molar ratio: CuI/KI = 10/1), manufactured by PolyAd Services Inc.

«Other Additives»

· Glass fiber

"CS03JA-FT2A", manufactured by Owens Corning Japan LLC. (average fiber diameter: 10.5 μm, average fiber length: 3 mm, cross-sectional shape: circle)

· Lubricating agent

"LICOWAX OP", manufactured by Clariant Chemicals Ltd.

· Crystal nucleating agent

"TALC ML112", manufactured by Fuji Talc Industrial Co., Ltd.

· Colorant

Carbon black "#980B", manufactured by Mitsubishi Chemical Corporation

[Examples 14 and 15 and Comparative Examples 17 to 21]

The respective components were previously mixed in a proportion shown in Table 6 and collectively charged in an upstream supply port of a twin-screw extruder ("TEM-26SS", manufactured by Toshiba Machine Co., Ltd.). In the case of using the glass fiber, the glass fiber was fed in a proportion shown in Table 6 from a side feed port on a downstream side of the extruder. The mixture was melt-kneaded and extruded at a cylinder temperature of 20 to 30°C higher than the melting point of the polyamide, followed by cooling and cutting. There was thus produced a polyamide composition in a pellet form.

Using the polyamide compositions obtained in the aforementioned 14 and 15 and Comparative Examples 17 to 21, the aforementioned respective physical properties evaluations were performed. The results are shown in Table 6.

In Table 6, C9DA expresses the 1,9-nonanediamine unit, and MC8DA expresses the 2-methyl-1,8-octanediamine unit.

Table 6

| | | | Unit | Example | | Comparative Example | | | | |
|---|---|---|---|---|---|---|---|---|---|---|
| | | | | 14 | 15 | 17 | 18 | 19 | 20 | 21 |
| Polyamide composition | Polyamide | PA9N3-1 (C9DA/MC8DA = 4/96) | Parts by mass | 100 | | | | | | 100 |
| | | PA9N3-2 (C9DA/MC8DA = 15/85) | Parts by mass | | 100 | | | | | |
| | | PA9N3-3 (C9DA/MC8DA = 85/15) | Parts by mass | | | 100 | | | | |
| | | PA9T3-1 (C9DA/MC8DA= 4/96) | Parts by mass | | | | 100 | | | |
| | | PA9T3-2 (C9DA/MC8DA = 80/20) | Parts by mass | | | | | 100 | 100 | |
| | Copper compound/ Metal halide | CuI/KI | Parts by mass | 0.8 | 0.8 | 0.8 | 0.8 | 0.8 | 0.8 | |
| | Other additives | Glass fiber | Parts by mass | | | | | | 54 | |
| | | Lubricating agent | Parts by mass | 0.2 | 0.2 | 0.2 | 0.2 | 0.2 | 0.3 | 0.2 |
| | | Crystal nucleating agent | Parts by mass | 0.1 | 0.1 | 0.1 | 0.1 | 0.1 | 0.1 | 0.1 |
| | | Colorant | Parts by mass | | | | | | 0.2 | |
| Evaluation of physical properties of polyamide | | Melting point | °C | 317 | 314 | 294 | 283 | 300 | 300 | 317 |
| | | Glass transition temperature | °C | 140 | 140 | 136 | 123 | 120 | 120 | 140 |
| | | Inherent viscosity | dL/g | 0.90 | 0.91 | 0.83 | 1.00 | 1.21 | 1.21 | 0.90 |

(continued)

| | | Unit | Example | | Comparative Example | | | | |
|---|---|---|---|---|---|---|---|---|---|
| | | | 14 | 15 | 17 | 18 | 19 | 20 | 21 |
| Evaluation of physical properties of polyamide composition | Tensile breaking strength | MPa | 93 | 112 | 71 | 87 | 81 | 210 | 93 |
| | Heat distortion temperature | °C | 153 | 148 | 139 | 125 | 127 | 269 | 153 |
| | Coefficient of water absorption (at 23°C for 168 hours) | % | 0.25 | 0.27 | 0.33 | 0.37 | 0.38 | 0.24 | 0.25 |
| | Chemical resistance (retention of tensile strength) (at 130°C for 500 hours) | % | 99 | 82 | 45 | 41 | 78 | 80 | 99 |
| | Heat aging resistance (at 170°C for 250 hours) | % | 95 | 91 | 98 | 98 | 90 | 95 | 15 |

It is noted from Table 6 that the polyamide compositions of Examples 14 and 15 are high in the retention of tensile strength after immersion in antifreeze and are further improved in the chemical resistance, as compared with those of Comparative Examples 17 to 20. Furthermore, the polyamide compositions of Examples 14 and 15 are excellent in the heat aging resistance, as compared with that of Comparative Example 21, and therefore, it is noted that the polyamide compositions of Examples 14 and 15 have excellent high-temperature heat resistance.

In addition, the polyamide compositions of Examples 14 and 15 are equal to or more excellent than those of Comparative Examples 17 to 21 in terms of evaluation regarding the tensile breaking strength, the heat distortion temperature, and the coefficient of water absorption, and therefore, it is noted that the polyamide composition of the third embodiment is also excellent in the mechanical characteristics, the heat resistance, and the low water-absorbing properties.

As described in PTL 1, it is known that when an aliphatic diamine having a side chain is used, the crystallinity of the resulting polyamide is lowered, and such is not preferred from the standpoint of heat resistance, chemical resistance, etc. In contrast, in view of the fact that the polyamide composition of the third embodiment has a polyamide (A) having a specified constitution having a dicarboxylic acid unit composed mainly of a naphthalenedicarboxylic acid unit and a diamine unit composed mainly of a branched aliphatic diamine unit, the chemical resistance is more improved, and in addition thereto, the polyamide composition of the third embodiment is more excellent in the mechanical characteristics, the heat resistance including high-temperature heat resistance, and the various physical properties including low water-absorbing properties.

[Polyamide Composition of Fourth Embodiment]

Next, the polyamide composition of the fourth embodiment is described more specifically by reference to Example and Comparative Examples, but it should be construed that the polyamide composition is not limited thereto.

Respective evaluations in the Production Examples, Example, and Comparative Examples were performed according to the methods described below.

· Inherent viscosity

The inherent viscosity of each of polyamides (samples) obtained in Production Examples 4-1 to 4-2 was determined in the same calculation method as mentioned above.

· Melting point and glass transition temperature

The melting point and the glass transition temperature of each of polyamides obtained in Production Examples 4-1 to 4-2 were determined in the same measurement methods as mentioned above.

· Flame retardance

The flame retardance was evaluated in conformity with the prescriptions of the UL-94 standards.

Using an injection molding machine, manufactured by Nissei Plastic Industrial Co., Ltd. (clamping force: 80 tons, screw diameter: ϕ26 mm), with respect to each of the polyamide compositions obtained in Example 16 and Comparative Examples 22 to 24, a cylinder temperature of 20 to 30°C higher than the melting point of the polyamide was set, and the polyamide composition was molded using a T-runner mold under a condition of a mold temperature of 160°C for the polyamide compositions of Example 16 and Comparative Example 22 and under a condition of a mold temperature of 140°C for the polyamide compositions of Comparative Examples 23 and 24, respectively, thereby preparing a test specimen having a thickness of 0.75 mm, a width of 13 mm, and a length of 125 mm.

Subsequently, an upper end of the obtained test specimen was clamped by a clamp to vertically fix the test specimen, and a blue predetermined flame having a height of 20 ± 1 mm was applied to a lower end of the test specimen for 10 seconds and then kept away, thereby measuring a burning time (first time) of the test specimen. Immediately after fire extinguishing, the flame was again applied to the lower end of the test specimen and then kept away, thereby measuring a burning time (second time) of the test specimen. With respect to 5 specimens, the same measurement was repeated to obtain 10 data in total of 5 data of the first burning time and 5 data of the second burning time. The evaluation was performed according to the following evaluation criteria while defining the total of 10 data as T and a maximum value of the 10 data as M, respectively.

In addition, the presence or absence of a drip in flame-contact was confirmed through visual inspection.

[Evaluation Criteria]

V-0: T was 50 seconds or less, and M was 10 seconds or less; the specimen did not burn up to the clamp; and even when the flamed molten material fell, a cotton located 12 inches below the specimen was not ignited.

V-1: T was 250 seconds or less, and M was 30 seconds or less; the specimen did not burn up to the clamp; and even when the flamed molten material fell, a cotton located 12 inches below the specimen was not ignited.

V-2: T was 250 seconds or less, and M was 30 seconds or less; the specimen did not burn up to the clamp; and the flamed molten material fell, and a cotton located 12 inches below the specimen was ignited.

×: Case where all of the evaluation criteria of UL94 were not satisfied.

· Blister resistance

Using an injection molding machine, manufactured by Sumitomo Heavy Industries, Ltd. (clamping force: 18 tons, screw diameter: ϕ18 mm), with respect to each of the polyamide compositions obtained in Example 16 and Comparative Examples 22 to 24, a cylinder temperature of 20 to 30°C higher than the melting point of the polyamide was set, and the polyamide composition was molded (injection-molded) using a T-runner mold under a condition of a mold temperature of 160°C for the polyamide compositions of Example 16 and Comparative Example 22 and under a condition of a mold temperature of 140°C for the polyamide compositions of Comparative Examples 23 and 24, respectively, thereby preparing a test specimen (sheet) having a length of 30 mm, a width of 10 mm, and a length of 1 mm.

The obtained test specimen was allowed to stand under a condition at 85°C and a relative humidity of 85% for 168 hours. Thereafter, the test specimen was subjected to a reflow test by using an infrared heating furnace (SMT Scope, manufactured by SANYOSEIKO Co., Ltd.). In the reflow test, the temperature was raised from 25°C to 150°C over 60 seconds, then raised to 180°C over 90 seconds, and further raised to a peak temperature over 60 seconds, followed by keeping at the peak temperature for 20 seconds. The reflow test was performed by changing the peak temperature from 250°C to 270°C at intervals of 10°C. After completion of the reflow test, the appearance of the test specimen was observed through visual inspection. A critical temperature at which not only the test specimen is not melted, but also any blister is not generated is defined as a blister-resistant temperature. An index for the blister resistance is provided in such that the case where the blister-resistant temperature is higher than 260°C is designated as "A"; the case where the blister-resistant temperature is 250°C or higher and 260°C or lower is designated as "B"; and the case where the blister-resistant temperature is lower than 250°C is designated as "C". The case where the index "A" or "B" is provided is at a level where no problem is present on the practical use.

«Preparation 5 of Test specimen»

Using an injection molding machine, manufactured by Sumitomo Heavy Industries, Ltd. (clamping force: 100 tons, screw diameter: ϕ32 mm), with respect to each of the polyamide compositions obtained in Example 16 and Comparative Examples 22 to 24, a cylinder temperature of 20 to 30°C higher than the melting point of the polyamide was set, and the polyamide composition was molded using a T-runner mold under a condition of a mold temperature of 160°C for the polyamide compositions of Example 16 and Comparative Example 22 and under a condition of a mold temperature of 140°C for the polyamide compositions of Comparative Examples 23 and 24, respectively, thereby preparing a multipurpose test specimen Type A1 (dumbbell type test specimen described in JIS K7139: 4 mm in thickness, 170 mm in total length, 80 mm in parallel length, 10 mm in parallel width).

· Tensile breaking strength

Using the multi-purpose test specimen Type A1 (4 mm in thickness) prepared in the method of Preparation 5 of Test Specimen as mentioned above, the tensile breaking strength was determined in the same measurement method as mentioned above.

· Heat distortion temperature

Using the multi-purpose test specimen Type A1 (4 mm in thickness) prepared in the method of Preparation 5 of Test Specimen as mentioned above, the heat distortion temperature was determined in the same measurement method as mentioned above.

· Coefficient of water absorption

Using the multi-purpose test specimen Type A1 (4 mm in thickness) prepared in the method of Preparation 5 of Test Specimen as mentioned above, the coefficient of water absorption was determined in the same measurement method as mentioned above.

The respective components used for preparing the polyamide compositions in the Examples and Comparative Examples are shown.

«Polyamide»

[Production Example 4-1]

· Production of semi-aromatic polyamide (PA9N4-1)

An autoclave having an internal volume of 40 liters was charged with 9,110.2 g (42.14 mols) of 2,6-naphthalenedicarboxylic acid, 6,853.7 g (43.30 mols) of a mixture of 1,9-nonanediamine and 2-methyl-1,8-octanediamine [former/latter = 4/96 (molar ratio)], 210.0 g (1.72 mols) of benzoic acid, 16.2 g (0.1% by mass relative to the total mass of the raw materials) of sodium hypophosphite monohydrate, and 8.3 liters of distilled water and then purged with nitrogen. The contents were agitated at 100°C for 30 minutes, and the temperature of the interior of the autoclave was subjected to temperature rise to 220°C over 2 hours. At this time, the pressure in the interior of autoclave increased to 2 MPa. Heating was continued for 5 hours at it was while keeping the pressure at 2 MPa, and the water vapor was gradually taken out to perform a reaction. Subsequently, the pressure was decreased to 1.3 MPa over 30 minutes, and the reaction was further performed for one hour, thereby obtaining a prepolymer. The obtained prepolymer was dried at 100°C under reduced pressure for 12 hours and pulverized to a particle diameter of 2 mm or less. This was subjected to solid-phase polymerization at 230°C and 13 Pa (0.1 mmHg) for 10 hours, thereby obtaining a polyamide. This polyamide is abbreviated as "PA9N4-1".

[Production Example 4-2]

· Production of semi-aromatic polyamide (PA9T4-1)

An autoclave having an internal volume of 40 liters was charged with 8,190.7 g (49.30 mols) of terephthalic acid, 7,969.4 g (50.35 mols) of a mixture of 1,9-nonanediamine and 2-methyl-1,8-octanediamine [former/latter = 85/15 (molar ratio)], 171.0 g (1.40 mols) of benzoic acid, 16.3 g (0.1% by mass relative to the total mass of the raw materials) of sodium hypophosphite monohydrate, and 5.5 liters of distilled water, and then, the same procedures as in Production

Example 4-1 were followed, to obtain a polyamide. This polyamide is abbreviated as "PA9T4-1".

«Halogen-based Flame Retardant»

Glycidyl methacrylate-modified brominated polystyrene (FIREMASTER CP-44HF, manufactured by Chemtura Corporation, bromine content: 64%)

«Filler»

Glass fiber ("CS-3G 225S", manufactured by Nitto Boseki co., Ltd.) (average fiber diameter: 9.5 μm, average fiber length: 3 mm, cross-sectional shape: circle)

«Flame Retardant Promoter»

Tin zinc trioxide ("FLAMTARD S", manufactured by William Blythe Limited) (average particle diameter: 1.4 to 2.2 μm)

«Other Additives»

· Heat stabilizer

Phenol-based heat stabilizer ("SUMILIZER GA-80", manufactured by Sumitomo Chemical Co., Ltd.)

· Lubricating agent

Low-molecular weight polyolefin lubricating agent ("Hi WAX 200P", manufactured by Mitsui Chemicals, Inc.)

· Crystal nucleating agent

"TALC #5000S", manufactured by Fuji Talc Industrial Co., Ltd.

· Drip-preventing agent

Fluorine resin powder ("TEFLON (registered trademark) 640J", manufactured by Chemours-Mitsui Fluoroproducts Co., Ltd.)

[Example 16 and Comparative Examples 22 to 24]

The respective components other than the filler were previously mixed in a proportion shown in Table 7 and fed from an upstream hopper of a twin-screw extruder ("BTN-32", manufactured by Research Laboratory of Plastics Technology Co., Ltd.), and the filler was fed in a proportion shown in Table 7 from a side feed port on a downstream side of the extruder. The mixture was melt-kneaded and extruded at a cylinder temperature of 20 to 30°C higher than the melting point of the polyamide, followed by cooling and cutting. There was thus produced a polyamide composition in a pellet form.

Using the polyamide compositions obtained in the aforementioned Example 16 and Comparative Examples 22 to 24, the aforementioned respective physical properties evaluations were performed. The results are shown in Table 1.

In Table 7, C9DA expresses the 1,9-nonanediamine unit, and MC8DA expresses the 2-methyl-1,8-octanediamine unit.

Table 7

| | | | Unit | Example | Comparative Example | | |
|---|---|---|---|---|---|---|---|
| | | | | 16 | 22 | 23 | 24 |
| Polyamide composition | Polyamide | PA9N4-1 (C9DA/MC8DA = 4/96) | Parts by mass | 100 | 100 | - | - |
| | | PA9T4-1 (C9DA/MC8DA = 85/15) | Parts by mass | - | - | 100 | 100 |
| | Halogen-based flame retardant | Glycidyl methacrylate-modified brominated polystyrene | Parts by mass | 49 | - | 49 | - |
| | Filler | Glass fiber | Parts by mass | 78 | - | 78 | - |
| | Flame retardant promoter | Tin zinc trioxide | Parts by mass | 7 | - | 7 | - |
| | Other components | Heat stabilizer | Parts by mass | 0.5 | 0.2 | 0.5 | 0.2 |
| | | Lubricating agent | Parts by mass | 0.7 | 0.2 | 0.7 | 0.2 |
| | | Crystal nucleating agent | Parts by mass | 0.2 | 0.1 | 0.2 | 0.1 |
| | | Drip-preventing agent | Parts by mass | 1.2 | - | 1.2 | - |
| Evaluation of physical properties of polyamide | | Melting point | °C | 317 | 317 | 306 | 306 |
| | | Glass transition temperature | °C | 140 | 140 | 120 | 120 |
| | | Inherent viscosity | dL/g | 0.90 | 0.90 | 0.80 | 0.80 |
| Evaluation of physical properties of polyamide composition | | Tensile breaking strength | MPa | 192 | 93 | 183 | 85 |
| | | Heat distortion temperature | °C | 284 | 153 | 280 | 125 |
| | | Coefficient of water absorption (at 23°C for 168 hours) | % | 0.13 | 0.25 | 0.17 | 0.38 |
| | | Flame retardance | - | V-0 | × | V-2 | × |
| | | Blister resistance | - | B | A | B | A |

It is noted from Table 7 that the polyamide composition of Example 16 is excellent in the flame retardance and is provided with the blister resistance suitable for practical use, as compared with those of Comparative Examples 22 to 24.

The polyamide composition of Example 16 is equal to or more excellent than those of Comparative Examples 22 to 24 in terms of evaluation regarding the tensile breaking strength, the heat distortion temperature, and the coefficient of water absorption, and therefore, it is noted that the polyamide composition of the fourth embodiment is also excellent in the mechanical characteristics, the heat resistance, and the low water-absorbing properties.

As described in PTL 1, it is known that when an aliphatic diamine having a side chain is used, the crystallinity of the resulting polyamide is lowered, and such is not preferred from the standpoint of heat resistance, chemical resistance,

etc. In contrast, in view of the fact that the polyamide composition of the fourth embodiment has a polyamide (A) having a specified constitution having a dicarboxylic acid unit composed mainly of a naphthalenedicarboxylic acid unit and a diamine unit composed mainly of a branched aliphatic diamine unit, the chemical resistance is more improved, and in addition thereto, the polyamide composition of the fourth embodiment is more excellent in the various physical properties including mechanical characteristics, heat resistance, and low water-absorbing properties.

[Polyamide Composition of Fifth Embodiment]

Next, the polyamide composition of the fifth embodiment is described more specifically by reference to Example and Comparative Examples, but it should be construed that the polyamide composition is not limited thereto.
Respective evaluations in the Production Examples, Example, and Comparative Examples were performed according to the methods described below.

• Inherent viscosity

The inherent viscosity of each of polyamides (samples) obtained in Production Examples 5-1 to 5-2 was determined in the same calculation method as mentioned above.

• Melting point and glass transition temperature

The melting point and the glass transition temperature of each of polyamides obtained in Production Examples 5-1 to 5-2 were determined in the same measurement methods as mentioned above.

• Flame retardance

The flame retardance was evaluated in conformity with the prescriptions of the UL-94 standards.
Using an injection molding machine, manufactured by Nissei Plastic Industrial Co., Ltd. (clamping force: 80 tons, screw diameter: ϕ26 mm), with respect to each of the polyamide compositions obtained in Example 17 and Comparative Examples 25 to 27, a cylinder temperature of 20 to 30°C higher than the melting point of the polyamide was set, and the polyamide composition was molded using a T-runner mold under a condition of a mold temperature of 160°C for the polyamide compositions of Example 17 and Comparative Example 25 and under a condition of a mold temperature of 140°C for the polyamide compositions of Comparative Examples 26 and 27, respectively, thereby preparing a test specimen having a thickness of 0.4 mm, a width of 13 mm, and a length of 125 mm.
Subsequently, an upper end of the obtained test specimen was clamped by a clamp to vertically fix the test specimen, and a blue predetermined flame having a height of 20 ± 1 mm was applied to a lower end of the test specimen for 10 seconds and then kept away, thereby measuring a burning time (first time) of the test specimen. Immediately after fire extinguishing, the flame was again applied to the lower end of the test specimen and then kept away, thereby measuring a burning time (second time) of the test specimen. With respect to 5 specimens, the same measurement was repeated to obtain 10 data in total of 5 data of the first burning time and 5 data of the second burning time. The evaluation was performed according to the following evaluation criteria while defining the total of 10 data as T and a maximum value of the 10 data as M, respectively.
In addition, the presence or absence of a drip in flame-contact was confirmed through visual inspection.

[Evaluation Criteria]

V-0: T was 50 seconds or less, and M was 10 seconds or less; the specimen did not burn up to the clamp; and even when the flamed molten material fell, a cotton located 12 inches below the specimen was not ignited.
V-1: T was 250 seconds or less, and M was 30 seconds or less; the specimen did not burn up to the clamp; and even when the flamed molten material fell, a cotton located 12 inches below the specimen was not ignited.
V-2: T was 250 seconds or less, and M was 30 seconds or less; the specimen did not burn up to the clamp; and the flamed molten material fell, and a cotton located 12 inches below the specimen was ignited.
×: Case where all of the evaluation criteria of UL94 were not satisfied.

• Blister resistance

Using an injection molding machine, manufactured by Sumitomo Heavy Industries, Ltd. (clamping force: 18

tons, screw diameter: ϕ18 mm), with respect to each of the polyamide compositions obtained in Example 17 and Comparative Examples 25 to 27, a cylinder temperature of 20 to 30°C higher than the melting point of the polyamide was set, and the polyamide composition was molded (injection-molded) using a T-runner mold under a condition of a mold temperature of 160°C for the polyamide compositions of Example 17 and Comparative Example 25 and under a condition of a mold temperature of 140°C for the polyamide compositions of Comparative Examples 26 and 27, respectively, thereby preparing a test specimen (sheet) having a length of 30 mm, a width of 10 mm, and a length of 1 mm.

The obtained test specimen was allowed to stand under a condition at 85°C and a relative humidity of 85% for 168 hours. Thereafter, the test specimen was subjected to a reflow test by using an infrared heating furnace (SMT Scope, manufactured by SANYOSEIKO Co., Ltd.). In the reflow test, the temperature was raised from 25°C to 150°C over 60 seconds, then raised to 180°C over 90 seconds, and further raised to a peak temperature over 60 seconds, followed by keeping at the peak temperature for 20 seconds. The reflow test was performed by changing the peak temperature from 250°C to 270°C at intervals of 10°C. After completion of the reflow test, the appearance of the test specimen was observed through visual inspection. A critical temperature at which not only the test specimen is not melted, but also any blister is not generated is defined as a blister-resistant temperature. An index for the blister resistance is provided in such that the case where the blister-resistant temperature is higher than 260°C is designated as "A"; the case where the blister-resistant temperature is 250°C or higher and 260°C or lower is designated as "B"; and the case where the blister-resistant temperature is lower than 250°C is designated as "C". The case where the index "A" or "B" is provided is at a level where no problem is present on the practical use.

«Preparation 6 of Test specimen»

Using an injection molding machine, manufactured by Sumitomo Heavy Industries, Ltd. (clamping force: 100 tons, screw diameter: ϕ32 mm), with respect to each of the polyamide compositions obtained in Example 17 and Comparative Examples 25 to 27, a cylinder temperature of 20 to 30°C higher than the melting point of the polyamide was set, and the polyamide composition was molded using a T-runner mold under a condition of a mold temperature of 160°C for the polyamide compositions of Example 17 and Comparative Example 25 and under a condition of a mold temperature of 140°C for the polyamide compositions of Comparative Examples 26 and 27, respectively, thereby preparing a multipurpose test specimen Type A1 (dumbbell type test specimen described in JIS K7139: 4 mm in thickness, 170 mm in total length, 80 mm in parallel length, 10 mm in parallel width).

• Tensile breaking strength

Using the multi-purpose test specimen Type A1 (4 mm in thickness) prepared in the method of Preparation 6 of Test Specimen as mentioned above, the tensile breaking strength was determined in the same measurement method as mentioned above.

• Heat distortion temperature

Using the multi-purpose test specimen Type A1 (4 mm in thickness) prepared in the method of Preparation 6 of Test Specimen as mentioned above, the heat distortion temperature was determined in the same measurement method as mentioned above.

• Coefficient of water absorption

Using the multi-purpose test specimen Type A1 (4 mm in thickness) prepared in the method of Preparation 6 of Test Specimen as mentioned above, the coefficient of water absorption was determined in the same measurement method as mentioned above.

The respective components used for preparing the polyamide compositions in the Examples and Comparative Examples are shown.

«Polyamide»

[Production Example 5-1]

• Production of semi-aromatic polyamide (PA9N5-1)

An autoclave having an internal volume of 40 liters was charged with 9,110.2 g (42.14 mols) of 2,6-naphthalenedicarboxylic acid, 6,853.7 g (43.30 mols) of a mixture of 1,9-nonanediamine and 2-methyl-1,8-octanediamine

[former/latter = 4/96 (molar ratio)], 210.0 g (1.72 mols) of benzoic acid, 16.2 g (0.1% by mass relative to the total mass of the raw materials) of sodium hypophosphite monohydrate, and 8.3 liters of distilled water and then purged with nitrogen. The contents were agitated at 100°C for 30 minutes, and the temperature of the interior of the autoclave was subjected to temperature rise to 220°C over 2 hours. At this time, the pressure in the interior of autoclave increased to 2 MPa. Heating was continued for 5 hours at it was while keeping the pressure at 2 MPa, and the water vapor was gradually taken out to perform a reaction. Subsequently, the pressure was decreased to 1.3 MPa over 30 minutes, and the reaction was further performed for one hour, thereby obtaining a prepolymer. The obtained prepolymer was dried at 100°C under reduced pressure for 12 hours and pulverized to a particle diameter of 2 mm or less. This was subjected to solid-phase polymerization at 230°C and 13 Pa (0.1 mmHg) for 10 hours, thereby obtaining a polyamide. This polyamide is abbreviated as "PA9N5-1".

[Production Example 5-2]

• Production of semi-aromatic polyamide (PA9T5-1)

An autoclave having an internal volume of 40 liters was charged with 8,190.7 g (49.30 mols) of terephthalic acid, 7,969.4 g (50.35 mols) of a mixture of 1,9-nonanediamine and 2-methyl-1,8-octanediamine [former/latter = 85/15 (molar ratio)], 171.0 g (1.40 mols) of benzoic acid, 16.3 g (0.1% by mass relative to the total mass of the raw materials) of sodium hypophosphite monohydrate, and 5.5 liters of distilled water, and then, the same procedures as in Production Example 5-1 were followed, to obtain a polyamide. This polyamide is abbreviated as "PA9T5-1".

«Halogen-free Flame Retardant»

Halogen-free phosphinic acid metal salt-based flame retardant ("EXOLIT OP1230", manufactured by Clariant Chemicals Ltd.)

«Filler»

• Glass fiber (1)

Glass fiber ("CS-3J256S", manufactured by Nitto Boseki co., Ltd.) (average fiber diameter: 11 μm, average fiber length: 3 mm, cross-sectional shape: circle)

• Glass fiber (2)

Glass fiber ("CSH3PA870S", manufactured by Nitto Boseki co., Ltd.) (3-mm chopped strand, cross-sectional shape: cocoon)

«Other Additives»

• Heat stabilizer (1)

Phosphorus-based heat stabilizer ("IRGAFOS 168", manufactured by BASF SE)

• Heat stabilizer (2)

Hindered phenol-based heat stabilizer ("IRGANOX 1098", manufactured by BASF SE)

• Heat stabilizer (3)

Phenol-based heat stabilizer ("SUMILIZER GA-80", manufactured by Sumitomo Chemical Co., Ltd.)

• Lubricating agent

Low-molecular weight polyolefin lubricating agent ("Hi WAX 200P", manufactured by Mitsui Chemicals, Inc.)

• Crystal nucleating agent

"TALC #5000S", manufactured by Fuji Talc Industrial Co., Ltd.

[Example 17 and Comparative Examples 25 to 27]

The respective components other than the filler were previously mixed in a proportion shown in Table 8 and fed from an upstream hopper of a twin-screw extruder ("BTN-32", manufactured by Research Laboratory of Plastics Technology Co., Ltd.), and the filler was fed in a proportion shown in Table 8 from a side feed port on a downstream side of the extruder. The mixture was melt-kneaded and extruded at a cylinder temperature of 20 to 30°C higher than the melting point of the polyamide, followed by cooling and cutting. There was thus produced a polyamide composition in a pellet form.

Using the polyamide compositions obtained in the aforementioned Example 17 and Comparative Examples 25 to 27, the aforementioned respective physical properties evaluations were performed. The results are shown in Table 8.

In Table 8, C9DA expresses the 1,9-nonanediamine unit, and MC8DA expresses the 2-methyl-1,8-octanediamine unit.

Table 8

| | | | Unit | Example | Comparative Example | | |
|---|---|---|---|---|---|---|---|
| | | | | 17 | 25 | 26 | 27 |
| Polyamide composition | Polyamide | PA9N5-1 (C9DA/MC8DA = 4/96) | Parts by mass | 100 | 100 | - | - |
| | | PA9T5-1 (C9DA/MC8DA= 85/15) | Parts by mass | - | - | 100 | 100 |
| | Halogen -free flame retardant | Phosphinic acid metal salt-based flame retardant | Parts by mass | 28 | - | 28 | - |
| | Filler | Glass fiber (1) | Parts by mass | 22 | - | 22 | - |
| | | Glass fiber (2) | Parts by mass Parts by mass | 33 | - - | 33 | - - |
| | Other components | Heat stabilizer (1) | Parts by mass | 0.2 | - | 0.2 | - |
| | | Heat stabilizer (2) | Parts by mass | 0.2 | - | 0.2 | - |
| | | Heat stabilizer (3) | Parts by mass | - | 0.2 | - | 0.2 |
| | | Lubricating agent | Parts by mass | 0.6 | 0.2 | 0.6 | 0.2 |
| | | Crystal nucleating agent Crystal nucleating agent | Parts by mass | 0.1 | 0.1 | 0.1 | 0.1 |
| Evaluation of physical properties of polyamide | | Melting point | °C | 317 | 317 | 306 | 306 |
| | | Glass transition temperature | °C | 140 | 140 | 120 | 120 |
| | | Inherent viscosity | dL/g | 0.90 | 0.90 | 0.80 | 0.80 |

(continued)

| | | Unit | Example | Comparative Example | | |
|---|---|---|---|---|---|---|
| | | | 17 | 25 | 26 | 27 |
| Evaluation of physical properties of polyamide composition | Tensile breaking strength | MPa | 155 | 93 | 148 | 85 |
| | Heat distortion temperature | °C | 284 | 153 | 269 | 125 |
| | Coefficient of water absorption (at 23°C for 168 hours) | % | 0.14 | 0.25 | 0.20 | 0.38 |
| | Flame retardance | - | V-0 | × | V-1 | × |
| | Blister resistance | - | A | A | B | A |

It is noted from Table 8 that the polyamide composition of Example 17 is excellent in the flame retardance and small in the deformation amount relative to the burning test, as compared with those of Comparative Examples 25 to 27, and its blister resistance is equivalent to or more excellent than that of Comparative Examples 25 to 27. In addition, the flame retarder itself is halogen-free, and therefore, the flame retardance of the polyamide composition can be improved while minimizing the environmental load.

The polyamide composition of Example 17 is equal to or more excellent than those of Comparative Examples 25 to 27 in terms of evaluation regarding the tensile breaking strength, the heat distortion temperature, and the coefficient of water absorption, and therefore, it is noted that the polyamide composition of the fifth embodiment is also excellent in the mechanical characteristics, the heat resistance, and the low water-absorbing properties.

As described in PTL 1, it is known that when an aliphatic diamine having a side chain is used, the crystallinity of the resulting polyamide is lowered, and such is not preferred from the standpoint of heat resistance, chemical resistance, etc. In contrast, in view of the fact that the polyamide composition of the fifth embodiment has a polyamide (A) having a specified constitution having a dicarboxylic acid unit composed mainly of a naphthalenedicarboxylic acid unit and a diamine unit composed mainly of a branched aliphatic diamine unit, the chemical resistance is more improved, and in addition thereto, the polyamide composition of the fifth embodiment is more excellent in the various physical properties including mechanical characteristics, heat resistance, and low water-absorbing properties.

**Claims**

1. A polyamide that is a polyamide (A) having a dicarboxylic acid unit and a diamine unit, wherein
more than 40 mol% and 100 mol% or less of the dicarboxylic acid unit is a naphthalenedicarboxylic acid unit; and 60 mol% or more and 100 mol% or less of the diamine unit is a branched aliphatic diamine unit and a linear aliphatic diamine unit of an arbitrary structural unit, and a proportion of the branched aliphatic diamine unit relative to the total 100 mol% of the branched aliphatic diamine unit and the linear aliphatic diamine unit is 60 mol% or more.

2. The polyamide according to claim 1, wherein the proportion of the branched aliphatic diamine unit relative to the total 100 mol% of the branched aliphatic diamine unit and the linear aliphatic diamine unit is 60 mol% or more and 99 mol% or less.

3. The polyamide according to claim 1, wherein the proportion of the branched aliphatic diamine unit relative to the total 100 mol% of the branched aliphatic diamine unit and the linear aliphatic diamine unit is 80 mol% or more and 99 mol% or less.

4. The polyamide according to any one of claims 1 to 3, wherein the carbon number of the branched aliphatic diamine unit is 4 or more and 18 or less.

5. The polyamide according to any one of claims 1 to 4, wherein the branched aliphatic diamine unit is a structural unit derived from a diamine having at least one selected from the group consisting of a methyl group and an ethyl group as the branched chain.

6. The polyamide according to any one of claims 1 to 5, wherein when the carbon atom to which arbitrary one of the amino groups is bound is designated as the 1-position, the branched aliphatic diamine unit is a structural unit derived

from a diamine having at least one of the branched chains on at least one of the carbon atom at the 2-position and the carbon atom at the 3-position.

7. The polyamide according to any one of claims 1 to 3, wherein the branched aliphatic diamine unit is a structural unit derived from at least one diamine selected from the group consisting of 2-methyl-1,5-pentanediamine, 3-methyl-1,5-pentanediamine, 2-methyl-1,8-octanediamine, and 2-methyl-1,9-nonanediamine.

8. The polyamide according to any one of claims 1 to 7, wherein the carbon number of the linear aliphatic diamine unit is 4 or more and 18 or less.

9. The polyamide according to any one of claims 1 to 7, wherein the linear aliphatic diamine unit is a structural unit derived from at least one diamine selected from the group consisting of 1,4-butanediamine, 1,5-pentanediamine, 1,6-hexanediamine, 1,7-heptanediamine, 1,8-octanediamine, 1,9-nonanediamine, 1,10-decanediamine, 1,11-undecanediamine, and 1,12-dodecanediamine.

10. A polyamide composition comprising the polyamide (A) according to any one of claims 1 to 9.

11. The polyamide composition according to claim 10, further comprising a polyolefin (B1).

12. The polyamide composition according to claim 11, wherein the content of the polyolefin (B1) is 1 part by mass or more and 100 parts by mass or less based on 100 parts by mass of the polyamide (A).

13. The polyamide composition according to claim 11 or 12, wherein the polyolefin (B1) is at least one selected from the group consisting of the following (b1-1) to (b1-5):

(b1-1) an $\alpha$-olefin copolymer;
(b1-2) a copolymer of at least one selected from the group consisting of ethylene, propylene, and an $\alpha$-olefin having 4 or more carbon atoms and at least one selected from the group consisting of an $\alpha,\beta$-unsaturated carboxylic acid, an $\alpha,\beta$-unsaturated carboxylic acid ester, and an a, $\beta$-unsaturated carboxylic acid anhydride;
(b1-3) an ionomer of the above (b1-2);
(b1-4) a copolymer of an aromatic vinyl compound and a conjugated diene compound; and
(b1-5) a polymer resulting from modification of at least one selected from the group consisting of the above (b1-1) to (b1-4) with an unsaturated compound having at least one selected from the group consisting of a carboxy group and an acid anhydride group.

14. The polyamide composition according to claim 10, further comprising an organic heat stabilizer (B2).

15. The polyamide composition according to claim 14, wherein the content of the organic heat stabilizer (B2) is 0.05 parts by mass or more and 5 parts by mass or less based on 100 parts by mass of the polyamide (A).

16. The polyamide composition according to claim 14 or 15, wherein the organic heat stabilizer (B2) is at least one selected from the group consisting of a phenol-based heat stabilizer (B2-1), a phosphorus-based heat stabilizer (B2-2), a sulfur-based heat stabilizer (B2-3), and an amine-based heat stabilizer (B2-4).

17. The polyamide composition according to claim 10, further comprising a copper compound (B3) and a metal halide (B4).

18. The polyamide composition according to claim 17, wherein the content of the copper compound (B3) is 0.01 parts by mass or more and 1 part by mass or less based on 100 parts by mass of the polyamide (A).

19. The polyamide composition according to claim 17 or 18, wherein the copper compound (B3) is at least one selected from the group consisting of copper iodide, copper bromide, and copper acetate.

20. The polyamide composition according to any one of claims 17 to 19, wherein the content of the metal halide (B4) is 0.05 parts by mass or more and 20 parts by mass or less based on 100 parts by mass of the polyamide (A).

21. The polyamide composition according to any one of claims 17 to 20, wherein the metal halide (B4) is at least one selected from the group consisting of potassium iodide and potassium bromide.

**22.** The polyamide composition according to claim 10, further comprising a halogen-based flame retardant (B5).

**23.** The polyamide composition according to claim 22, wherein the content of the halogen-based flame retardant (B5) is 5 parts by mass or more and 100 parts by mass or less based on 100 parts by mass of the polyamide (A).

**24.** The polyamide composition according to claim 22 or 23, wherein the halogen-based flame retardant (B5) is a bromine-based flame retardant (B5-1).

**25.** The polyamide composition according to claim 24, wherein the bromine-based flame retardant (B5-1) is brominated polystyrene.

**26.** The polyamide composition according to any one of claims 22 to 25, further comprising a filler (C).

**27.** The polyamide composition according to claim 26, wherein the content of the filler (C) is 0.1 parts by mass or more and 200 parts by mass or less based on 100 parts by mass of the polyamide (A).

**28.** The polyamide composition according to any one of claims 22 to 27, further comprising a flame retardant promoter (D).

**29.** The polyamide composition according to claim 28, wherein the content of the flame retardant promoter (D) is 1 part by mass or more and 30 parts by mass or less based on 100 parts by mass of the polyamide (A).

**30.** The polyamide composition according to claim 28 or 29, wherein the flame retardant promoter (D) is at least one selected from the group consisting of diantimony trioxide, diantimony tetroxide, diantimony pentoxide, sodium antimonate, melamine orthophosphate, melamine pyrophosphate, melamine borate, melamine polyphosphate, aluminum oxide, aluminum hydroxide, zinc borate, and zinc stannate.

**31.** The polyamide composition according to claim 10, further comprising a halogen-free flame retardant (B6).

**32.** The polyamide composition according to claim 31, wherein the content of the halogen-free flame retardant (B6) is 5 parts by mass or more and 100 parts by mass or less based on 100 parts by mass of the polyamide (A).

**33.** The polyamide composition according to claim 31 or 32, wherein the halogen-free flame retardant (B6) is at least one selected from the group consisting of a monophosphinic acid salt represented by the following general formula (1) and a diphosphinic acid salt represented by the following general formula (2):

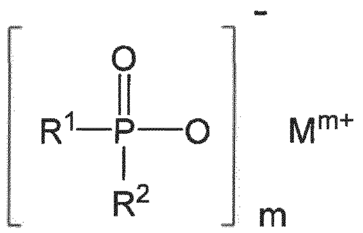

(1)

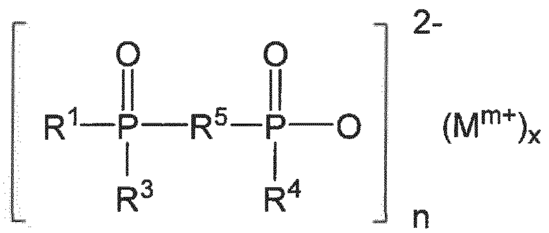

(2)

wherein,
$R^1$, $R^2$, $R^3$, and $R^4$ each independently represent an alkyl group having 1 to 6 carbon atoms, an aryl group having 6 to 12 carbon atoms, or an arylalkyl group having 7 to 20 carbon atoms; $R^5$ represents an alkylene group having 1 to 10 carbon atoms, an arylene group having 6 to 10 carbon atoms, an alkylarylene group having 7 to 20 carbon atoms, or an arylalkylene group having 7 to 20 carbon atoms; M represents calcium (ion), magnesium (ion), aluminum

(ion), or zinc (ion); m is 2 or 3; n is 1 or 3; and x is 1 or 2.

**34.** The polyamide composition according to any one of claims 31 to 33, further comprising a filler (C).

**35.** The polyamide composition according to claim 34, wherein the content of the filler (C) is 0.1 parts by mass or more and 200 parts by mass or less based on 100 parts by mass of the polyamide (A).

**36.** A molded article comprising the polyamide according to any one of claims 1 to 9.

**37.** A molded article comprising the polyamide composition according to any one of claims 10 to 35.

**38.** The molded article according to claim 36 or 37, which is a film.

**39.** The molded article according to claim 36 or 37, which is an electrical component or an electronic component.

**40.** The molded article according to claim 39, which is a surface mounting component.

[Fig. 1]

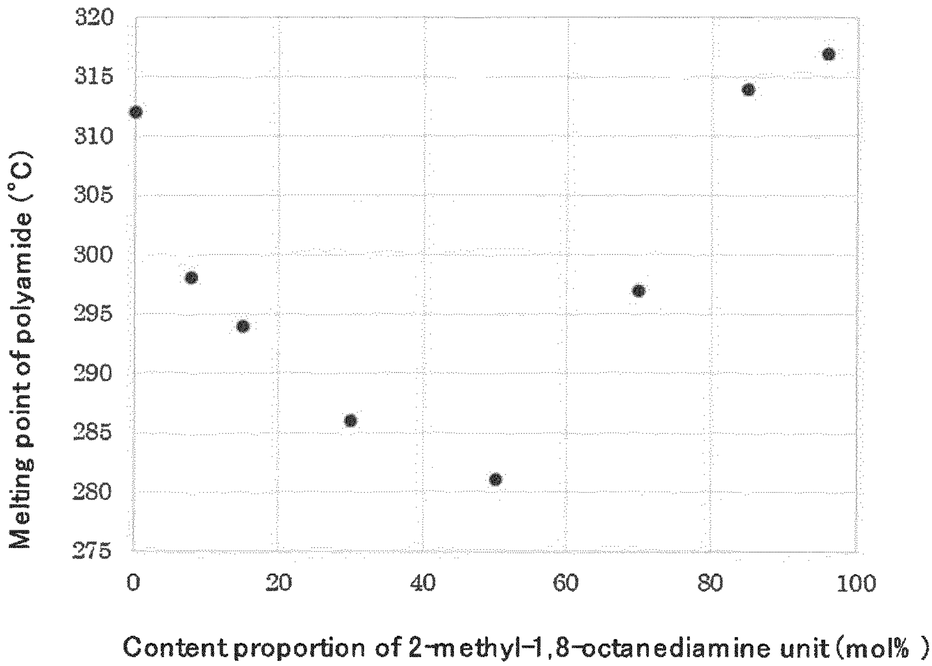
320
315
310
305
300
295
290
285
280
275
Melting point of polyamide (°C)
0
20
40
60
80
100
Content proportion of 2-methyl-1,8-octanediamine unit (mol% )

## INTERNATIONAL SEARCH REPORT

International application No.
PCT/JP2019/033003

A. CLASSIFICATION OF SUBJECT MATTER
Int.Cl. C08G69/26(2006.01)i

According to International Patent Classification (IPC) or to both national classification and IPC

B. FIELDS SEARCHED

Minimum documentation searched (classification system followed by classification symbols)
Int.Cl. C08G69/26

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2017-8211 A (TORAY INDUSTRIES, INC.) 12 January 2017 (Family: none) | 1-40 |
| A | JP 2011-68874 A (ASAHI KASEI CHEMICALS CORP.) 07 April 2011 (Family: none) | 1-40 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14 November 2019 (14.11.2019) | 26 November 2019 (26.11.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2019/033003

C (Continuation). DOCUMENTS CONSIDERED TO BE RELEVANT

| Category* | Citation of document, with indication, where appropriate, of the relevant passages | Relevant to claim No. |
|---|---|---|
| A | JP 9-12715 A (KURARAY CO., LTD.) 14 January 1997 (Family: none) | 1-40 |
| A | JP 50-67393 A (TEIJIN LTD.) 06 June 1975 & DE 2449664 A1 | 1-40 |
| A | WO 2012/098840 A1 (KURARAY CO., LTD.) 26 July 2012 & US 2013/0295308 A1 & EP 2666823 A1 | 1-40 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 50067393 A
- JP 9012715 A
- WO 2012098840 A
- WO 2005102681 A
- JP 7228771 A
- JP 2006152256 A
- JP 2014111761 A
- JP 7228690 A
- EP 699708 A
- JP 8073720 A